# EUROPEAN PATENT SPECIFICATION

(11) **EP 2 970 554 B1**
(45) Date of publication and mention of the grant of the patent: **20.09.2023**
(21) Application number: 14717359.5
(22) Date of filing: 14.03.2014
(51) Int. Cl.: C08G 18/44, C08G 18/66, C08G 18/75, C08G 18/10, C08G 18/12

(54) **POLYURETHANES, ARTICLES AND COATINGS PREPARED THEREFROM AND METHODS OF MAKING THE SAME**
POLYURETHANE, DARAUS HERGESTELLTE GEGENSTÄNDE UND BESCHICHTUNGEN SOWIE VERFAHREN ZU HERSTELLUNG DAVON
POLYURÉTHANES, ARTICLES ET REVÊTEMENTS PRÉPARÉS AVEC CEUX-CI ET PROCÉDÉS DE FABRICATION ASSOCIÉS

(30) Priority: 14.03.2013 US 201361783197 P
(43) Date of publication of application: 20.01.2016
(73) Proprietor: PPG Industries Ohio Inc., Cleveland, OH 44111 (US)
(72) Inventor: RUKAVINA, Thomas G., New Kensington, PA 15068 (US)
(74) Representative: f & e patent
(86) International application number: PCT/US2014/027853
(87) International publication number: WO 2014/152819

(56) References cited:
- EP-A1- 2 248 944
- EP-A2- 1 095 956
- WO-A1-2007/015273
- WO-A1-2007/043945
- WO-A1-2007/108198
- WO-A1-2010/110784
- WO-A1-2012/130760
- WO-A2-2007/070627
- JP-A- H1 060 071
- JP-A- H09 151 230
- JP-A- 2011 012 155
- JP-A- 2012 221 682
- JP-A- 2014 029 432
- US-A1- 2004 192 835
- US-A1- 2005 027 092

## Description

### BACKGROUND OF THE INVENTION

### I. FIELD OF THE INVENTION

The present invention relates to polyurethanes and poly(ureaurethanes) prepared from polyols and polyisocyanates, articles, castings, laminates and coatings prepared therefrom, and methods of making the same.

### II. TECHNICAL CONSIDERATIONS

A number of organic polymeric materials, for example plastics such as polycarbonates and acrylics, have been developed as alternatives and replacements for glass in applications such as optical lenses, fiber optics, windows and automotive, nautical and aviation transparencies. For example, in aircraft glazings both polycarbonates, such as LEXAN^{®}, and acrylics have enjoyed widespread acceptance. These polymeric materials can provide advantages relative to glass, including shatter or penetration resistance, lighter weight for a given application, flexibility, ease of molding and dyeability. Unfortunately, there are some serious disadvantages associated with both polycarbonates and acrylics. Polycarbonates scratch easily, and, if directly exposed to sunlight and harsh environments, soon become difficult to view through. Acrylics, although not as scratchable as polycarbonates, do not have the physical properties of the polycarbonates such as heat distortion temperature and impact resistance. Some "high impact" strength polycarbonates, can have inconsistent impact strength that can degrade over time, poor crack propagation resistance (K-factor), poor optical quality, poor solvent resistance and poor weatherability. Even though polycarbonates can exhibit good impact strength when impacted at low speeds, at high impact speeds of greater than 1100 ft/sec (335.3 m/sec), such as those exhibited in ballistics applications, a 9 mm bullet (125 grain) fired from 20 feet (6.1 m) at a speed of 1350 ft/sec (411 m/sec) can pass easily through a 1 inch (2.5 cm) thick polycarbonate plastic.

Also, polycarbonates are typically extruded, which can produce optical distortions in the extrudate in the direction of extrusion. For optical applications such as fighter plane canopies, polycarbonates typically must undergo an additional processing step to remove the distortions, which can increase cost. Also, some polycarbonates are birefringent which can also cause optical distortions. The Abbe number of LEXAN is 34. Higher Abbe values indicate better visual acuity and less chromatic aberrations.
WO 2007/070627 A2 and WO 2010/110784 A1 relate to polyurethanes and poly(ureaurethanes) prepared from branched polyols, branched polyisocyanates and/or polyisocyanate trimers, articles (including optical articles, transparencies etc.) and coatings prepared therefrom, and methods of making the same. WO 2007/0152273 A1 concerns the preparation of transparent polyurethanes which are rigid or semirigid, optically transparent, highly impact and heat resistant and can be used to make articles, including optical articles, transparencies etc.
EP 2 248 944 A1 describes a shoe press belt for papermaking comprising a reinforcing fibrous base and a polyurethane layer wherein the polyurethane layer is prepared by reacting a urethane prepolymer with a curing agent.
JP H10-60071 A relates to a two-pack type polyurethane elastomer compositions for casting consisting of a mixture of an isocyanate-functional prepolymer and a mixture comprising, amongst others, a short chain triol and a short chain diol. The polyol component of the isocyanate-functional prepolymer is a polycarbonate polyol in combination with a polycaprolactone polyol.
WO 2007/043945 A1 discloses polyurethane elastomers obtained by reacting a polyisocyanate and certain polycarbonate diols and a polyalcohol. The polyurethane elastomers are used in applications wherein hydrolytic stability and resistance to micro-organisms are crucial, such as in outdoor tubes, sport and leisure application, rollers for printers and paper machines.
EP 1 095 956 A2 is directed to a thermoset polyurethane resin which is useful for forming skin layers, especially skin layers of various automobile interior decorative articles. The thermoset polyurethane resin is obtained by the reaction of a polyol component with an organic polyisocyanate component which can be a partially urethane-modified prepolymer obtained by subjecting a mixture of polyisocyanates to reaction with a polyol.
JP 2012-221682 A and JP H09-151230 A describe a flexible light guide plate made of a thermosetting polyurethane which is prepared by reacting a urethane prepolymer made from polyol components including a polycarbonate polyol and an aliphatic polyisocyanate component with a curing agent.
JP 2011 012 155 A concerns a two-pack casting urethane elastomer-forming agent comprising an isocyanate-terminated urethane prepolymer obtained by reacting a high molecular weight diol, a triol and an aromatic diisocyanate in one pack and a curing agent component containing a low molecular weight diol and a triol in the other pack. The two-pack elastomer-forming agent is used to produce a large-sized formed article.
WO 2007/108198 A1 relates to polyurethane moldings produced from polycarbonate polyols prepared by using 3-methyl-1,5-pentane-diol as the main glycol component together with a minor amount of 4-methyltetrahydropyran.
US 2005/0027092 A1 and US 2004/0192835 A1 disclose two-component polyurethane coating systems based on an aqueous solution or dispersion of low-molecular hydroxy-functional and/or amino-functional polyurethanes as a binder component and polyisocyanates as a crosslinker component. The aqueous highly crosslinked two-component polyurethane coating systems can be used in paints or coating systems for various types of surfaces or as a binder for hardening hydraulic binders.
WO 2012/130760 A1 describes methods for producing flexible polyurethane foams wherein a polyether polyol component is reacted with an isocyanate-terminated urethane prepolymer prepared from one or more polyisocyanates and one or more polyether carbonate polyols.

There is a need in the art to develop polymers useful for producing articles having good optical quality, high impact resistance, high impact strength, high K factor, good ballistics resistance, good solvent resistance and good weatherability. The ability to fabricate articles by casting or reaction injection molding rather than extrusion also is desirable.

### SUMMARY OF THE INVENTION

In some embodiments, the present invention provides a polyurethane comprising a reaction product of components comprising: (a) at least one isocyanate functional prepolymer comprising a reaction product of: (1) 1 equivalent of at least one polyisocyanate; and (2) 0.1 to 0.4 equivalent of at least one polycarbonate polyol based upon the 1 equivalent of the at least one polyisocyanate; and (b) 0.5 to 0.8 equivalent of trimethylolpropane based upon the 1 equivalent of the at least one polyisocyanate, and 0.1 to 0.5 equivalent of pentanediol or cyclohexane dimethanol based upon the 1 equivalent of the at least one polyisocyanate.

In other embodiments, the present invention provides a polyurethane comprising a reaction product of components consisting of: (a) an isocyanate functional prepolymer comprising a reaction product of: (1) 1 equivalent of at least one polyisocyanate; and (2) 0.1 to 0.4 equivalent of at least one polycarbonate polyol based upon the 1 equivalent of the at least one polyisocyanate; and (b) 0.5 to 0.8 equivalent of trimethylolpropane based upon the 1 equivalent of the at least one polyisocyanate; and (c) 0.1 to 0.5 equivalent of butanediol based upon the 1 equivalent of the at least one polyisocyanate.

In other embodiments, the present invention provides a process for preparing a polyurethane article comprising: (a) heating a mixture of 1 equivalent of at least one polyisocyanate and 0.1 to 0.4 equivalent of at least one polycarbonate polyol based upon the 1 equivalent of the at least one polyisocyanate, to a temperature of 110°C to 130°C for at least an hour to form a reaction product; (b) mixing the reaction product (a) with 0.5 to 0.8 equivalent of trimethylolpropane based upon the 1 equivalent of the at least one polyisocyanate and 0.1 to 0.5 equivalent of butanediol, pentanediol or cyclohexane dimethanol, based upon the 1 equivalent of the at least one polyisocyanate, until the mixture reaches a temperature of at least 110°C to 130°C, optionally by heating if necessary; (c) casting the reaction product into a mold preheated to a temperature of at least 100°C to 130°C; and (d) curing the reaction product at a first predetermined temperature of 100°C to 120°C for at least 0.5 hours; and then at a second predetermined temperature of 140°C to 180°C for 15 to 30 hours.

Cured compositions, articles, laminates and methods of making and using the same comprising the above polyurethanes and poly(ureaurethane)s are also provided by the present invention.

### DETAILED DESCRIPTION

As used herein, spatial or directional terms, such as "inner", "left", "right", "up", "down", "horizontal", "vertical" relate to the invention as it is described herein. However, it is to be understood that the invention can assume various alternative orientations and, accordingly, such terms are not to be considered as limiting. For the purposes of this specification, unless otherwise indicated, all numbers expressing quantities of ingredients, reaction conditions, dimensions, physical characteristics, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

Also, it should be understood that any numerical range recited herein is intended to include all sub-ranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

"Alkyl" means an aliphatic hydrocarbon group which may be straight or branched and comprising 1 to 20 carbon atoms in the chain. Non-limiting examples of suitable alkyl groups contain 1 to 18 carbon atoms in the chain, or 1 to 6 carbon atoms in the chain. Branched means that one or more lower alkyl groups such as methyl, ethyl or propyl, are attached to a linear alkyl chain. "Lower alkyl" or "short chain alkyl" means a group having 1 to 6 carbon atoms in the chain which may be straight or branched. "Alkyl" may be unsubstituted or optionally substituted by one or more substituents which may be the same or different, each substituent being independently selected from the group consisting of halo, alkyl, aryl, cycloalkyl, cyano, hydroxy, alkoxy, alkylthio, amino, -NH(alkyl), -NH(cycloalkyl), - N(alkyl)₂, carboxy and -C(O)O-alkyl. Non-limiting examples of suitable alkyl groups include methyl, ethyl, n-propyl, isopropyl and t-butyl.

"Alkylene" means a difunctional group obtained by removal of a hydrogen atom from an alkyl group that is defined above. Non-limiting examples of alkylene include methylene, ethylene and propylene.

"Aryl" means an aromatic monocyclic or multicyclic ring system comprising 6 to 14 carbon atoms, or 6 to 10 carbon atoms. The aryl group can be optionally substituted with one or more "ring system substituents" which may be the same or different, and are as defined herein. Non-limiting examples of suitable aryl groups include phenyl and naphthyl.

"Heteroaryl" means an aromatic monocyclic or multicyclic ring system comprising 5 to 14 ring atoms, or 5 to 10 ring atoms, in which one or more of the ring atoms is an element other than carbon, for example nitrogen, oxygen or sulfur, alone or in combination. In some non-limiting embodiments, the heteroaryls contain 5 to 6 ring atoms. The "heteroaryl" can be optionally substituted by one or more "ring system substituents" which may be the same or different, and are as defined herein. The prefix aza, oxa or thia before the heteroaryl root name means that at least one of a nitrogen, oxygen or sulfur atom respectively, is present as a ring atom. A nitrogen atom of a heteroaryl can be optionally oxidized to the corresponding N-oxide. Non-limiting examples of suitable heteroaryls include pyridyl, pyrazinyl, furanyl, thienyl, pyrimidinyl, pyridone (including N-substituted pyridones), isoxazolyl, isothiazolyl, oxazolyl, thiazolyl, pyrazolyl, furazanyl, pyrrolyl, pyrazolyl, triazolyl, 1,2,4-thiadiazolyl, pyrazinyl, pyridazinyl, quinoxalinyl, phthalazinyl, oxindolyl, imidazo[1,2-a]pyridinyl, imidazo[2,1-b]thiazolyl, benzofurazanyl, indolyl, azaindolyl, benzimidazolyl, benzothienyl, quinolinyl, imidazolyl, thienopyridyl, quinazolinyl, thienopyrimidyl, pyrrolopyridyl, imidazopyridyl, isoquinolinyl, benzoazaindolyl, 1,2,4-triazinyl, benzothiazolyl . The term "heteroaryl" also refers to partially saturated heteroaryl moieties such as, for example, tetrahydroisoquinolyl, tetrahydroquinolyl.

"Aralkyl" or "arylalkyl" means an aryl-alkyl- group in which the aryl and alkyl are as previously described. In some non-limiting embodiments, the aralkyls comprise a lower alkyl group. Non-limiting examples of suitable aralkyl groups include benzyl, 2-phenethyl and naphthalenylmethyl. The bond to the parent moiety is through the alkyl.

"Alkylaryl" means an alkyl-aryl- group in which the alkyl and aryl are as previously described. In some non-limiting embodiments, the alkylaryls comprise a lower alkyl group. A non-limiting example of a suitable alkylaryl group is tolyl. The bond to the parent moiety is through the aryl.

"Cycloalkyl" means a non-aromatic mono- or multicyclic ring system comprising 3 to 10 carbon atoms, or 5 to 10 carbon atoms. In some non-limiting embodiments, the cycloalkyl ring contains 5 to 7 ring atoms. The cycloalkyl can be optionally substituted with one or more "ring system substituents" which may be the same or different, and are as defined above. Non-limiting examples of suitable monocyclic cycloalkyls include cyclopropyl, cyclopentyl, cyclohexyl, cycloheptyl. Non-limiting examples of suitable multicyclic cycloalkyls include 1-decalinyl, norbornyl, adamantyl.

"Halogen" or "halo" means fluorine, chlorine, bromine, or iodine. In some non-limiting embodiments, the halogen groups are fluorine, chlorine or bromine.

"Ring system substituent" means a substituent attached to an aromatic or non-aromatic ring system which, for example, replaces an available hydrogen on the ring system. Ring system substituents may be the same or different, each being independently selected from the group consisting of alkyl, alkenyl, alkynyl, aryl, heteroaryl, aralkyl, alkylaryl, heteroaralkyl, heteroarylalkenyl, heteroarylalkynyl, alkylheteroaryl, hydroxy, hydroxyalkyl, alkoxy, aryloxy, aralkoxy, acyl, aroyl, halo, nitro, cyano, carboxy, alkoxycarbonyl, aryloxycarbonyl, aralkoxycarbonyl, alkylsulfonyl, arylsulfonyl, heteroarylsulfonyl, alkylthio, arylthio, heteroarylthio, aralkylthio, heteroaralkylthio, cycloalkyl, heterocyclyl, -C(=N-CN)-NH₂, -C(=NH)-NH₂, -C(=NH)-NH(alkyl), Y₁Y₂N-, Y₁Y₂N-alkyl-, Y₁Y₂NC(O)-, Y₁Y₂NSO₂- and -SO₂NY₁Y₂, wherein Y₁ and Y₂ can be the same or different and are independently selected from the group consisting of hydrogen, alkyl, aryl, cycloalkyl, and aralkyl. "Ring system substituent" may also mean a single moiety which simultaneously replaces two available hydrogens on two adjacent carbon atoms (one H on each carbon) on a ring system. Examples of such moieties are methylene dioxy, ethylenedioxy, -C(CH₃)₂- which form moieties such as, for example

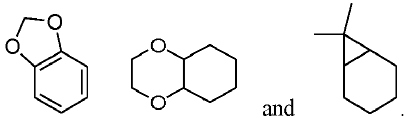

"Heterocyclyl" means a non-aromatic saturated monocyclic or multicyclic ring system comprising 3 to 10 ring atoms, or 5 to 10 ring atoms, in which one or more of the atoms in the ring system is an element other than carbon, for example nitrogen, oxygen or sulfur, alone or in combination. There are no adjacent oxygen and/or sulfur atoms present in the ring system. In some non-limiting embodiments, the heterocyclyl contains 5 to 6 ring atoms. The prefix aza, oxa or thia before the heterocyclyl root name means that at least a nitrogen, oxygen or sulfur atom respectively is present as a ring atom. Any -NH in a heterocyclyl ring may exist protected such as, for example, as an -N(Boc), - N(CBz), -N(Tos) group; such protections are also considered part of this invention. The heterocyclyl can be optionally substituted by one or more "ring system substituents" which may be the same or different, and are as defined herein. The nitrogen or sulfur atom of the heterocyclyl can be optionally oxidized to the corresponding N-oxide, S-oxide or S,S-dioxide. Non-limiting examples of suitable monocyclic heterocyclyl rings include piperidyl, pyrrolidinyl, piperazinyl, morpholinyl, thiomorpholinyl, thiazolidinyl, 1,4-dioxanyl, tetrahydrofuranyl, tetrahydrothiophenyl, lactam, lactone,

It should be noted that in hetero-atom containing ring systems of this invention, there are no hydroxyl groups on carbon atoms adjacent to a N, O or S, as well as there are no N or S groups on carbon adjacent to another heteroatom. Thus, for example, in the ring: 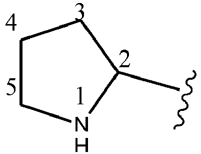 there is no -OH attached directly to carbons marked 2 and 5.

It should also be noted that tautomeric forms such as, for example, the moieties: 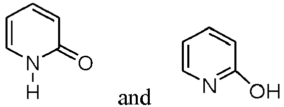 are considered equivalent in certain embodiments of this invention.

"Heteroaralkyl" means a heteroaryl-alkyl- group in which the heteroaryl and alkyl are as previously described. In some non-limiting embodiments, the heteroaralkyl contains a lower alkyl group. Non-limiting examples of suitable heteroaralkyl groups include pyridylmethyl, and quinolin-3-ylmethyl. The bond to the parent moiety is through the alkyl.

"Hydroxyalkyl" means a HO-alkyl- group in which alkyl is as previously defined. In some non-limiting embodiments, the hydroxyalkyl contains a lower alkyl group. Non-limiting examples of suitable hydroxyalkyl groups include hydroxymethyl and 2-hydroxyethyl.

"Alkoxy" means an alkyl-O- group in which the alkyl group is as previously described. Non-limiting examples of suitable alkoxy groups include methoxy, ethoxy, n-propoxy, isopropoxy and n-butoxy. The bond to the parent moiety is through the ether oxygen.

"Aryloxy" means an aryl-O- group in which the aryl group is as previously described. Non-limiting examples of suitable aryloxy groups include phenoxy and naphthoxy. The bond to the parent moiety is through the ether oxygen.

"Alkylthio" means an alkyl-S- group in which the alkyl group is as previously described. Non-limiting examples of suitable alkylthio groups include methylthio and ethylthio. The bond to the parent moiety is through the sulfur.

"Arylthio" means an aryl-S- group in which the aryl group is as previously described. Non-limiting examples of suitable arylthio groups include phenylthio and naphthylthio. The bond to the parent moiety is through the sulfur.

"Aralkylthio" means an aralkyl-S- group in which the aralkyl group is as previously described. A non-limiting example of a suitable aralkylthio group is benzylthio. The bond to the parent moiety is through the sulfur.

"Alkoxycarbonyl" means an alkyl-O-CO- group. Non-limiting examples of suitable alkoxycarbonyl groups include methoxycarbonyl and ethoxycarbonyl. The bond to the parent moiety is through the carbonyl.

"Aryloxycarbonyl" means an aryl-O-C(O)- group. Non-limiting examples of suitable aryloxycarbonyl groups include phenoxycarbonyl and naphthoxycarbonyl. The bond to the parent moiety is through the carbonyl.

"Aralkoxycarbonyl" means an aralkyl-O-C(O)- group. A non-limiting example of a suitable aralkoxycarbonyl group is benzyloxycarbonyl. The bond to the parent moiety is through the carbonyl.

"Alkylsulfonyl" means an alkyl-S(O₂)- group. In some non-limiting embodiments, the alkylsulfonyl group includes a lower alkyl group. The bond to the parent moiety is through the sulfonyl.

"Arylsulfonyl" means an aryl-S(O₂)- group. The bond to the parent moiety is through the sulfonyl.

The term "substituted" means that one or more hydrogens on the designated atom is replaced with a selection from the indicated group, provided that the designated atom's normal valency under the existing circumstances is not exceeded, and that the substitution results in a stable compound. Combinations of substituents and/or variables are permissible only if such combinations result in stable compounds.

The term "optionally substituted" means optional substitution with the specified groups, radicals or moieties.

It should also be noted that any carbon as well as heteroatom with unsatisfied valences in the text, schemes, examples and Tables herein is assumed to have the sufficient number of hydrogen atom(s) to satisfy the valences.

When a functional group in a compound is termed "protected", this means that the group is in modified form to preclude undesired side reactions at the protected site when the compound is subjected to a reaction. Suitable protecting groups will be recognized by those with ordinary skill in the art as well as by reference to standard textbooks such as, for example, T. W. Greene et al., Protective Groups in Organic Synthesis (1991), Wiley, New York.

When any variable (e.g., aryl, heterocycle, R², etc.) occurs more than one time in any constituent, its definition on each occurrence is independent of its definition at every other occurrence.

As used herein, the term "composition" is intended to encompass a product comprising the specified ingredients in the specified amounts, as well as any product which results, directly or indirectly, from combination of the specified ingredients in the specified amounts.

As used herein, "formed from" or "prepared from" denotes open, e.g., "comprising," claim language. As such, it is intended that a composition "formed from" or "prepared from" a list of recited components be a composition comprising at least these recited components or the reaction product of at least these recited components, and can further comprise other, non-recited components, during the composition's formation or preparation. As used herein, the phrase "reaction product of" means chemical reaction product(s) of the recited components, and can include partial reaction products as well as fully reacted products.

As used herein, the term "polymer" means a substance, typically of large molecular mass, comprising structural units or monomers. Examples of polymers include oligomers, homopolymers and copolymers. The term "oligomer" means a polymer consisting of only a few monomer units up to ten monomer units, for example a dimer, trimer or tetramer.

The term "prepolymer" means a compound, monomer or oligomer used to prepare a polymer, and includes without limitation both homopolymer and copolymer oligomers.

The phrase "thermoplastic polymer" means a polymer that undergoes liquid flow upon heating and can be soluble in solvents.

The phrase "thermoset polymer" means a polymer that solidifies or "sets" irreversibly upon curing or crosslinking. Once cured, a crosslinked thermoset polymer will not melt upon the application of heat and is generally insoluble in solvents.

As used herein, the term "cure" or "cured" as used in connection with a composition, e.g., "composition when cured" or a "cured composition", shall mean that any curable or crosslinkable components of the composition are at least partially cured or crosslinked. In some non-limiting embodiments of the present invention, the crosslink density of the crosslinkable components, i.e., the degree of crosslinking, ranges from 1% to 100% of complete crosslinking. In other non-limiting embodiments, the crosslink density ranges from 35% to 85% of full crosslinking. In other non-limiting embodiments, the crosslink density ranges from 50% to 85% of full crosslinking. One skilled in the art will understand that the presence and degree of crosslinking, i.e., the crosslink density, can be determined by a variety of methods, such as dynamic mechanical thermal analysis (DMA) using a TA Instruments DMA 2980 DMA analyzer over a temperature range of -148°F
(-100°C) to 350°F (177°C) conducted under nitrogen according to ASTM D 4065-01. This method determines the glass transition temperature and crosslink density of free films of coatings or polymers. These physical properties of a cured material are related to the structure of the crosslinked network. In an embodiment of the present invention, the sufficiency of cure is evaluated relative to the solvent resistance of a cured film of the polymer. For example, solvent resistance can be measured by determining the number of double acetone rubs. For purposes of the present invention, a coating is deemed to be "cured" when the film can withstand a minimum of 100 double acetone rubs without substantial softening of the film and no removal of the film.

Curing of a polymerizable composition can be obtained by subjecting the composition to curing conditions, such as but not limited to thermal curing, irradiation, etc., leading to the reaction of reactive groups of the composition and resulting in polymerization and formation of a solid polymerizate. When a polymerizable composition is subjected to curing conditions, following polymerization and after reaction of most of the reactive groups occurs, the rate of reaction of the remaining unreacted reactive groups becomes progressively slower. In some non-limiting embodiments, the polymerizable composition can be subjected to curing conditions until it is at least partially cured. The term "at least partially cured" means subjecting the polymerizable composition to curing conditions, wherein reaction of at least a portion of the reactive groups of the composition occurs, to form a solid polymerizate. The at least partially cured polymerizate can be demolded and, for example, used to prepare articles such as windows, cut into test pieces or subjected to machining operations, such as optical lens processing. In some non-limiting embodiments, the polymerizable composition can be subjected to curing conditions such that a substantially complete cure is attained and wherein further exposure to curing conditions results in no significant further improvement in polymer properties, such as strength or hardness.

The term "polyurethane" is intended to include not only polyurethanes that are formed from the reaction of polyisocyanates and polyols but also poly(ureaurethane)(s) that are prepared from the reaction of polyisocyanates with polyols and water and/or amines.

Generally, the polyurethanes and poly(ureaurethane)s of the present invention comprise a reaction product of components comprising at least one polyisocyanate and at least one polyol.

In some embodiments, the present invention provides a polyurethane comprising a reaction product of components comprising, consisting essentially of, or consisting of: (a) an isocyanate functional urethane prepolymer comprising a reaction product of components comprising: (i) 1 equivalent of at least one polyisocyanate; and (ii) 0.1 to 0.4 equivalents of polycarbonate diol based upon the 1 equivalent of at least one polyisocyanate; (b) 0.5 to 0.8 equivalents of trimethylolpropane based upon the 1 equivalent of at least one polyisocyanate; and (c) 0.1 to 0.5 equivalents of butanediol or cyclohexane dimethanol based upon the 1 equivalent of at least one polyisocyanate.

In some non-limiting embodiments, the present invention provides a polyurethane comprising a reaction product of components comprising, consisting essentially of, or consisting of: (a) an isocyanate functional urethane prepolymer comprising a reaction product of components comprising: (i) 1 equivalent of at least one polyisocyanate; and (ii) 0.2 equivalent of polycarbonate diol based upon the 1 equivalent of at least one polyisocyanate; (b) 0.7 equivalent of trimethylolpropane based upon the 1 equivalent of at least one polyisocyanate; and (c) 0.1 equivalent of butanediol or cyclohexane dimethanol based upon the 1 equivalent of at least one polyisocyanate.

In some non-limiting embodiments of the present invention, at least one of the polyisocyanates and/or at least one of the polyols is branched. As used herein, "branched" means a chain of atoms with one or more side chains attached to it. Branching occurs by the replacement of a substituent, e.g, a hydrogen atom, with a covalently bonded substituent or moiety, e.g, an alkyl group. While not intending to be bound by any theory, it is believed that branching of the polyisocyanate and/or polyol can increase the free volume within the polymer matrix, thereby providing room for the molecules to move. The molecules can orient and rotate into configurations and alignments having favorable energy states which can provide good impact properties and/or high modulus of elasticity for the cured polymer matrix. As shown in Figs. 1, 2 and 3, Dynamic Mechanical Analysis (DMA) of polyurethane castings prepared according to Examples 1, 2 and 40, respectively, for loss modulus as a function of temperature show a low temperature transition at -70°C. DMA analysis was conducted over a temperature range of -148°F (-100°C) to 350°F (177°C) under nitrogen according to ASTM D 4065-01. While not intending to be bound by any theory, it is believed that this low temperature transition is due to molecular torsional mobility at that temperature and is believed to contribute to the high impact strength of these polymers.

When a viscoelastic material is subjected to an oscillatory vibration, some energy is stored in the polymer, which is proportional to the elastic component of the modulus G', or storage modulus, and some of the energy is converted to heat through internal friction, or viscous dissipation of the energy, which is termed the loss modulus G". The maximum in the loss modulus is termed tan Delta, which is the maximum in internal friction, damping, or viscous energy dissipation.

High light transmittance, glassy polymers rarely exhibit high impact strength. Polycarbonate plastics such as LEXAN can exhibit a similar low temperature transition, but can have lower impact strength and lower Young's Modulus.

The physical properties of the polyurethanes and poly(ureaurethane)s of the present invention are derived from their molecular structure and are determined by the selection of building blocks, e.g., the selection of the reactants, the ratio of the hard crystalline and soft amorphous segments, and the supra-molecular structures caused by atomic interactions between chains.

Hard segments, i.e., the crystalline or semi-crystalline region of the urethane polymer, result from the reaction of the isocyanate and a chain extender, such as an aliphatic polyol having 4 to 18 carbon atoms or a low molecular weight polyol having a molecular weight of less than 200 discussed herein. Generally, the soft segment, i.e., the amorphous, rubbery region of the urethane polymer, results from the reaction of the isocyanate and a polymer backbone component, for example a polyester polyol (such as a polycarbonate polyol) or a polyether polyol or short chain diols that have not formed crystalline regions.

The qualitative contribution of a particular organic polyol to either the hard or soft segment when mixed and reacted with other polyurethane-forming components can be readily determined by measuring the Fischer microhardness of the resulting cured polyurethane according to ISO 14577-1:2002.

In some non-limiting embodiments, the hard segment content of the polyurethane ranges from 10 to 100 weight percent, or 50 to 100 weight percent, or 70 to 100 weight percent. The hard segment content is the percentage by weight of the hard segment linkages present in the polymer and can be calculated by determining the total number of equivalents, and from this the total weight of all reactants, and dividing the total weight of the hard segment linkages obtainable from these reactants by the total weight of the reactants themselves. The following example will further explain the calculation. For a polyurethane prepared by reacting 0.7 equivalents of 1,4-butanediol, 0.3 equivalents of trimethylolpropane and one equivalent of 4,4'-methylene-bis-(cyclohexyl isocyanate) (DESMODUR W), the equivalent weight of the 1,4-butanediol is 45 g/eq., the equivalent weight of the trimethylolpropane is 44.7 g/eq. (corrected for impurities) and the equivalent weight of the DESMODUR W is 131.2 g/eq. Therefore, the actual weight of ingredients used is 31.54 parts by weight of 1,4-butanediol, 13.2 parts by weight of trimethylolpropane and 131.2 parts by weight of DESMODUR W or a total reactant weight of 175 parts by weight. One equivalent of 1,4-butanediol will yield one equivalent of hard segment linkage, where the hard segment linkage is 1,4-butanediol/DESMODUR W dimer. The equivalent weight of a 1,4-butanediol/DESMODUR W dimer linkage is 176 g/eq. so that the total weight of the hard segment linkages determined by multiplying the equivalent weight of the hard segment dimer by the number of equivalents of 1,4-butanediol would be 123.2 g/eq. Thus, the total weight of the 1,4-butanediol/DESMODUR W dimer linkage, 123.2, divided by the total weight of the reactants, 175.7, multiplied by 100 to convert to percentages would give a percentage by weight of hard segment linkage of 70 percent by weight.

Both Plexiglas and stretched acrylic absorb quite a bit of water from the atmosphere. In accelerated tests such as QUV-B or soaking in water at room temperature, surprisingly, polyurethanes according to the present invention including short chain diols such as butanediol and pentanediol, absorbed essentially no water in water vapor transmission rate studies and after soaking in water for 24 hours. While not intending to be bound by any theory, it is believed that even though these plastics are very polar, the hydrogen bonding in the hard segment domains is strong enough to block water vapor transmission and uptake of water. In comparison, stretched acrylic will absorb enough water to cause severe swelling of the plastic, to the point that it cracks in-plane, like layers of onion skin separating until it falls apart. The low water absorption can also mitigate any hydrolysis degradation of the urethane groups in the polymer.

As used herein, the term "equivalent" means the mass in grams of a substance which will react with one mole (6.022 x 10²³) of another substance. As used herein, "equivalent weight" is effectively equal to the amount of a substance in moles, divided by the valence or number of functional reactive groups of the substance.

As used herein, the term "isocyanate" includes compounds, monomers, oligomers and polymers comprising at least one or at least two -N=C=O functional groups and/or at least one or at least two - N=C=S (isothiocyanate) groups. Monofunctional isocyanates can be used as chain terminators or to provide terminal groups during polymerization. As used herein, "polyisocyanate" means an isocyanate comprising at least two -N=C=O functional groups and/or at least two -N=C=S (isothiocyanate) groups, such as diisocyanates or triisocyanates, as well as dimers and trimers or biurets of the isocyanates discussed herein. Suitable isocyanates are capable of forming a covalent bond with a reactive group such as hydroxyl, thiol or amine functional group. Isocyanates useful in the present invention can be branched or unbranched. As discussed above, use of branched isocyanates may be desirable to increase the free volume within the polymer matrix to provide space for the molecules to move.

Isocyanates useful in the present invention include "modified", "unmodified" and mixtures of "modified" and "unmodified" isocyanates. The isocyanates can have "free", "blocked" or partially blocked isocyanate groups. The term "modified" means that the aforementioned isocyanates are changed in a known manner to introduce biuret, urea, carbodiimide, urethane or isocyanurate groups or blocking groups. In some non-limiting embodiments, the "modified" isocyanate is obtained by cycloaddition processes to yield dimers and trimers of the isocyanate, i.e., polyisocyanates. Free isocyanate groups are extremely reactive. In order to control the reactivity of isocyanate group-containing components, the NCO groups may be blocked with certain selected organic compounds that render the isocyanate group inert to reactive hydrogen compounds at room temperature. When heated to elevated temperatures, e.g., ranging from 90°C to 200°C, the blocked isocyanates release the blocking agent and react in the same way as the original unblocked or free isocyanate.

Generally, compounds used to block isocyanates are organic compounds that have active hydrogen atoms, e.g., volatile alcohols, epsilon-caprolactam or ketoxime compounds. Non-limiting examples of suitable blocking compounds include phenol, cresol, nonylphenol, epsilon-caprolactam and methyl ethyl ketoxime.

As used herein, the NCO in the NCO:OH ratio represents the free isocyanate of free isocyanate-containing materials, and of blocked or partially blocked isocyanate-containing materials after the release of the blocking agent. In some cases, it is not possible to remove all of the blocking agent. In those situations, more of the blocked isocyanate-containing material would be used to attain the desired level of free NCO.

The molecular weight of the isocyanate and isothiocyanate can vary widely. In alternate non-limiting embodiments, the number average molecular weight (Mn) of each can be at least 100 grams/mole, or at least 150 grams/mole, or less than 15,000 grams/mole, or less than 5,000 grams/mole. The number average molecular weight can be determined using known methods, such as by gel permeation chromatography (GPC) using polystyrene standards.

Non-limiting examples of suitable isocyanates include aliphatic, cycloaliphatic, aromatic and heterocyclic isocyanates, dimers and trimers thereof and mixtures thereof. Useful cycloaliphatic isocyanates include those in which one or more of the isocyanato groups are attached directly to the cycloaliphatic ring and cycloaliphatic isocyanates in which one or more of the isocyanato groups are not attached directly to the cycloaliphatic ring. Useful aromatic isocyanates include those in which one or more of the isocyanato groups are attached directly to the aromatic ring, and aromatic isocyanates in which one or more of the isocyanato groups are not attached directly to the aromatic ring. Useful heterocyclic isocyanates include those in which one or more of the isocyanato groups are attached directly to the heterocyclic ring and heterocyclic isocyanates in which one or more of the isocyanato groups are not attached directly to the heterocyclic ring.

Cycloaliphatic diisocyanates are desirable for use in the present invention because they are not adversely affected by ultraviolet light and can yield polyurethanes having high impact energy absorption levels, which make them desirable for glass replacements and bilayer safety glass applications. Also, polyurethanes prepared with cycloaliphatic diisocyanates are not adversely affected by conventional processing temperatures. When an aromatic polyisocyanate is used, generally, care should be taken to select a material that does not cause the polyurethane to color (e.g., yellow).

In some non-limiting embodiments, the aliphatic and cycloaliphatic diisocyanates can comprise 6 to 100 carbon atoms linked in a straight chain or cyclized and having two isocyanate reactive end groups.

Non-limiting examples of suitable aliphatic isocyanates include ethylene diisocyanate, trimethylene diisocyanate, 1,6-hexamethylene diisocyanate (HDI), tetramethylene diisocyanate, hexamethylene diisocyanate, octamethylene diisocyanate, nonamethylene diisocyanate, decamethylene diisocyanate, 1,6,11-undecanetriisocyanate, 1,3,6-hexamethylene triisocyanate, bis(isocyanatoethyl)-carbonate, bis(isocyanatoethyl)ether.

Other non-limiting examples of suitable aliphatic isocyanates include branched isocyanates such as trimethylhexane diisocyanate, trimethylhexamethylene diisocyanate (TMDI), 2,2'-dimethylpentane diisocyanate, 2,2,4-trimethylhexane diisocyanate, 2,4,4-trimethylhexamethylene diisocyanate, 1,8-diisocyanato-4-(isocyanatomethyl)octane, 2,5,7-trimethyl-1,8-diisocyanato-5-(isocyanatomethyl) octane, 2-isocyanatopropyl 2,6-diisocyanatohexanoate, lysinediisocyanate methyl ester and lysinetriisocyanate methyl ester.

Non-limiting examples of suitable cycloaliphatic isocyanates include dinuclear compounds bridged by an isopropylidene group or an alkylene group of 1 to 3 carbon atoms. Non-limiting examples of suitable cycloaliphatic isocyanates include 1,1'-methylene-bis-(4-isocyanatocyclohexane), 4,4'-methylene-bis-(cyclohexyl isocyanate) or 4,4'-dicyclohexylmethane diisocyanate (such as DESMODUR W commercially available from Bayer Corp. of Pittsburgh, Pennsylvania), 4,4'-isopropylidene-bis-(cyclohexyl isocyanate), 1,4-cyclohexyl diisocyanate (CHDI), 3-isocyanato methyl-3,5,5-trimethylcyclohexyl isocyanate (a branched isocyanate also known as isophorone diisocyanate or IPDI) which is commercially available from Arco Chemical Co. of Newtown Square, Pennsylvania, and mixtures thereof.

Other useful dinuclear cycloaliphatic diisocyanates include those formed through an alkylene group of from 1 to 3 carbon atoms inclusive, and which can be substituted with nitro, chlorine, alkyl, alkoxy and other groups that are not reactive with hydroxyl groups (or active hydrogens) providing they are not positioned so as to render the isocyanate group unreactive. Also, aromatic diisocyanates such as meta-tetramethylxylylene diisocyanate (a branched isocyanate also known as 1,3-bis(1-isocyanato-1-methylethyl)-benzene which is commercially available from Cytec Industries Inc. of West Patterson, New Jersey under the tradename TMXDI^{®} (Meta) Aliphatic Isocyanate), and hydrogenated aromatic diisocyanates such as hydrogenated toluene diisocyanate may be used. Dinuclear diisocyanates in which one of the rings is saturated and the other unsaturated, which are prepared by partially hydrogenating aromatic diisocyanates such as diphenyl methane diisocyanates, diphenyl isopropylidene diisocyanate and diphenylene diisocyanate, may also be used.

Mixtures of cycloaliphatic diisocyanates with aliphatic diisocyanates and/or aromatic diisocyanates may also be used. An example is 4,4'-methylene-bis-(cyclohexyl isocyanate) with commercial isomer mixtures of toluene diisocyanate or meta-phenylene diisocyanate. Another useful mixture is 4,4'-methylene-bis-(cyclohexyl isocyanate) and isophorone diisocyanate.

Isothiocyanates corresponding to the above diisocyanates can be used, as well as mixed compounds containing both an isocyanate and a thioisocyanate group.

Non-limiting examples of suitable isocyanates can include but are not limited to DESMODUR W, DESMODUR N 3300 (hexamethylene diisocyanate trimer), DESMODUR N 3400 (60% hexamethylene diisocyanate dimer and 40% hexamethylene diisocyanate trimer), which are commercially available from Bayer Corp.

In some non-limiting embodiments, the isocyanate can include 1,1'-methylene-bis-(4-isocyanatocyclohexane) (also known as 4,4'-methylene-bis-(cyclohexyl isocyanate)) and isomeric mixtures thereof. As used herein, the term "isomeric mixtures" refers to a mixture of the cis-cis, trans-trans, and cis-trans isomers of the isocyanate. Non-limiting examples of isomeric mixtures suitable for use in the present invention can include the trans-trans isomer of 4,4'-methylenebis(cyclohexyl isocyanate), hereinafter referred to as "PICM" (paraisocyanato cyclohexylmethane), the cis-trans isomer of PICM, the cis-cis isomer of PICM, and mixtures thereof. Three suitable isomers of 4,4'-methylenebis(cyclohexyl isocyanate) (also known as 1,1'-methylenebis(4-isocyanatocyclohexane) for use in the present invention are shown below.

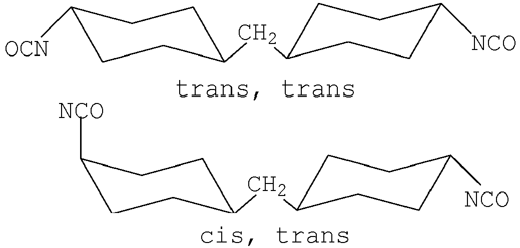

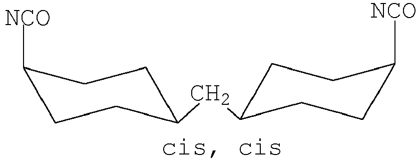

In some non-limiting embodiments, the PICM used in this invention can be prepared by phosgenating the 4,4'-methylenebis(cyclohexyl amine) (PACM) by procedures well-known in the art such as the procedures disclosed in U.S. Patent Nos. 2,644,007 and 2,680,127. The PACM isomer mixtures, upon phosgenation, can produce PICM in a liquid phase, a partially liquid phase, or a solid phase at room temperature. The PACM isomer mixtures can be obtained by the hydrogenation of methylenedianiline and/or by fractional crystallization of PACM isomer mixtures in the presence of water and alcohols such as methanol and ethanol.

In some non-limiting embodiments, the isomeric mixture can comprise from 10 to 100 weight percent of the trans, trans isomer of 4,4'-methylenebis(cyclohexyl isocyanate)(PICM), or 30 to 100 weight percent, or 50 to 100 weight percent, or 75 to 100 weight percent. In other non-limiting embodiments, the cycloaliphatic isocyanate can consist essentially of the trans, trans isomer of 1,1'-methylene-bis-(4-isocyanatocyclohexane) (also known as 4,4'-methylene-bis-(cyclohexyl isocyanate)), e.g., at least 80 weight percent of the trans, trans isomer of 1,1'-methylene-bis-(4-isocyanatocyclohexane), or at least 90 weight percent of the trans, trans isomer of 1,1'-methylene-bis-(4-isocyanatocyclohexane), or at least 95 weight percent of the trans, trans isomer of 1,1'-methylene-bis-(4-isocyanatocyclohexane) and in other non-limiting embodiments consists of 100 weight percent of the trans, trans isomer of 1,1'-methylene-bis-(4-isocyanatocyclohexane).

Non-limiting examples of suitable polyisocyanates for use in the present invention include polyisocyanates and polyisothiocyanates having backbone linkages such as urethane linkages (-NH-C(O)-O-), thiourethane linkages (-NH-C(O)-S-), thiocarbamate linkages (-NH-C(S)-O-), dithiourethane linkages (-NH-C(S)-S-), polyamide linkages, and combinations thereof.

Other non-limiting examples of suitable polyisocyanates include ethylenically unsaturated polyisocyanates and polyisothiocyanates; alicyclic polyisocyanates and polyisothiocyanates; aromatic polyisocyanates and polyisothiocyanates wherein the isocyanate groups are not bonded directly to the aromatic ring, e.g., α,α'-xylylene diisocyanate; aromatic polyisocyanates and polyisothiocyanates wherein the isocyanate groups are bonded directly to the aromatic ring, e.g., benzene diisocyanate; aliphatic polyisocyanates and polyisothiocyanates containing sulfide linkages; aromatic polyisocyanates and polyisothiocyanates containing sulfide or disulfide linkages; aromatic polyisocyanates and polyisothiocyanates containing sulfone linkages; sulfonic ester-type polyisocyanates and polyisothiocyanates, e.g., 4-methyl-3-isocyanatobenzenesulfonyl-4'-isocyanato-phenol ester; aromatic sulfonic amide-type polyisocyanates and polyisothiocyanates; sulfur-containing heterocyclic polyisocyanates and polyisothiocyanates, e.g., thiophene-2,5-diisocyanate; halogenated, alkylated, alkoxylated, nitrated, carbodiimide modified, urea modified and biuret modified derivatives of isocyanates; and dimerized and trimerized products of isocyanates.

Non-limiting examples of suitable ethylenically unsaturated polyisocyanates include butene diisocyanate and 1,3-butadiene-1,4-diisocyanate. Non-limiting examples of suitable alicyclic polyisocyanates include isophorone diisocyanate, cyclohexane diisocyanate, methylcyclohexane diisocyanate, bis(isocyanatomethyl) cyclohexane, bis(isocyanatocyclohexyl)methane, bis(isocyanatocyclohexyl)-2,2-propane, bis(isocyanatocyclohexyl)-1,2-ethane, 2-isocyanatomethyl-3-(3-isocyanatopropyl)-5-isocyanatomethyl-bicyclo[2.2. 1]-heptane, 2-isocyanatomethyl-3-(3-isocyanatopropyl)-6-isocyanatomethyl-bicyclo[2.2.1]-heptane, 2-isocyanatomethyl-2-(3-isocyanatopropyl)-5-isocyanatomethyl-bicyclo[2.2. 1]-heptane, 2-isocyanatomethyl-2-(3-isocyanatopropyl)-6-isocyanatomethyl-bicyclo[2.2. 1]-heptane, 2-isocyanatomethyl-3-(3-isocyanatopropyl)-6-(2-isocyanatoethyl)-bicyclo[2.2.1]-heptane, 2-isocyanatomethyl-2-(3-isocyanatopropyl)-5-(2-isocyanatoethyl)-bicyclo[2.2.1]-heptane and 2-isocyanatomethyl-2-(3-isocyanatopropyl)-6-(2-isocyanatoethyl)-bicyclo[2.2.1] -heptane.

Non-limiting examples of suitable aromatic polyisocyanates wherein the isocyanate groups are not bonded directly to the aromatic ring include α,α'-xylene diisocyanate, bis(isocyanatoethyl)benzene, α,α,α',α'-tetramethylxylene diisocyanate, 1,3-bis(1-isocyanato-1-methylethyl)benzene, bis(isocyanatobutyl)benzene, bis(isocyanatomethyl)naphthalene, bis(isocyanatomethyl)diphenyl ether, bis(isocyanatoethyl) phthalate, mesitylene triisocyanate and 2,5-di(isocyanatomethyl)furan.

Non-limiting examples of suitable aromatic polyisocyanates having isocyanate groups bonded directly to the aromatic ring include phenylene diisocyanate, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene diisocyanate, benzene triisocyanate, naphthalene diisocyanate, methylnaphthalene diisocyanate, biphenyl diisocyanate, ortho-toluidine diisocyanate, ortho-tolylidine diisocyanate, ortho-tolylene diisocyanate, 4,4'-diphenylmethane diisocyanate, bis(3-methyl-4-isocyanatophenyl)methane, bis(isocyanatophenyl)ethylene, 3,3'-dimethoxy-biphenyl-4,4'-diisocyanate, triphenylmethane triisocyanate, polymeric 4,4'-diphenylmethane diisocyanate, naphthalene triisocyanate, diphenylmethane-2,4,4'-triisocyanate, 4-methyldiphenylmethane-3,5,2',4',6'-pentaisocyanate, diphenylether diisocyanate, bis(isocyanatophenylether)ethyleneglycol, bis(isocyanatophenylether)-1,3-propyleneglycol, benzophenone diisocyanate, carbazole diisocyanate, ethylcarbazole diisocyanate and dichlorocarbazole diisocyanate.

In some non-limiting embodiments, sulfur-containing isocyanates of the following general formula (I) can be used: 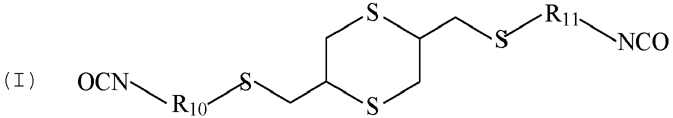 wherein R₁₀ and R₁₁ are each independently C₁ to C₃ alkyl.

Non-limiting examples of suitable aliphatic polyisocyanates containing sulfide linkages include thiodiethyl diisocyanate, thiodipropyl diisocyanate, dithiodihexyl diisocyanate, dimethylsulfone diisocyanate, dithiodimethyl diisocyanate, dithiodiethyl diisocyanate, dithiodipropyl diisocyanate and dicyclohexylsulfide-4,4'-diisocyanate. Non-limiting examples of aromatic polyisocyanates containing sulfide or disulfide linkages include but are not limited to diphenylsulfide-2,4'-diisocyanate, diphenylsulfide-4,4'-diisocyanate, 3,3'-dimethoxy-4,4'-diisocyanatodibenzyl thioether, bis(4-isocyanatomethylbenzene)-sulfide, diphenyldisulfide-4,4'-diisocyanate, 2,2'-dimethyldiphenyldisulfide-5,5'-diisocyanate, 3,3'-dimethyldiphenyldisulfide-5,5'-diisocyanate, 3,3'-dimethyldiphenyldisulfide-6,6'-diisocyanate, 4,4' -dimethyldiphenyldisulfide-5,5' -diisocyanate, 3,3' -dimethoxydiphenyldisulfide-4,4' - diisocyanate and 4,4'-dimethoxydiphenyldisulfide-3,3'-diisocyanate.

Non-limiting examples of suitable aromatic polyisocyanates containing sulfone linkages include diphenylsulfone-4,4'-diisocyanate, diphenylsulfone-3,3'-diisocyanate, benzidinesulfone-4,4'-diisocyanate, diphenylmethanesulfone-4,4'-diisocyanate, 4-methyldiphenylmethanesulfone-2,4'-diisocyanate, 4,4'-dimethoxydiphenylsulfone-3,3'-diisocyanate, 3,3'-dimethoxy-4,4'-diisocyanatodibenzylsulfone, 4,4'-dimethyldiphenylsulfone-3,3'-diisocyanate, 4,4'-di-tert-butyl-diphenylsulfone-3,3'-diisocyanate and 4,4'-dichlorodiphenylsulfone-3,3'-diisocyanate.

Non-limiting examples of aromatic sulfonic amide-type polyisocyanates and suitable isothiocyanates are disclosed in U.S. Patent Application Publication 2009/0280709.

In some non-limiting embodiments, the isocyanate comprises at least one triisocyanate or at least one polyisocyanate trimer. Non-limiting examples of such isocyanates include aromatic triisocyanates such as tris(4-iso-cyanatophenyl)methane (DESMODUR R), 1,3,5-tris(3-isocyanato-4-methylphenyl)-2,3,6-trioxohexahydro-1,3,5 triazine (DESMODUR IL); adducts of aromatic diisocyanates such as the adduct of 2,4-tolylene diisocyanate (TDI, 2,4-diisocyanatotoluene) and trimethylolpropane (DESMODUR L); and from aliphatic triisocyanates such as N-isocyanatohexylaminocarbonyl-N,N'-bis(isocyanatohexyl)urea (DESMODUR N), 2,4,6-trioxo-1,3,5-tris(6-isocyanatohexyl)hexahydro-1,3,5-triazine (DESMODUR N3390), 2,4,6-trioxo-1,3,5-tris(5-isocyanato-1,3,3-trimethylcyclo-hexylmethyl)hexahydro-1,3,5-triazine (DESMODUR Z4370), and 4-(isocyanatomethyl)-1,8-octane diisocyanate. The above DESMODUR products are commercially available from Bayer Corp. Also useful are the biuret of hexanediisocyanate, polymeric methane diisocyanate, and polymeric isophorone diisocyanate, and trimers of hexamethylene diisocyanate, isophorone diisocyanate and tetramethylxylylene diisocyanate.

In some non-limiting embodiments, the polyisocyanate used to make a polyurethane polyol prepolymer as a precursor is a cycloaliphatic compound, such as a dinuclear compound bridged by an isopropylidene group or an alkylene group of 1 to 3 carbon atoms.

The components for forming the isocyanate functional prepolymer comprise 0.1 to 0.4 equivalent of at least one polycarbonate polyol based upon the 1 equivalent of the at least one polyisocyanate. As used herein, the term "polyol" includes compounds, monomers, oligomers and polymers comprising at least two hydroxyl groups (such as diols) or at least three hydroxyl groups (such as triols), higher functional polyols and mixtures thereof. Suitable polyols are capable of forming a covalent bond with a reactive group such as an isocyanate functional group.

Non-limiting examples of polycarbonate polyols include aliphatic polycarbonate diols, for example those based upon alkylene glycols, ether glycols, alicyclic glycols or mixtures thereof. In some embodiments, the alkylene groups for preparing the polycarbonate polyol can comprise from 5 to 10 carbon atoms and can be straight chain, cycloalkylene or combinations thereof. Non-limiting examples of such alkylene groups include hexylene, octylene, decylene, cyclohexylene and cyclohexyldimethylene. Suitable polycarbonate polyols can be prepared, in non-limiting examples, by reacting a hydroxy terminated alkylene glycol with a dialkyl carbonate, such as methyl, ethyl, n-propyl or n-butyl carbonate, or diaryl carbonate, such as diphenyl or dinaphthyl carbonate, or by reacting of a hydroxy-terminated alkylene diol with phosgene or bischoloroformate, in a manner well-known to those skilled in the art. Non-limiting examples of such polycarbonate polyols include those commercially available as Ravecarb^{™} 107 from Enichem S.p.A. (Polimeri Europa) of Italy, and polyhexylene carbonate diols, 1000 number average molecular weight, such as KM10-1733 polycarbonate diol prepared from hexanediol, available from Stahl. Examples of other suitable polycarbonate polyols that are commercially available include KM10-1122, KM10-1667 (prepared from a 50/50 weight percent mixture of cyclohexane dimethanol and hexanediol) (commercially available from Stahl U.S.A. Inc. of Peabody, Massachusetts), DESMOPHEN 2020E (commercially available from Bayer Corp), and ETERNACOLL^{®} polycarbonate diols such as ETERNACOLL^{®} UH-100W 1,6-hexanediol based polycarbonate diol (molecular weight of 1000, OH value of from 100 - 120 KOH mg/PCD g, melting point 45°C, viscosity 360-460 cP (360-460 mPa·s) @ 75°C) from UBE Industries.

The polycarbonate polyol can be produced by reacting a diol, such as described herein, and a dialkyl carbonate, such as described in U.S. Patent No. 4,160,853. The polycarbonate polyol can include polyhexamethylene carbonate such as HO-(CH₂)₆-[O-C(O)-O-(CH₂)₆]ₙ-OH, wherein n is an integer from 4 to 24, or from 4 to 10, or from 5 to 7.

Methods for making the prepolymer are discussed in detail below.

In some non-limiting embodiments, the components for preparing the isocyanate functional prepolymer can further comprise at least one polyol having at least 3 hydroxyl groups. The amount of the at least one polyol having at least 3 hydroxyl groups used to form the polyurethane is 0.01 to 1 equivalent, or 0.02 to 1 equivalent, or 0.05 to 1 equivalent, or 0.1 to 1 equivalent, or 0.01 to 0.7 equivalent, or 0.1 to 0.7 equivalent, or 0.01 to 0.3 equivalent based upon the 1 equivalent of the at least one polyisocyanate.

In some non-limiting embodiments, the polyurethane comprises a reaction product of components comprising the at least one isocyanate functional prepolymer discussed above and 0.5 to 0.8 equivalent of trimethylolpropane (b) based upon the 1 equivalent of the at least one polyisocyanate

As discussed above, the trimethylolpropane (TMP) may increase the free volume within the polymer matrix to provide space for the molecules to move or rotate when impacted.

In some embodiments, the polyurethanes of the present invention can be thermoplastics, for example those polyurethanes having a molecular weight per crosslink of at least 6000 g/mole.

The components further comprise 0.001 to 0.5 equivalent or more, or 0.01 to 0.3 equivalent, or 0.1 equivalent of at least one polyol (c) different from the polyol (b), based upon the 1 equivalent of the at least one polyisocyanate. In some non-limiting embodiments, the polyol (c) is a diol.

In some non-limiting embodiments of the claimed process, the reaction components for preparing the polyurethane further comprise 0.1 to 0.5 equivalent of butanediol, pentanediol or cyclohexane dimethanol (CHDM).

In some non-limiting embodiments, the components of the polyurethane are essentially free of SH-containing materials, i.e., comprise less than 5 weight percent of SH-containing materials, in other non-limiting embodiments the components comprise less than 2 weight percent of SH-containing materials, and in other non-limiting embodiments are free of SH-containing materials.

Mixtures of any of the above diols can be used.

In some non-limiting embodiments, the reaction components for preparing the polyurethane of can further comprise one or more non-branched triols and/or one or more higher functional polyols different from trimethylolpropane, and/or one or more branched or unbranched polyols (diols, triols, and/or higher functional polyols) having more than 18 carbon atoms. In some non-limiting embodiments, the amount of the one or more non-branched triols and/or one or more higher functional polyols different from trimethylolpropane, and/or one or more branched or unbranched polyols (diols, triols, and/or higher functional polyols) having more than 18 carbon atoms, used to form the polyurethane is 0.01 to 0.98 equivalent, or 0.01 to 0.9 equivalent, or 0.01 to 0.8 equivalent, or 0.01 to 0.5 equivalent, or 0.01 to 0.2 equivalent, or 0.1 to 0.98 equivalent, 0.1 to 0.95 equivalent, or 0.1 to 0.8 equivalent, or 0.1 to 0.5 equivalent, or 0.1 to 0.2 equivalent based upon the 1 equivalent of the at least one polyisocyanate.

Non-limiting examples of suitable non-branched triols and higher functional polyols include aliphatic, cycloaliphatic, aromatic, heterocyclic, oligomeric, and polymeric polyols and mixtures thereof, such as a cycloalkane polyol, such as cyclohexanetriol (for example 1,3,5-cyclohexanetriol), an aromatic polyol, such as benzenetriol (for example 1,2,3-benzenetriol, 1,2,4-benzenetriol, and 1,3,5-benzenetriol) and phenolphthalein, a polyol of an isocyanurate, such as tris hydroxyethyl isocyanurate.

In some non-limiting embodiments, the reaction components for preparing the polyurethane can further comprise one or more branched or unbranched polyols (diols, triols, and/or higher functional polyols) having more than 18 carbon atoms.

Non-limiting examples of suitable polyols having more than 18 carbon atoms include straight or branched chain aliphatic polyols, cycloaliphatic polyols, cycloaliphatic polyols, aromatic polyols, heterocyclic polyols, oligomeric polyols, polymeric polyols and mixtures thereof, such as 1,18-icosanediol and 1,24-tetracosanediol.

Other non-limiting examples of suitable polyols having more than 18 carbon atoms include those represented by the following formula: 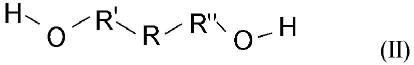 wherein R represents C₀ to C₃₀ divalent linear or branched aliphatic, cycloaliphatic, aromatic, heterocyclic, or oligomeric saturated alkylene radical or mixtures thereof; C₂ to C₃₀ divalent organic radical containing at least one element selected from the group consisting of sulfur, oxygen and silicon in addition to carbon and hydrogen atoms; C₅ to C₃₀ divalent saturated cycloalkylene radical; or C₅ to C₃₀ divalent saturated heterocycloalkylene radical; and R' and R" can be present or absent and, if present, each independently represent C₁ to C₃₀ divalent linear or branched aliphatic, cycloaliphatic, aromatic, heterocyclic, polymeric, or oligomeric saturated alkylene radical or mixtures thereof.

Non-limiting examples of other suitable cycloaliphatic polyols having more than 18 carbon atoms include biscyclohexanols having more than 18 carbon atoms, which can be prepared by hydrogenating the corresponding bisphenols, and aromatic polyols having more than 18 carbon atoms include bisphenols, and alkoxylated bisphenols, such as alkoxylated 4,4'-isopropylidenediphenol which can have from 3 to 70 alkoxy groups, oligomeric or polymeric polyols having more than 18 carbon atoms including higher polyalkylene glycols such as polyethylene glycols having number average molecular weights ranging from 200 grams/mole to 2,000 grams/mole, and mixtures thereof, or SH-containing materials, such as polythiols having at least two thiol groups or at least three thiol groups and at least 18 carbon atoms such as are disclosed in U.S. Patent Application Publication 2009/0280709

In some non-limiting embodiments, the polyol having at least 18 carbon atoms can have a number average molecular weight of 200 to 5,000 grams/mole, or 200 to 4,000 grams/mole, or at least 200 grams/mole, or at least 400 grams/mole, or at least 1000 grams/mole, or at least 2000 grams/mole. In some non-limiting embodiments, the polyol can have a number average molecular weight of less than 5,000 grams/mole, or less than 4,000 grams/mole, or less than 3,000 grams/mole, or less than 2,000 grams/mole, or less than 1,000 grams/mole, or less than 500 grams/mole.

Mixtures of any of the above polyols can be used. For example, the diol can comprise butanediol and/or pentanediol.

In some non-limiting embodiments, the polyurethanes can be prepared from reaction components comprising at least one polyester polyol and/or at least one polyether polyol. The amount of polyester polyol or polyether polyol can range from about 0.01 to about 0.5 equivalent, or about 0.1 to about 0.5 equivalent, or about 0.1 to about 0.3 equivalent, or about 0.1 to about 0.2 equivalent based upon the about 1 equivalent of polyisocyanate.

Non-limiting examples of such polyester polyols include polyester glycols, polycaprolactone polyols, and mixtures thereof, but not polycarbonate polyols. Polyester glycols can include the esterification products of one or more dicarboxylic acids having from four to ten carbon atoms, such as but not limited to adipic, succinic or sebacic acids, with one or more low molecular weight glycols having from two to ten carbon atoms, such as but not limited to ethylene glycol, propylene glycol, diethylene glycol, 1,4-butanediol, neopentyl glycol, 1,6-hexanediol and 1,10-decanediol. Esterification procedures for producing polyester polyols are described, for example, in the article by D.M. Young, F. Hostettler et al., "Polyesters from Lactone," Union Carbide F-40, p. 147.

Non-limiting examples of polycaprolactone polyols include those prepared by condensing caprolactone in the presence of difunctional active hydrogen material such as water or low molecular weight glycols, for example ethylene glycol, propylene glycol, 1,2-propanediol, 1,4-butanediol, trimethylolpropane or 1,6-hexanediol, also known as polycaprolactone polyester polyols. Non-limiting examples of suitable polycaprolactone polyols can include commercially available materials designated as the CAPA series from Solvay Chemical of Houston, Texas, such as CAPA 2047A and CAPA 2077A polycaprolactone polyols, and the TONE series from Dow Chemical of Midland, Michigan, such as TONE 0201, 0210, 0230 & 0241 polycaprolactone polyols. In some non-limiting embodiments, the polycaprolactone polyol has a molecular weight ranging from about 500 to about 2000 grams per mole, or about 500 to about 1000 grams per mole.

Non-limiting examples of polyether polyols include poly(oxyalkylene) polyols or polyalkoxylated polyols. Poly(oxyalkylene) polyols can be prepared in accordance with known methods. In a non-limiting embodiment, a poly(oxyalkylene) polyol can be prepared by condensing an alkylene oxide, or a mixture of alkylene oxides, using acid- or base-catalyzed addition with a polyhydric initiator or a mixture of polyhydric initiators, such as ethylene glycol, propylene glycol, glycerol, and sorbitol. Compatible mixtures of polyether polyols can also be used. As used herein, "compatible" means that two or more materials are mutually soluble in each other so as to essentially form a single phase. Non-limiting examples of alkylene oxides can include ethylene oxide, propylene oxide, butylene oxide, amylene oxide, aralkylene oxides, such as styrene oxide, mixtures of ethylene oxide and propylene oxide. In some non-limiting embodiments, polyoxyalkylene polyols can be prepared with mixtures of alkylene oxide using random or step-wise oxyalkylation. Non-limiting examples of such poly(oxyalkylene) polyols include polyoxyethylene polyols, such as polyethylene glycol, and polyoxypropylene polyols, such as polypropylene glycol.

Other polyether polyols include block polymers such as those having blocks of ethylene oxide-propylene oxide and/or ethylene oxide-butylene oxide. In some non-limiting embodiments, the polyether polyol comprises a block copolymer of the following formula: HO-(CHR₁CHR₂-O)ₐ-(CHR₃CHR₄-O)_{b}-(CHR₅CHR₆-O)_{c}-H wherein R₁ through R₆ can each independently represent hydrogen or methyl; and a, b, and c can each be independently selected from an integer from 0 to 300, wherein a, b and c are selected such that the number average molecular weight of the polyol is less than about 32,000 grams/mole, or less than about 10,000 grams/mole, as determined by GPC. In other non-limiting embodiments a, b, and c each can be independently an integer from 1 to 300. In other non-limiting embodiments, R₁, R₂, R₅, and R₆ can be hydrogen, and R₃ and R₄ each can be independently selected from hydrogen and methyl, with the proviso that R₃ and R₄ are different from one another. In other non-limiting embodiments, R₃ and R₄ can be hydrogen, and R₁ and R₂ each can be independently selected from hydrogen and methyl, with the proviso that R₁ and R₂ are different from one another, and R₅ and R₆ each can be independently selected from hydrogen and methyl, with the proviso that R₅ and R₆ are different from one another.

In some non-limiting embodiments, polyalkoxylated polyols can be represented by the following general formula: 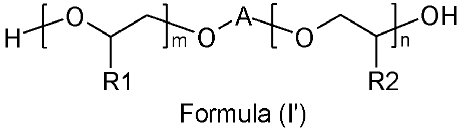 wherein m and n can each be a positive integer, the sum of m and n being from 5 to 70; R₁ and R₂ are each hydrogen, methyl or ethyl; and A is a divalent linking group such as a straight or branched chain alkylene which can contain from 1 to 8 carbon atoms, phenylene, and C₁ to C₉ alkyl-substituted phenylene. The values of m and n can, in combination with the selected divalent linking group, determine the molecular weight of the polyol. Polyalkoxylated polyols can be prepared by methods that are known in the art. In a non-limiting embodiment, a polyol such as 4,4'-isopropylidenediphenol can be reacted with an oxirane-containing material such as ethylene oxide, propylene oxide or butylene oxide, to form what is commonly referred to as an ethoxylated, propoxylated or butoxylated polyol having hydroxyl functionality. Non-limiting examples of polyols suitable for use in preparing polyalkoxylated polyols can include those polyols described in U.S. Patent No. 6,187,444 B1 at column 10, lines 1-20

In some non-limiting embodiments, the polyether polyol can be PLURONIC ethylene oxide/propylene oxide block copolymers, such as PLURONIC R and PLURONIC L62D, and/or TETRONIC tetra-functional block copolymers based on ethylene oxide and propylene oxide, such as TETRONIC R, which are commercially available from BASF Corp. of Parsippany, New Jersey.

As used herein, the phrase "polyether polyols" also can include poly(oxytetramethylene) diols prepared by the polymerization of tetrahydrofuran in the presence of Lewis acid catalysts such as, but not limited to, boron trifluoride, tin (IV) chloride and sulfonyl chloride.

In non-limiting embodiments, the polyurethanes can be free of polyester polyol and/or polyether polyo or comprise less than 10 weight percent of polyester polyol and/or polyether polyol, or less than 5 weight percent of polyester polyol and/or polyether polyol, or less than 2 weight percent of polyester polyol and/or polyether polyol, or is free of polyester polyol and/or polyether polyol, or less than 0.1 equivalents of polyester polyol and/or polyether polyol.

In some non-limiting embodiments, the polyurethane has a hard segment content of 10 to 100 weight percent, or 30 to 70 weight percent. In some non-limiting embodiments, the polyurethane has a urethane content of 20 to 40 weight percent, or 30 to 43 weight percent. In some non-limiting embodiments, the polyurethane has a cyclic content of 10 to 80 weight percent, or 30 to 46 weight percent. In some non-limiting embodiments, the polyurethane has a molecular weight per crosslink of at least 500 grams per mole or more.

In some non-limiting embodiments, the components for preparing the polyurethane and/or prepolymer can further comprise at least one polyol having one or more bromine atoms, one or more phosphorus atoms or combinations thereof. Brominated or phosphonated polyols can provide the polyurethane with enhanced flame retardancy. The flame retardancy of polyurethanes of the present invention can be determined simply by exposure to flame to determine if the polymer is self-extinguishing or burns more slowly than a polymer without the brominated or phosphonated polyol, or according to Underwriter's Laboratory Test UL-94. Alternatively, horizontal and vertical burning rate can be determined according to EC Directive 95/28/EC, Annexes IV and VI respectively. Federal Aviation Regulation (FAR) 25.853(a)(1)(ii), permits a burn length of 8 inches and flame time of 15 seconds.

Non-limiting examples of suitable polyols having one or more bromine atoms, one or more phosphorus atoms or combinations thereof include 4,4'-isopropylidene bis(2,6-dibromophenol), isopropylidene bis[2-(2,6-dibromo-phenoxy)ethanol], bis(4-(2-hydroxyethoxy)-3,5-dibromophenyl) sulfone heptakis(dipropylene glycol) triphosphite, tris(dipropylene glycol) phosphate, diethyl-N,N-bis(2-hydroxyethyl) aminoethanol phosphonate and mixtures thereof. Non-limiting examples of suitable phosphonated polyols include those of the formula HO-Y-O[POOR-O-Y-O][POOR-O-Y-OH, wherein each R is independently selected from an alkylene group having 1 to 10 repeat units, such as CH₂ to (CH₂)₁₀ and each Y is independently selected from an alkylene group having 1 to 6 repeat units, such as CH₂ to (CH₂)₆.

The amount of brominated polyols and/or phosphonated polyols used to form the polyurethane of can be 0.01 to 0.9 equivalent, or 0.1 to 0.9 equivalent, or 0.1 to 0.3 equivalent, based upon the 1 equivalent of polyisocyanate.

In some non-limiting embodiments, the components for preparing the polyurethane and/or prepolymer can further comprise one or more of the following: polyurethane polyols, (meth)acrylamides, hydroxy(meth)acrylamides, polyvinyl alcohols, polymers containing hydroxy functional (meth)acrylates, polymers containing allyl alcohols, dihydroxy oxamides, dihydroxyamides, dihydroxypiperidines, dihydroxy phthalates, dihydroxyethyl hydroquinones, polyesteramides and mixtures thereof. These additional components may or may not react with the other reaction components. In some embodiments, polymerization with acrylamides can form an interpenetrating network having high transparency, good impact strength, and high Young's Modulus.

Non-limiting examples of suitable polyurethane polyols include the reaction product of an excess of polyisocyanate and a branched or straight chain polyol. The equivalent ratio of polyisocyanate to polyol can range from 1.0:0.05 to 1.0:3, or 1.0:0.7. The amount of polyurethane polyols used can range from 1 to 90 weight percent, 5 to 70 weight percent, or 20 to 50 weight percent on a basis of total weight of the components.

Non-limiting examples of suitable acrylamides include acrylamide, methacrylamide and dimethylacrylamide. The acrylamide can be added with all of the other reaction components, or it can be dissolved in the diol and then mixed with the other reaction components. The amount of acrylamide used can range from 5 to 70 weight percent, 10 to 50 weight percent, or 10 to 30 weight percent on a basis of total weight of the components.

Non-limiting examples of suitable polyvinyl alcohols include polyvinyl alcohol. The amount of polyvinyl alcohol used can range from 5 to 90 weight percent, 10 to 70 weight percent, or 10 to 40 weight percent on a basis of total weight of the components.

Non-limiting examples of suitable polymers containing hydroxy functional (meth)acrylates include hydroxypropylacrylate; hydroxyethylacrylate; hydroxypropylmethacrylate; hydroxyethylmethacrylate; and copolymers of hydroxy functional (meth)acrylates with acrylamides, cyanoethyl(meth)acrylates, methylmethacrylates, methacrylates, ethacrylates, propylacrylates and vinylpyrrolidinone. The amount of hydroxy functional (meth)acrylates used can range from 10 to 90 weight percent, 10 to 70 weight percent, or 10 to 30 weight percent on a basis of total weight of the components.

Non-limiting examples of suitable polymers containing allyl alcohols include diethylene glycol bis(allylcarbonate), allyloxytrimethylsilane, and diallylcarbonate. The amount of allyl alcohols used can range from 5 to 70 weight percent, 10 to 50 weight percent, or 10 to 30 weight percent.

Non-limiting examples of suitable polyesteramides include esteramide polymers obtained by the reaction of bis-oxamidodiols such as N,N'-bis(omega-hydroxyalkylene)oxamide with a dicarboxylic acid or diester such as diethyl oxalate, diethyl succinates, diethyl suberate, or dimethyl terephthalate. The amount of polyesteramides used can range from 10 to 80 weight percent, 20 to 60 weight percent, or 30 to 50 weight percent on a basis of total weight of the components.

In some non-limiting embodiments, the components for preparing the polyurethane and/or prepolymer can further comprise one or more amine curing agents. The amine curing agent, if present, can act as a catalyst in the polymerization reaction, be incorporated into the resulting polymerizate and can form poly(ureaurethane)s. The amount of amine curing agent used can range from 0.05 to 0.9 equivalents, 0.1 to 0.7 equivalents, or 0.3 to 0.5 equivalents.

Non-limiting examples of such amine curing agents include aliphatic polyamines, cycloaliphatic polyamines, aromatic polyamines and mixtures thereof. In some non-limiting embodiments, the amine curing agent can have at least two functional groups selected from primary amine (-NH₂), secondary amine (-NH-) and combinations thereof. In some non-limiting embodiments, the amine curing agent can have at least two primary amine groups. In some non-limiting embodiments, the amino groups are all primary groups.

Examples of such amine curing agents include compounds having the following formula: 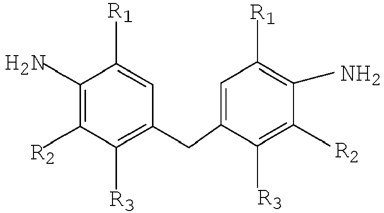 wherein R₁ and R₂ are each independently selected from methyl, ethyl, propyl, and isopropyl groups, and R₃ is selected from hydrogen and chlorine, such as the following compounds manufactured by Lonza Ltd. (Basel, Switzerland): LONZACURE^{®} M-DIPA, in which R₁=C₃ H₇; R₂=C₃ H₇; R₃=H; LONZACURE^{®} M-DMA, in which R₁=CH₃; R₂=CH₃; R₃=H; LONZACURE^{®} M-MEA, in which R₁=CH₃; R₂=C₂ H₅; R₃=H; LONZACURE^{®} M-DEA, in which R₁=C₂ H₅; R₂=C₂ H₅; R₃=H; LONZACURE^{®} M-MIPA,: in which R₁=CH₃; R₂=C₃ H₇; R₃=H; and LONZACURE^{®} M-CDEA, in which R₁=C₂ H₅; R₂=C₂ H₅; R₃=Cl, each of which is commercially available from Air Products and Chemicals, Inc. of Allentown, PA.

Such amine curing agents can include a diamine curing agent such as 4,4'-methylenebis(3-chloro-2,6-diethylaniline), (LONZACURE^{®} M-CDEA); 2,4-diamino-3,5-diethyl-toluene, 2,6-diamino-3,5-diethyl-toluene and mixtures thereof (collectively "diethyltoluenediamine" or "DETDA"), which is commercially available from Albemarle Corporation under the trade name ETHACURE 100; dimethylthiotoluenediamine (DMTDA) (commercially available as ETHACURE 300); the color stabilized version of ETHACURE 100 (i.e., formulation which contains an additive to reduce yellow color), which is available under the name ETHACURE 100S; 4,4'-methylene-bis-(2-chloroaniline) (commercially available from Kingyorker Chemicals under the trade name MOCA). DETDA can be a liquid at room temperature with a viscosity of 156 centipoise (cP) (156 mPa·s) at 25°C. DETDA can be isomeric, with the 2,4-isomer amount being from 75 to 81 percent while the 2,6-isomer amount can be from 18 to 24 percent.

Other non-limiting examples of amine curing agents include ethyleneamines, such as ethylenediamine (EDA), diethylenetriamine (DETA), triethylenetetramine (TETA), tetraethylenepentamine (TEPA), pentaethylenehexamine (PEHA), piperazine, morpholine, substituted morpholine, piperidine, substituted piperidine, diethylenediamine (DEDA), and 2-amino-1-ethylpiperazine. In some non-limiting embodiments, the amine curing agent can be selected from one or more isomers of C₁-C₃ dialkyl toluenediamine, such as 3,5-dimethyl-2,4-toluenediamine, 3,5-dimethyl-2,6-toluenediamine, 3,5-diethyl-2,4-toluenediamine, 3,5-diethyl-2,6-toluenediamine, 3,5-diisopropyl-2,4-toluenediamine, 3,5-diisopropyl-2,6-toluenediamine, and mixtures thereof. In some non-limiting embodiments, the amine curing agent can be methylene dianiline or trimethyleneglycol di(paraaminobenzoate).

Other non-limiting examples of amine curing agents include compounds of the following general structures (XIII-XV):

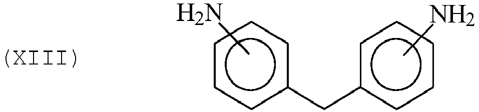

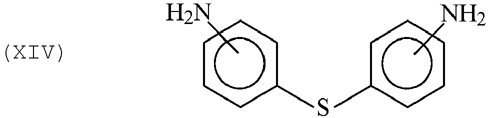

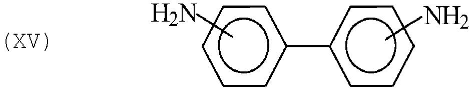

Other non-limiting examples of amine curing agents include one or more methylene bis anilines, one or more aniline sulfides, and/or one or more bianilines, and other amine curing agents such as are disclosed in U.S, Patent Application Publication No. 2009/0280709, incorporated by refemec herein.

In an embodiment wherein it is desirable to produce a poly(ureaurethane) having low color, the amine curing agent can be selected such that it has relatively low color and/or it can be manufactured and/or stored in a manner as to prevent the amine from developing a color (e.g., yellow).

In some non-limiting embodiments, the polyurethanes can be free of amine curing agent or comprise less than 10 weight percent of amine curing agent, or less than 5 weight percent of amine curing agent, or less than 2 weight percent of amine curing agent, or in other non-limiting embodiments are free of amine curing agent.

In other non-limiting embodiments, the polyurethane can be prepared by reacting polyisocyanate(s) and polyol(s) to form a polyurethane prepolymer and then introducing other polyol(s), polythiol(s), polyisocyanates, and optionally catalyst and other optional reaction components.

In other non-limiting embodiments, the polyurethane can be prepared by reacting polyisocyanate(s) and polyol(s) to form an isocyanate functional urethane prepolymer and then introducing diol(s), polyols and optionally catalyst and other optional reaction components. In some non-limiting embodiments, the isocyanate functional urethane prepolymer, polyol and other reaction components, upon mixing, are maintained at a temperature of at least 100°C for at least 10 minutes, or at least 110°C, or at least 120°C, or at least 130°C, or at least 140°C, for at least 3 seconds to two hours or more, at least 10 minutes, at least 20 minutes, or at least 30 minutes, or at least an hour. In some non-limiting embodiments, upon mixing, the components are maintained at a temperature of at least 100°C, or at least 105°C, or at least 110°C for at least 10 minutes, at least 20 minutes, or at least an hour, as described below.

In some non-limiting embodiments, the prepolymer and polyurethane can be prepared using a Max Urethane Processing System having a dynamic pin mixer, such as a Max Urethane Processing System Model No. 601-000-282 or Model No. 601-000-333 available from Max Machinery, Inc. of Healdsburg, CA. The mixing head or chamber volume can be varied as desired, for example 8 cc, 62 cc, 70 cc, 140 cc, 205 cc or 250 cc. The Max Urethane Processing System is used to heat the raw materials to the specified temperatures desired, maintain the temperature of the raw materials delivered to the mix head, degass each component, and deliver the specified quantities of each raw material to a dynamic pin mixer for blending and dispensing. See "Max Urethane Processing System", a publication of Max Machinery, Inc. (2005). The dynamic pin mixers can run at 3,000 to 12,000 RPM. The system can be continuous or synchronized to the dispensing pour. In some embodiments, increased residence time of the reactants in the mix head can provide improved physical properties, such as Young's Modulus and Gardner Impact strength. For some embodiments, a residence time of 0.5 seconds to 30 minutes, 4 seconds to 30 minutes, or 4 seconds to 15 minutes, or 4 seconds to 1 minute, or 4 to 30 seconds, or 4 to 15 seconds, or 4 to 8 seconds can be desirable.

In some non-limiting embodiments, the aforementioned ingredients each can be degassed prior to reaction. In some non-limiting embodiments, the prepolymer can be degassed, the difunctional material can be degassed, and then these two materials can be combined. One or more of the reactants can be preheated to a temperature of at least 100°C, at least 110°C, or at least 120°C, prior to reaction. The components can be cured after degassing.

In some non-limiting embodiments, wherein a window can be formed, the polymerizable mixture which can be optionally degassed can be introduced into a mold and the mold can be heated (i.e., thermal cure cycle) using a variety of conventional techniques known in the art. The thermal cure cycle can vary depending on the reactivity and molar ratio of the reactants. In a non-limiting embodiment, the thermal cure cycle can include heating the mixture of prepolymer and diol and optionally diol and dithiol from room temperature to a temperature of 200°C over a period of from 0.5 hour to 72 hours; or from 80°C to 150°C for a period of from 5 hours to 48 hours.

The isocyanate and polyol can be reacted together to form a polyurethane prepolymer and the prepolymer can be reacted with more of the same or a different polyol(s) and/or diol(s) to form a polyurethane or sulfur-containing polyurethane. The prepolymer and diol(s) can be heated so as to reduce the prepolymer viscosity to 200 cp (200 mPa·s) or at most a few thousand centipoise (mPa·s) so as to aid in mixing. As in the bulk polymerization, reaction should be conducted under anhydrous conditions with dry reactants. The reactants can be preheated to a temperature of at least 100°C, at least 110°C, or at least 120°C prior to reaction. Upon mixing, the reactants can be maintained at a temperature of at least 100°C, at least 110°C or at least 120°C for at least 10 minutes to at least 2 hours, to facilitate reaction, prior to degassing and curing. Upon mixing, the mixture can be maintained at a pressure of ranging from 2 to 6 mm Hg (266.6 to 800 Pascal (Pa)), or 266.6 Pa for a time period of 10 minutes to 24 hours, or 10 minutes to 4 hours.

In some non-limiting embodiments, the present invention provides a process for preparing a polyurethane article comprising: (a) heating a mixture of 1 equivalent of at least one polyisocyanate and 0.1 to 0.4 equivalent of at least one polycarbonate polyol based upon the 1 equivalent of the at least one polyisocyanate, to a temperature of 110°C to 130°C for at least an hour to form a reaction product; (b) mixing the reaction product (a) with 0.5 to 0.8 equivalent of trimethylolpropane and 0.1 to 0.5 equivalent of butanediol, pentanediol or cyclohexane dimethanol, based upon the 1 equivalent of the at least one polyisocyanate, until the mixture reaches a temperature of at least 110°C to 130°C, optionally by heating if necessary; (c) casting the reaction product into a mold preheated to a temperature of at least 100°C to 130°C; and (d) curing the reaction product at a first predetermined temperature of 100°C to 120°C for at least 0.5 hours; and then at a second predetermined temperature of 140°C to 180°C for 15 to 30 hours.

In some non-limiting embodiments, upon mixing, the components are maintained at a temperature of at least 100°C, or at least 105°C, or at least 110°C for at least 10 minutes or at least 20 minutes prior to degassing and/or curing in a manner such as is discussed above.

The polyurethane prepolymer can have a number average molecular weight (Mn) of less than 50,000 grams/mole, or less than 20,000 grams/mole, or less than 10,000 grams/mole, or less than 5,000 grams/mole, or at least 1,000 grams/mole or at least 2,000 grams/mole, inclusive of any range in between.

When polyurethane-forming components, such as polyols and isocyanates, are combined to produce polyurethanes, the relative amounts of the ingredients are typically expressed as a ratio of the available number of reactive isocyanate groups to the available number of reactive hydroxyl groups, i.e., an equivalent ratio of NCO:OH. For example, a ratio of NCO:OH of 1.0:1.0 is obtained when the weight of one NCO equivalent of the supplied form of the isocyanate component is reacted with the weight of one OH equivalent of the supplied form of the organic polyol component. The polyurethanes of the present invention can have an equivalent ratio of NCO:OH ranging from 0.9:1.0 to 1.1:1.0, or 1.0:1.0.

In some non-limiting embodiments, when the isocyanate and polyol are reacted to form a prepolymer, the isocyanate is present in excess, for example the amount of isocyanate and the amount of polyol in the isocyanate prepolymer can be selected such that the equivalent ratio of (NCO):(OH) can range from 1.0: 0.05 to 1.0:0.7.

The ratio and proportions of the diol and the polyol can affect the viscosity of the prepolymer. The viscosity of such prepolymers can be important, for example when they are intended for use with coating compositions, such as those for flow coating processes. The solids content of such prepolymers, however, also can be important, in that higher solids content can achieve desired properties from the coating, such as weatherability, scratch resistance, etc. In conventional coatings, coating compositions with higher solids content typically require greater amounts of solvent material to dilute the coating in order to reduce the viscosity for appropriate flow coating processes. The use of such solvents, however, can adversely affect the substrate surface, particularly when the substrate surface is a polymeric material. In the present invention, the viscosity of the prepolymer can be appropriately tailored to provide a material with lower viscosity levels at higher solids content, thereby providing an effective coating without the need for excessive amounts of solvents which can deleteriously affect the substrate surface.

In some non-limiting embodiments in which optional amine curing agent is used, the amount of isocyanate-terminated polyurethane prepolymer or sulfur-containing isocyanate-terminated polyurethane prepolymer and the amount of amine curing agent used to prepare sulfur-containing polyurethane can be selected such that the equivalent ratio of (NH + SH + OH) : (NCO) can range from 0.80: 1.0 to 1.1:1.0, or from 0.85: 1.0 to 1.0:1.0, or from 0.90: 1.0 to 1.0:1.0, or from 0.90: 1.0 to 0.95: 1.0, or from 0.95: 1.0 to 1.0:1.0.

In some non-limiting embodiments, the amount of isothiocyanate or isothiocyanate/isocyanate terminated sulfur-containing polyurethane prepolymer and the amount of amine curing agent used to prepare sulfur-containing polyureaurethane can be selected such that the equivalent ratio of (NH + SH + OH) : (NCO + NCS) can range from 0.80:1.0 to 1.1:1.0, or from 0.85:1.0 to 1.0:1.0, or from 0.90: 1.0 to 1.0:1.0, or from 0.90: 1.0 to 0.95: 1.0, or from 0.95: 1.0 to 1.0:1.0.

It is believed that the unusual energy absorption properties and transparency of the polyurethanes of the present invention may not only be dependent upon the urethane ingredients and proportions, but also may be dependent on the method of preparation. More particularly, it is believed that the presence of polyurethane regular block segments may adversely affect the polyurethane transparency and energy absorption properties and, consequently, it is believed that random segments within the polymer can provide optimal results. Consequently, whether the urethane contains random or regular block segments depends upon the particular reagents and their relative reactivity as well as the conditions of reaction. Generally speaking, the polyisocyanate will be more reactive with a low molecular weight diol or polyol, for example, 1,4-butanediol, than with a polymeric polyol and, hence, in some non-limiting embodiments, it is desirable to inhibit the preferential reaction between the low molecular weight diol or polyol and the polyisocyanate such as by rapidly adding the polyisocyanate to an intimate mixture of the low molecular weight diol or polyol and polymeric polyol with vigorous agitation, such as at a temperature of at least 75°C when no catalyst is employed, and then, upon mixing, maintained at temperature of reaction of at least 100°C or 110°C after the exotherm has subsided. When a catalyst is employed, the initial mixing temperature can be lower, such as 60°C, so that the exotherm does not carry the temperature of the mixture substantially above the reaction temperature desired. Inasmuch as the polyurethanes are thermally stable, however, reaction temperatures can reach as high as 200°C and as low as 60°C, and in some non-limiting embodiments, ranging from 75°C to 130°C when a catalyst is employed, or ranging from 80°C to 100°C. When no catalyst is employed, in some non-limiting embodiments the reaction temperature can range from 130°C to 150°C.

It is also desirable, upon mixing, to rapidly attain reaction temperatures after a homogeneous mixture is obtained when a catalyst is not employed, so that the polymer does not become hazy due to phase separation. For example, some mixtures can become hazy in less than one-half hour at less than 80°C without catalyst. Thus, it can be desirable either to use a catalyst or introduce the reactants to rapidly reach a reaction temperature above 100°C, or 110°C or 130°C, for example by the use of a high-speed shear mixing head, so that the polymer does not become hazy. Suitable catalysts can be selected from those known in the art. In some non-limiting embodiments, degassing can take place prior to or following addition of catalyst.

In some non-limiting embodiments, a urethane-forming catalyst can be used in the present invention to enhance the reaction of the polyurethane-forming materials. Suitable urethane-forming catalysts include those catalysts that are useful for the formation of urethane by reaction of the NCO and OH-containing materials, and which have little tendency to accelerate side reactions leading to allophonate and isocyanate formation. Non-limiting examples of suitable catalysts are selected from the group of Lewis bases, Lewis acids and insertion catalysts as described in Ullmann's Encyclopedia of Industrial Chemistry, 5th Edition, 1992, Volume A21, pp. 673 to 674.

In some non-limiting embodiments, the catalyst can be a stannous salt of an organic acid, such as stannous octoate or butyl stannoic acid. Other non-limiting examples of suitable catalysts include tertiary amine catalysts, tertiary ammonium salts, tin catalysts, phosphines or mixtures thereof. In some non-limiting embodiments, the catalysts can be dimethyl cyclohexylamine, dibutyl tin dilaurate, dibutyltin diacetate, dibutyltin mercaptide, dibutyltin diacetate, dibutyl tin dimaleate, dimethyl tin diacetate, dimethyl tin dilaurate, 1,4-diazabicyclo[2.22]octane, bismuth carboxylates, zirconium carboxylates, zinc octoate, ferric acetylacetonate and mixtures thereof. The amount of catalyst used can vary depending on the amount of components, for example 10 ppm to 600 ppm.

In alternate non-limiting embodiments, various additives can be included in compositions comprising the polyurethane(s) of the present invention. Such additives include light stabilizers, heat stabilizers, antioxidants, colorants, fire retardants, ultraviolet light absorbers, light stabilizers such as hindered amine light stabilizers, mold release agents, static (non-photochromic) dyes, fluorescent agents, pigments, surfactants, flexibilizing additives, such as but not limited to alkoxylated phenol benzoates and poly(alkylene glycol) dibenzoates, and mixtures thereof. Non-limiting examples of anti-yellowing additives include 3-methyl-2-butenol, organo pyrocarbonates and triphenyl phosphite (CAS Registry No. 101-02-0). Examples of useful antioxidants include IRGANOX 1010, IRGANOX 1076, and IRGANOX MD 1024, each commercially available from Ciba Specialty Chemicals of Tarrytown, New York. Examples of useful UV absorbers include CYASORB UV 5411, TINUVIN 130 and TINUVIN 328 commercially available Ciba Specialty Chemicals, and SANDOVAR 3206 commercially available from Clariant Corp. of Charlotte, North Carolina. Examples of useful hindered amine light stabilizers include SANDOVAR 3056 commercially available from Clariant Corp. of Charlotte, North Carolina Examples of useful surfactants include BYK 306 commercially available from BYK Chemie of Wesel, Germany.

Such additives can be present in an amount such that the additive constitutes less than 30 percent by weight, or less than 15 percent by weight, or less than 5 percent by weight, or less than 3 percent by weight, based on the total weight of the polymer. In some non-limiting embodiments, the aforementioned optional additives can be pre-mixed with the polyisocyanate(s) or isocyanate functional prepolymer. In other non-limiting embodiments, the optional additives can be pre-mixed with the polyol(s) or urethane prepolymer.

### Polv(ureaurethanes)

Poly(ureaurethane)s can be prepared from any of the above polyurethanes by including one or more amine curing agents in the reaction components. The amine functionality of the amine curing agent can react with isocyanate groups to form urea linkages or units within the polyurethane matrix. Suitable amounts of amine curing agents and reaction conditions are discussed in detail above.

Optionally, the components further comprise 0.01 to 0.5 equivalent, or 0.01 to 0.1 equivalent, of water based upon the 1 equivalent of the at least one polyisocyanate. The water can be reacted with the isocyanate functional prepolymer, and/or included in the reaction of the isocyanate functional prepolymer and polyol (b), as desired, to form a poly(ureaurethane). The reaction synthesis can be as described above with respect to Poly(ureaurethane) Synthesis B.

### Poly(ureaurethane) Synthesis B

As shown generally in Poly(ureaurethane) Synthesis B below, in other non-limiting embodiments urea linkages or units can be formed within the polyurethane matrix to the extent desired by reacting polyisocyanate(s) and a portion of the polyol(s) to form at least one isocyanate functional urethane prepolymer, and then reacting the isocyanate functional urethane prepolymer(s) with water. As shown in Step 1 of the reaction scheme of Poly(ureaurethane) Synthesis B below, a portion of the polyol(s) and/or diol(s) can be reacted with polyisocyanate(s) to form the at least one isocyanate functional urethane prepolymer. It is desirable to use excess isocyanate to ensure essentially complete conversion of the hydroxyl groups to urethane groups.

The isocyanate shown in Step 1 is a diisocyanate in which R is any linking group, such as aliphatic, cycloaliphatic, aromatic, heterocycle, etc. as described in detail above. However, one skilled in the art would understand that the isocyanate can have one or more, two or more, three or more or a higher number of isocyanate functional groups, as desired. Examples of suitable isocyanates can be any of the polyisocyanates discussed above. In some non-limiting embodiments, the polyisocyanate is one or more aliphatic polyisocyanates. In some non-limiting embodiments, the polyisocyanate is 4,4'-methylene-bis-(cyclohexyl isocyanate) (such as DESMODUR W).

The polyol shown in Step 1 is one or more polycarbonate polyols. Optionally, one or more catalysts such as are described above can be used to facilitate the reaction. The polyisocyanate can be reacted with the polyol to form the isocyanate functional urethane prepolymer by charging the reactants into a kettle and adding 10 ppm or more of catalyst, such as a tin, bismuth or zirconium catalyst. In some non-limiting embodiments, upon mixing, the components are maintained at a temperature of at least 100°C, or at least 105°C, or at least 110°C for at least 10 minutes or at least 20 minutes, , prior to degassing and cure, as described herein. The mixture can be heated to a temperature of 100°C or 110°C for 2 to 4 hours until all of the hydroxyl functionality is reacted. FTIR spectroscopy can be used to determine the extent of reaction.

Urea linkages or units can be formed within the polyurethane matrix to the extent desired by reacting isocyanate functional groups of the isocyanate functional urethane prepolymer with water. As shown in Step 2 of the reaction scheme of Poly(ureaurethane) Synthesis B below, isocyanate functional groups are converted to carbamate functional groups by the reaction with water. In some non-limiting embodiments, the equivalent ratio of NCO: water ranges from 1:0.05 to 1:0.7, or 1:0.05 to 1:0.5, or 1:0.05 to 1:0.3.

Removal of carbon dioxide facilitates conversion of the carbamate groups into amine groups. Excess isocyanate is desirable to ensure essentially complete consumption of the water. Also, it is desirable to remove essentially all of the carbon dioxide generated to facilitate conversion to amine groups. To prevent the removal of water under vacuum, the reaction can be started at a temperature of 25°C, then raised to a temperature of 60°C while applying vacuum to remove the carbon dioxide. After cessation of carbon dioxide formation, the reaction temperature can be increased to 100°C or 110°C for 2 to 4 hours.

As discussed above, certain amine curing agents (such as aliphatic amine curing agents) are highly reactive and impractical to use under normal production conditions. By forming the amine in situ as discussed above and shown in Step 2, amines can be generated in situ that normally are not practical to use under normal production conditions without formation of undesirable side products. Also, the rate of reaction can be more easily regulated. This reaction can be used for any type of polyisocyanate described above, but is especially useful for converting aliphatic polyisocyanates to amines as described above.

As shown in Step 3 below, the amine formed in situ reacts with another isocyanate to form a urea group. Use of excess polyisocyanate permits formation of an isocyanate functional ureaurethane prepolymer. The isocyanate functional ureaurethane prepolymer can be prepared by reacting a stoichiometric excess of the polyisocyanate with the amine under substantially anhydrous conditions at a temperature ranging from 25°C and 150°C or 110°C until the reaction between the isocyanate groups and the amine groups is substantially complete. The polyisocyanate and amine components are suitably reacted in such proportions that the ratio of number of isocyanate groups to the number of amine groups is in the range of 1:0.05 to 1:0.7, or within the range of 1:0.05 to 1:0.3.

As shown in Step 4 of the reaction scheme of Poly(ureaurethane) Synthesis B below, the isocyanate functional ureaurethane prepolymer can be reacted with another portion of polyol to form the poly(ureaurethane)s of the present invention. The polyol shown in Step 4 can be a diol, triol or higher hydroxyl functional material as described above in which R is any linking group, such as aliphatic, cycloaliphatic, aromatic, heterocycle, etc. as described in detail above with respect to the polyols. Examples of suitable polyols can be any of the polyols discussed above. In some non-limiting embodiments, the polyol can be trimethylolpropane and butanediol and/or pentanediol. Suitable amounts of polyols for reacting with the isocyanate functional ureaurethane prepolymer as polyisocyanate are discussed in detail above.

The isocyanate functional ureaurethane prepolymer can be reacted with the other portion of polyol under substantially anhydrous conditions at a temperature ranging from 120°C to 160°C until the reaction between the isocyanate groups and the hydroxyl groups is substantially complete. In some non-limiting embodiments, upon mixing, the components are maintained at a temperature of at least 100°C, or at least 105°C, or at least 110°C for at least 10 minutes or at least 20 minutes, prior to degassing and cure, as described herein. The isocyanate functional ureaurethane prepolymer and polyol(s) and/or diol(s) components are suitably reacted in such proportions that the ratio of number of isocyanate groups to the number of hydroxyl groups is in the range of 1.05:1 to 1:1 In the poly(ureaurethane) of Group K, y can range from 1 to 500 or higher, or 1 to 200.

The cure temperature depends upon the glass transition temperature of the final polymer. In some embodiments, for complete cure the cure temperature should be greater than the glass transition temperature. For example, the cure temperature can range from 140°C to 180°C or 143°C to 180°C.

### Poly(ureaurethane) Synthesis B

### Step 1

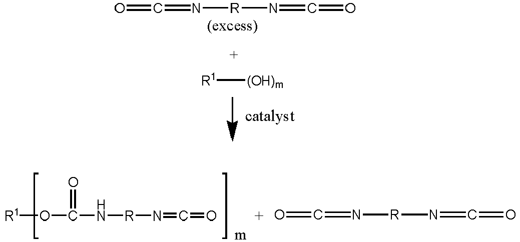

### Step 2

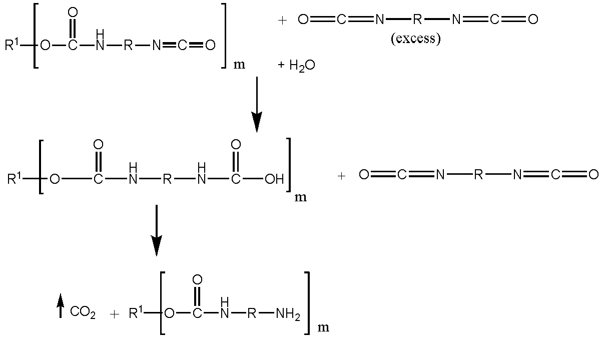

### Step 3

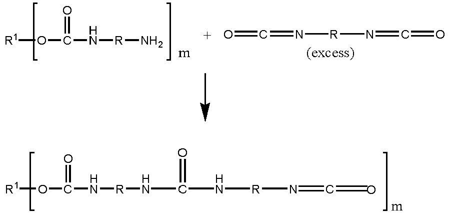

### Step 4

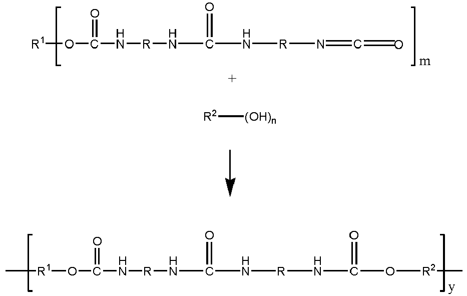

In some non-limiting embodiments, the present invention provides polyurethane materials comprising a first portion of crystalline polyurethane particles having self-orientation and bonded together to fix their orientation along a first crystallographic direction and a second portion of polyurethane crystalline particles having self-orientation and bonded together to fix their orientation along a second crystallographic direction, the first crystallographic direction being different from the second crystallographic direction, wherein said crystalline particles comprise at least 30% of the total volume of the polyurethane material.

The particles interact with one another or with a substrate surface to align their crystallographic axes in one, two or three dimensions. As used herein, "align" or "aligned" with respect to the crystalline particles means that the particles of that crystalline portion are arranged in an array of generally fixed position and orientation. The preferred degree of alignment will depend on the intended application for the material. For purposes of alignment, it is desirable that the particles have uniform shapes with dominant planar surfaces in a suitable orientation, such as perpendicular to or parallel to, with respect to the desired direction of alignment.

In some non-limiting embodiments, the first portion of the crystalline particles is aligned in two dimensions. In some non-limiting embodiments, the first portion of the crystalline particles is aligned in three dimensions. In some embodiments, the crystalline particles are aligned along a distance ranging from 1 nm to 50 nm along any direction.

In some non-limiting embodiments, the second portion of the crystalline particles is aligned in two dimensions. In some non-limiting embodiments, the second portion of the crystalline particles is aligned in three dimensions.

The crystalline particles of the present invention have at least "Self-Aligning" morphologies. As used herein, "Self-Aligning" morphologies include any particles that are capable of self-organizing to form a polycrystalline structure wherein the single particles are aligned along at least one crystallographic direction into areas of higher density and order, for example like lamellae. Examples of crystal particle morphologies with Self-Aligning morphologies include cubic particles, hexagonal platelets, hexagonal fibers, rectangular platelets, rectangular particles, triangular platelets, square platelets, tetrahedral, cube, octahedron and mixtures thereof.

Self-Aligning morphologies may establish an orientation that could be up to 10 degrees from the desired alignment direction, yet still sufficiently capture the desired properties. Thus, particles having such morphologies include particles that essentially have the desired morphology. For instance, for particles that are cubes, the particles need not be perfect cubes. The axes need not be at perfect 90 degree angles, nor exactly equal in length. Corners may also be cut off of the particles. Furthermore, "cube" or "cubic" is intended to refer to morphology, and is not intended to limit the particles to cubic crystal systems. Instead, single crystal particles that have orthorhombic, tetragonal or rhombohedral crystal structure may also be employed as cubes if they possess the defined cubic morphology. In other words, any essentially orthogonal single crystal particles in which the faces are essentially square, essentially rectangular, or both, that possess an essentially cubic morphology are considered cubes for purposes of the present invention.

The crystalline particles can be aligned in monolithic structures consisting of a single layer of crystals or multiple layers of crystals. The layer or layers are generally planar, although the layers can conform to curved surfaces or complex geometries depending on the shape of the supporting substrate material during formation and curing of the polyurethane.

The polycrystalline materials of the present invention are prepared by packing and aligning a plurality of single crystal particles into an aligned array to achieve one, two and three-dimensional alignment. In some non-limiting embodiments, the particles can self-assemble into arrays upon aging or heat treatment. In some non-limiting embodiments, to obtain a level of solid state diffusion sufficient to bind together adjacent particles, a temperature above about half of the melting temperature is required, which is most generally in the range of 35°C to 100°C. The temperature range selected will depend upon the material being bonded, but can be readily determined by those of ordinary skill in the art without undue experimentation within the defined range. The preparation steps may be repeated to form a polycrystalline material having multiple layers of aligned particles. The resulting material is essentially a three-dimensional object with one, two, or three dimensional alignment of single crystal particles within.

In some non-limiting embodiments, the polyurethane material comprises a monolithic agglomerate of the first portion of the crystalline particles with low-angle grain boundaries therebetween bonded together by a polymer phase.

In some non-limiting embodiments, the polyurethane material comprises a monolithic agglomerate of the second portion of the crystalline particles with low-angle grain boundaries therebetween bonded together by a polymer phase.

In some non-limiting embodiments, the polyurethane material comprises a monolithic agglomerate of the first portion of the crystalline particles with low-angle grain boundaries and a generally amorphous phase therebetween.

In some non-limiting embodiments, the polyurethane material comprises a monolithic agglomerate of the second portion of the crystalline particles with low-angle grain boundaries and a generally amorphous phase therebetween.

In some non-limiting embodiments, the thickness of the first portion of crystalline particles is less than 50 nanometers. In some non-limiting embodiments, the thickness of the second portion of crystalline particles is less than 50 nanometers. The length and width, respectively, of the first portion can vary, for example 4 nm by 8 nm.

In some non-limiting embodiments, the thickness of the first portion of crystalline particles can range from 10 nanometers to 100 nanometers. In some non-limiting embodiments, the thickness of the second portion of crystalline particles can range from 4 nanometers to 50 nanometers. The length and width, respectively, of the second portion can vary, for example 4 nm by 8 nm.

In some non-limiting embodiments, the crystalline particles comprise at least 30% of the total volume of the material. In other non-limiting embodiments, the crystalline particles comprise at least 40%, or at least 50%, or at least 60%, or at least 70%, or at least 80%, or at least 90% of the total volume of the material. The percentage of crystalline particles can be determined using DSC. For example, an article prepared from Formulation 2 as described below, aged at ambient conditions (25°C) for 7 months had a crystallinity of 43% by volume.

In some non-limiting embodiments, the impact resistance of polyurethanes and poly(ureaurethane)s according to the present invention can be improved by aging or heat treatment.

In some non-limiting embodiments, the polyurethane material can be aged for at least 3 days or at least 2 weeks after formation. In some non-limiting embodiments, the polyurethane material can be aged for at least 2 months after formation. In some non-limiting embodiments, the polyurethane material has been aged for at least 7 months after formation.

In some non-limiting embodiments, upon mixing, the components are maintained at a temperature of at least 100°C, or at least 105°C, or at least 110°C for at least 10 minutes or at least 20 minutes, prior to degassing and cure, as discussed herein. In some non-limiting embodiments, the polyurethane material has been heated to a temperature of 90°C to 150°C or 200°F (93°C) to 290°F (143°C) for 1 to 24 hours after formation. In some non-limiting embodiments, the polyurethane is heated at a temperature sufficient to induce grain boundary mobility, so that the particles grow until impingement of adjacent crystal grain boundaries prevent further growth. The net result is a polycrystalline microstructure, the grains of which for all practical purposes are aligned in two or three dimensions so that it performs like a single crystal with respect to some desired property.

Impact resistance or flexibility can be measured using a variety of conventional methods known to those skilled in the art. The flexibility of the materials can be measured by the Gardner Impact Test using a Gardner Variable Impact Tester in accordance with ASTM-D 5420-04, which consists of a 40-inch (101.6 cm) aluminum tube in which an 8- or 16- lb (17.6- or 35.2- kg) weight is dropped from various heights onto a metal dart resting onto the substrate being tested (2 inch by 2 inch by 1/8 inch (5.1 cm by 5.1 cm by 0.3 cm) specimen size. In a non-limiting embodiment, the impact strength results of the Gardner Impact Test of at least 65 in-lb (7.3 Joules) or from 65 in-lb (7.3 Joules) to 640 in-lb (72 joules).

In another embodiment, the impact resistance can be measured using the Dynatup Test in accordance with ASTM-D 3763-02, which consists of a high velocity test with a load cell which measures total energy absorption in the first microseconds of the impact. The impact strength can be measured in Joules. In a non-limiting embodiment, the substrate can have an impact strength of at least 35 Joules or from 35 to 105 Joules.

In some non-limiting embodiments, the present invention provides polyurethane powder coating compositions. The powder coating compositions can be prepared from any of the polyurethanes or poly(ureaurethane)s discussed in detail herein.

Curable powder coating compositions useful in the present invention are typically prepared by first dry blending the polymer, e.g., polyurethane or poly(ureaurethane) polymer, the crosslinking agent (if present), the particles and additives, such as degassing agents, flow control agents and catalysts, in a blender, e.g., a Henshel blade blender. The blender is operated for a period of time sufficient to result in a homogenous dry blend of the materials charged thereto. The homogeneous dry blend is then melt blended in an extruder, e.g., a twin screw co-rotating extruder, operated within a temperature range sufficient to melt but not gel the components.

Optionally, curable powder coating compositions of the present invention may be melt blended in two or more steps. For example, a first melt blend is prepared in the absence of a cure catalyst. A second melt blend is prepared at a lower temperature, from a dry blend of the first melt blend and the cure catalyst. The melt blended curable powder coating composition is typically milled to an average particle size of from, for example, 15 to 30 microns.

Alternatively, the powder coating compositions of the present invention can be prepared by blending and extruding the ingredients as described above, but without the particles. The particles can be added as a post-additive to the formulation by simply mixing the particles into the milled powder coating composition, such as by mixing using a Henschel mixer. In some non-limiting embodiments, the powder coating composition is slurried in a liquid medium, such as water, which may be spray applied.

In some non-limiting embodiments, the polyurethane compositions of the present invention can further comprise one or more types of reinforcing materials. These reinforcing materials can be present in any physical form desired, for example as particles, including but not limited to nanoparticles, agglomerates, fibers, chopped fibers, mats, etc.

The reinforcing materials can be formed from materials selected from the group consisting of polymeric inorganic materials, nonpolymeric inorganic materials, polymeric organic materials, nonpolymeric organic materials, composites thereof and mixtures thereof that are chemically different from the polyurethane or poly(ureaurethane). As used herein, "chemically different" from the polyurethane or poly(ureaurethane) means that the reinforcing material has at least one different atom or has a different arrangement of atoms compared to the polyurethane or poly(ureaurethane).

As used herein, the term "polymeric inorganic material" means a polymeric material having a backbone repeat unit based on an element or elements other than carbon. See James Mark et al., Inorganic Polymers, Prentice Hall Polymer Science and Engineering Series, (1992) at page 5. Moreover, as used herein, the term "polymeric organic materials" means synthetic polymeric materials, semisynthetic polymeric materials and natural polymeric materials, all of which have a backbone repeat unit based on carbon.

An "organic material," as used herein, means carbon-containing compounds wherein the carbon is typically bonded to itself and to hydrogen, and often to other elements as well, and excludes binary compounds such as the carbon oxides, the carbides, carbon disulfide, etc.; such ternary compounds as the metallic cyanides, metallic carbonyls, phosgene, carbonyl sulfide, etc.; and carbon-containing ionic compounds such as metallic carbonates, for example calcium carbonate and sodium carbonate. See R. Lewis, Sr., Hawley's Condensed Chemical Dictionary, (12th Ed. 1993) at pages 761-762, and M. Silberberg, Chemistry The Molecular Nature of Matter and Change (1996) at page 586.

As used herein, the term "inorganic material" means any material that is not an organic material.

As used herein, the term "composite material" means a combination of two or more differing materials. For example a composite particle can be formed from a primary material that is coated, clad or encapsulated with one or more secondary materials to form a composite particle that has a softer surface. In some non-limiting embodiments, particles formed from composite materials can be formed from a primary material that is coated, clad or encapsulated with a different form of the primary material. For more information on particles useful in the present invention, see G. Wypych, Handbook of Fillers, 2nd Ed. (1999) at pages 15-202.

The reinforcing materials suitable for use in the compositions of the invention can comprise inorganic elements or compounds known in the art. Suitable nonpolymeric, inorganic reinforcing materials can be formed from ceramic materials, metallic materials, and mixtures of any of the foregoing. Nonpolymeric, inorganic materials useful in forming the reinforcing materials of the present invention comprise inorganic materials selected from the group consisting of graphite, metals, oxides, carbides, nitrides, borides, sulfides, silicates, carbonates, sulfates, and hydroxides. Suitable ceramic materials comprise metal oxides, metal nitrides, metal carbides, metal sulfides, metal silicates, metal borides, metal carbonates, and mixtures of any of the foregoing. Non-limiting examples of suitable metals include molybdenum, platinum, palladium, nickel, aluminum, copper, gold, iron, silver, alloys, and mixtures of any of the foregoing. Non-limiting examples of metal nitrides are, for example, boron nitride; non-limiting examples of metal oxides are, for example, zinc oxide; non-limiting examples of suitable metal sulfides are, for example, molybdenum disulfide, tantalum disulfide, tungsten disulfide, and zinc sulfide; non-limiting examples of metal silicates are, for example aluminum silicates and magnesium silicates such as vermiculite. In some non-limiting embodiments, the reinforcing material is essentially free of (less than 5 weight percent or less than 1 weight percent) or free of fillers such as sodium carbonate, calcium carbonate, silicates, alginates, carbon black, and metal oxides such as titanium dioxide, silica, and zinc oxide.

In some non-limiting embodiments, the reinforcing materials can comprise a core of essentially a single inorganic oxide such as silica in colloidal, fumed, or amorphous form, alumina or colloidal alumina, titanium dioxide, cesium oxide, yttrium oxide, colloidal yttria, zirconia, e.g., colloidal or amorphous zirconia, and mixtures of any of the foregoing; or an inorganic oxide of one type upon which is deposited an organic oxide of another type. In some non-limiting embodiments, the reinforcing materials should not seriously interfere with the optical properties of the cured composition. As used herein, "transparent" means that the cured coating has a BYK Haze index of less than 50 as measured using a BYK/Haze Gloss instrument.

The composition can comprise precursors suitable for forming silica particles in situ by a sol-gel process. The composition according to the present invention can comprise alkoxy silanes which can be hydrolyzed to form silica particles in situ. For example tetraethylortho silicate can be hydrolyzed with an acid such as hydrochloric acid and condensed to form silica particles. Other useful particles include surface-modified silicas such as are described in U.S. Pat. No. 5,853,809 at column 6, line 51 to column 8, line 43.

Sols, such as an organosols, of reinforcement particles can be used in the present invention. These sols can be of a wide variety of small-particle, colloidal silicas having an average particle size in ranges such as are described below. The colloidal silicas can be surface modified during or after the particles are initially formed. These surface modified silicas may contain on their surface chemically bonded carbon-containing moieties, as well as such groups as anhydrous SiOz groups and SiOH groups, various ionic groups physically associated or chemically bonded within the surface of the silica, adsorbed organic groups, or combinations of any of the foregoing, depending on the characteristics of the particular silica desired. Such surface modified silicas are described in detail in U.S. Pat. No. 4,680,204. Such small particle colloidal silicas are readily available, are essentially colorless and have refractive indices which permit their inclusion in compositions that, without additional pigments or components known in the art to color and/or decrease the transparency of such compositions, result in colorless, transparent compositions or coatings.

Other suitable non-limiting examples of reinforcing materials include colloidal silicas, such as those commercially available from Nissan Chemical Company under the trademark ORGANOSILICASOLS^{™} such as ORGANOSILICASOL^{™} MT-ST, and from Clariant Corporation as HIGHLINK^{™}; colloidal aluminas, such as those commercially available from Nalco Chemical under the trademark NALCO 8676^{®}; and colloidal zirconias, such as those commercially available from Nissan Chemical Company under the trademark HIT-32M^{®}.

In some non-limiting embodiments of the present invention, the reinforcing material is a nanostructure. As used herein, the term "nanostructure" refers to a three dimensional object wherein the length of the longest dimension ranges from 1 nm to 1000 nm, for example, from 1 nm to 500 nm, or from 1 nm to 100 nm, or from 1 to 40 nm.

Nanostructural reinforcing materials can be incorporated into the matrix of a polymer by dispersing pre-made nanostructures, such as for example nanoclays, into the polymer solution. Alternatively or additionally, nanostructural reinforcement materials can be incorporated into the polymer matrix by forming the nanostructures in situ. For example, the nanostructural reinforcement materials can be formed in situ by mixing a precursor solution for the polyurethane or poly(ureaurethane) with a precursor for the nanostructures to form a mixture, forming nanostructures in the matrix of the polymer from the precursor of the nanostructures, and forming a polymer from the precursor solution of the polymer.

As used herein, the phrase "precursor solution for the polyurethane or poly(ureaurethane)" refers to any material that can be used as a starting material to form the polyurethane or poly(ureaurethane), as discussed above.

As used herein, the phrase "precursor for the nanostructures" refers to any material that can be used as a starting material to form the nanostructures.

In some non-limiting embodiments of the invention, a solvent such as water, ethanol, isopropanol, butanol, etc. is added to the mixture.

The nanostructures are formed while the viscosity of the polymer is low so that the nanostructures can incorporate themselves into the matrix of the polymer. The formation of the nanostructures can be initiated using various techniques. In a non-limiting embodiment of the invention, the nanostructures are formed by adjusting the pH of the mixture. An acid or base, such as ammonia, can be used to adjust the pH of the solution. Depending on the exact precursor solution of the polymer and the exact precursor for the nanostructures, there is an optimum pH range in which the nanostructures will form. One of ordinary skill in the art would know what the optimum pH range is based on both precursors.

In another non-limiting embodiment, the mixture can be heated to initiate the formation of the nanoparticles. The mixture can be heated to any temperature provided the mixture is not heated to a temperature above that at which the precursor solution would break down. For example, a precursor solution comprising polyurethane or poly(ureaurethane) cannot be heated above 200°C because that is the temperature at which polyurethane or poly(ureaurethane) begins to decompose. Similarly to the pH range, the optimum temperature range at which the particles will form depends on the exact precursor solution of the polyurethane or poly(ureaurethane) and the exact precursor for the nanostructures. One of ordinary skill in the art would know what the optimum temperature range is based on both precursors. Generally, the higher the temperature to which the mixture is heated and/or the longer the mixture is heated, the larger the size of the nanostructures that will be formed.

In yet another non-limiting embodiment of the invention, forming the nanostructures is accomplished by heating the mixture after the pH of the mixture is adjusted. In a further non-limiting embodiment of the invention, forming the nanostructures is accomplished by heating the mixture and then adjusting the pH of the mixture.

In various other non-limiting embodiments of the invention, the nanostructures can be formed by using one or more of the following: increasing the pressure on the mixture; by changing the concentration of the precursor solution for the polyurethane or poly(ureaurethane); by using an initiator for nanostructure formation; and by seeding (adding no greater than 5% of the desired nanostructure material based on the projected weight of the formed nanostructures as is well known in the art).

The formed nanostructures are charged species. If the pH of the solution was adjusted to cause the formation of the nanostructures, the charge is a result of the pH adjustment. If no pH adjustment was performed during the nanostructure formation step, a polymeric stabilizer such as, but not limited to, sodium polymethacrylate in water and ammonium polymethacrylate in water, which are both commercially available as Darvan^{®} 7 and as Darvan^{®} C, respectively, from R.T. Vanderbilt Company, Inc. in Norwalk, CT can be added to the solution to create the charge.

The third step involves forming the polyurethane or poly(ureaurethane) from a mixture including the precursor solution of the polyurethane or poly(ureaurethane). The formation of the polyurethane or poly(ureaurethane) can be initiated using various techniques (as discussed in detail above) based on the precursor solution of the polyurethane or poly(ureaurethane) and the precursor for the nanostructures.

In another embodiment of the present invention, the second and third steps described above are switched.

The method of making polymers having nanostructures incorporated into the matrix of the polymer according to the present invention is referred to as an "in-situ" process. This means the nanostructures are formed during the same process that produces the polymer as opposed to pre-formed nanostructures being dispersed into a polymer solution.

During some methods of the present invention, ions (cations and/or anions) can form in the mixture. The formed ions and other process variables, such as the pressure of the system in which the mixture is held, can affect the final polymer. For example, the amount of nanostructure formation and the morphology of the nanostructures will vary depending on the types and amount of ions present in the solution.

In the polymer matrix, the nanostructures typically continually approach one another and collide because they possess kinetic energy. Under normal circumstances, some of the nanostructures would become bound together and agglomerate due to various forces such as Van der Waals forces. As discussed above, agglomeration is not desirable because the nanostructures can effectively become regular sized particles and the desired effect of incorporating the nanostructures is reduced.

However, the methods described above can produce polymers having nanostructures in the matrix of the polymer that do not agglomerate to the extent that the performance of the polymer is compromised, for example to improve the thermal stability of the polymer and/or to decrease the chemical activity of the polymer. The nanostructures do not agglomerate because they are stabilized. The stabilization can occur via electrostatic stabilization and/or steric stabilization.

Because the nanostructures in the polymer matrix are similarly charged species, they repel each other. This prevents the nanostructures from coming so close together that they agglomerate. This phenomenon is referred to as electrostatic stabilization.

Because the nanostructures are surrounded by polymer precursor solution when they are formed, the nanostructures lose a degree of freedom which they would otherwise possess as the nanostructures approach each other. This loss of freedom is expressed, in thermodynamic terms, as a reduction in entropy, which provides the necessary barrier to hinder agglomeration. This phenomenon is referred to as steric stabilization. The same principle applies when the method involves forming the polymer before forming the nanostructures.

The concentration of the nanostructures in the polymer matrix can range from 0.1% to 90%, for example from 3% to 85% or from 15% to 80% based on total volume. The nanostructures in the polymer matrix can have the following shapes: spherical, polyhedral-like cubic, triangular, pentagonal, diamond shaped, needle shaped, rod shaped, disc shaped etc. The nanostructures in the polymer matrix can have an aspect ratio of 1:1 to 1: 1,000, for example 1: 1 to 1:100.

Non-limiting examples of suitable nanostructure materials include titania, alumina, indium tin oxide (ITO), antimony tin oxide (ATO), monobutyl tin tri-chloride, indium acetate, and antimony tri-chloride nanostructures incorporated into the polymer matrix is formed. Suitable precursors for titania nanostructures include, but are not limited to, titanium iso-propoxide, titanium (IV) chloride and potassium titanyl oxalate. Suitable precursors for alumina nanostructures include, but are not limited to, aluminum iso-propoxide, aluminum tri-tert-butoxide, aluminum tri-sec-butoxide, aluminum triethoxide, and aluminum pentanedionate. Suitable precursors for zirconia nanostructures include, but are not limited to, zirconium iso-propoxide, zirconium tert-butoxide, zirconium butoxide, zirconium ethoxide, zirconium 2,4-pentanedionate, and zirconium trifluoropentane-dionate.

In the first step, a precursor solution for polyurethane or poly(ureaurethane) is mixed with a precursor for the nanostructures.

In the second step, nanostructures are formed from the precursor of the nanostructures in the polymer matrix. The nanostructure formation can be caused by adjusting the pH of the mixture followed by heating. The pH can be adjusted by introducing an agent, such as ammonia, into the mixture. For ITO nanostructures in a urethane or ureaurethane aqueous solution, the nanostructures begin to form at a pH > 8. After the pH is adjusted, the mixture is heated to a temperature of up to 100°C. Heating the solution to a temperature greater than 100°C may cause the polymer matrix to decompose. As discussed above, heating the mixture for a longer time period can increase the size of the nanostructures.

In the third step, the precursor solution for the polymer is converted to the polymer, as discussed above for forming the polyurethane and poly(ureaurethane).

In a non-limiting embodiment of the invention, the final reinforced polymer is used as an interlayer in a laminated glass transparency for automotive and architectural applications. As is well known in the art, a laminated glass transparency can be manufactured by interposing an interlayer between at least two transparent glass sheets.

In this particular embodiment of the invention, a laminated glass transparency for an automotive and architectural applications embodiment, it is important that the nanostructures do not agglomerate. If the nanostructures were to agglomerate and effectively achieve a diameter of greater than 200 nm, the nanostructures would scatter visible light rays to such an extent that transmittance through the interlayer would be insufficient for the application. A polymer with nanostructures having an acceptable size for the application, can be determined using a "haze value". The haze value is associated with the degree to which transparency is prevented. The larger the nanostructures present in the polymer matrix, the higher the haze value. According to the present invention, laminated glass for automotive and architectural applications has a haze value of less than or equal to 1%, for example, less than or equal to 0.3%, or less than or equal to 0.2%, as measured using a Hazeguard System from BYK-Gardner in Columbia, MD.

In the embodiment where a polyurethane or poly(ureaurethane) is being formed having titania nanostructures incorporated into the polymer matrix, the first step can comprise mixing titanium iso-propoxide with a 1-10 wt% H₂O₂ solution and suitable polyurethane or poly(ureaurethane) precursors as discussed above. The H₂O₂ acts as an initiator for titania nanostructures; particularly, titania nanostructures in the anatase form. Optionally, polymers such as polyoxyethylene (20) sorbitan monooleate commercially available as Tween^{®} 80 from ICI Ltd. (Bridgewater, NJ) can be added to the solution to help stabilize the titania nanostructures.

In the second step, the titania nanostructures are formed from the precursor by heating the mixture to a temperature of up to 100°C.

In the third step, the precursor solution for the polymer is converted into polyurethane or poly(ureaurethane) as discussed in detail above.

In a non-limiting embodiment of the invention, polyurethane or poly(ureaurethane) having titania, alumina, or zirconia nanostructures incorporated into the matrix of the polymer can be used as an optical lens. A polymer with nanostructures having an acceptable size for optical lens applications can be determined using a "haze value". According to the present invention, an optical lens has a haze value of less than or equal to 0.5%, for example less than or equal to 0.2%, as measured using a Hazeguard System from BYK Gardner.

In other non-limiting embodiments, the reinforcement material is a nanostructural reinforcement material formed in situ by swelling the polyurethane in a solvent comprising a precursor for the nanostructures, and forming nanostructures in the matrix of the polyurethane from the precursor of the nanostructures. Non-limiting examples of suitable solvents for mild swelling of the polymer include methanol, propylene glycol methyl ether such as DOWANOL PM (commercially available from Dow Chemical Co. of Midland, Michigan), diacetone alcohol, 2-propanol, 1-propanol and acetylpropanol.

A polymer with nanostructures having an acceptable size for the aircraft window application can be determined using a "haze value". According to the present invention, a laminated aircraft window has a haze value of less than or equal to 1%, for example less than or equal to 0.5%, as measured using a Hazeguard System from BYK Gardner.

In some non-limiting embodiments of the present invention, the reinforcing materials have a hardness value greater than the hardness value of materials that can abrade a polymeric coating or a polymeric substrate. Examples of materials that can abrade the polymeric coating or polymeric substrate include, but are not limited to, dirt, sand, rocks, glass, carwash brushes. The hardness values of the particles and the materials that can abrade the polymeric coating or polymeric substrate can be determined by any conventional hardness measurement method, such as Vickers or Brinell hardness, or can be determined according to the original Mohs' hardness scale which indicates the relative scratch resistance of the surface of a material on a scale of one to ten. The Mohs' hardness values of several nonlimiting examples of particles formed from inorganic materials suitable for use in the present invention are given in Table A below.

**TABLE A**

| **Particle material** | **Mohs' hardness (original scale)** | |
|---|---|---|
| Boron nitride | | 2¹ |
| Graphite | | 0.5-1² |
| Molybdenum disulfide | | 1³ |
| Talc | | 1-1.5⁴ |
| Mica | | 2.8-3.2⁵ |
| Kaolinite | | 2.0-2.5⁶ |
| Gypsum | | 1.6-2⁷ |
| Calcite (calcium carbonate) | | 3⁸ |
| Calcium fluoride | | 4⁹ |
| Zinc oxide | | 4.5¹⁰ |
| Aluminum | | 2.5¹¹ |
| Copper | | 2.5-3¹² |
| Iron | | 4-5¹³ |
| Gold | | 2.5-3¹⁴ |
| Nickel | | 5¹⁵ |
| Palladium | | 4.8¹⁶ |
| Platinum | | 4.3¹⁷ |
| Silver | | 2.5-4¹⁸ |
| Zinc sulfide | | 3.5-4¹⁹ |

| | | |
|---|---|---|
| ¹K. Ludema, Friction, Wear, Lubrication, (1996) at page 27. ²R. Weast (Ed.), Handbook of Chemistry and Physics, CRC Press (1975) at page F-22. ³ R. Lewis, Sr., Hawley's Condensed Chemical Dictionary, (12th Ed. 1993) at page 793. ⁴ Hawley's Condensed Chemical Dictionary, (12th Ed. 1993) at page 113. ⁵ Hawley's Condensed Chemical Dictionary, (12th Ed. 1993) at page 784 ⁶ Handbook of Chemistry and Physics at page F-22. ⁷ Handbook of Chemistry and Physics at page F-22. ⁸ Friction, Wear, Lubrication at page 27. ⁹ Friction, Wear, Lubrication at page 27. ¹⁰ Friction, Wear, Lubrication at page 27. ¹¹ Friction, Wear, Lubrication at page 27. ¹² Handbook of Chemistry and Physics at page F-22. ¹³ Handbook of Chemistry and Physics at page F-22. ¹⁴ Handbook of Chemistry and Physics at page F-22. ¹⁵ Handbook of Chemistry and Physics at page F-22. ¹⁶ Handbook of Chemistry and Physics at page F-22. ¹⁷ Handbook of Chemistry and Physics at page F-22. ¹⁸ Handbook of Chemistry and Physics at page F-22. ¹⁹ R. Weast (Ed.), Handbook of Chemistry Physics, CRC Press (71.sup.st Ed. 1990) at page 4-158 | | |

In some non-limiting embodiments, the reinforcing material can be formed from a primary material that is coated, clad or encapsulated with one or more secondary materials to form a composite material that has a harder surface. In other non-limiting embodiments, reinforcement particles can be formed from a primary material that is coated, clad or encapsulated with a differing form of the primary material to form a composite material that has a harder surface.

In some non-limiting examples, inorganic particles formed from an inorganic material such as silicon carbide or aluminum nitride can be provided with a silica, carbonate or nanoclay coating to form a useful composite particle. In other nonlimiting examples, a silane coupling agent with alkyl side chains can interact with the surface of an inorganic particle formed from an inorganic oxide to provide a useful composite particle having a "softer" surface. Other examples include cladding, encapsulating or coating particles formed from nonpolymeric or polymeric materials with differing nonpolymeric or polymeric materials. One non-limiting example of such composite particles is DUALITE^{™}, which is a synthetic polymeric particle coated with calcium carbonate that is commercially available from Pierce and Stevens Corporation of Buffalo, N.Y.

In some non-limiting embodiments, the particles are formed from solid lubricant materials. As used herein, the term "solid lubricant" means any solid used between two surfaces to provide protection from damage during relative movement and/or to reduce friction and wear. In some non-limiting embodiments, the solid lubricants are inorganic solid lubricants. As used herein, "inorganic solid lubricant" means that the solid lubricants have a characteristic crystalline habit which causes them to shear into thin, flat plates which readily slide over one another and thus produce an antifriction lubricating effect. See R. Lewis, Sr., Hawley's Condensed Chemical Dictionary, (12th Ed. 1993) at page 712. Friction is the resistance to sliding one solid over another. F. Clauss, Solid Lubricants and Self-Lubricating Solids (1972) at page.

In some non-limiting embodiments, the particles have a lamellar structure. Particles having a lamellar structure are composed of sheets or plates of atoms in hexagonal array, with strong bonding within the sheet and weak van der Waals bonding between sheets, providing low shear strength between sheets. A non-limiting example of a lamellar structure is a hexagonal crystal structure. Inorganic solid particles having a lamellar fullerene (i.e., buckyball) structure can also be useful in the present invention.

Non-limiting examples of suitable materials having a lamellar structure that are useful in forming the particles of the present invention include boron nitride, graphite, metal dichalcogenides, mica, talc, gypsum, kaolinite, calcite, cadmium iodide, silver sulfide, and mixtures of any of the foregoing. Suitable metal dichalcogenides include molybdenum disulfide, molybdenum diselenide, tantalum disulfide, tantalum diselenide, tungsten disulfide, tungsten diselenide, and mixtures of any of the foregoing.

In some non-limiting embodiments, the reinforcing material can be glass fiber strands. The glass fiber strands are formed from glass filaments, a class of filaments generally accepted to be based upon oxide compositions such as silicates selectively modified with other oxide and non-oxide compositions. Useful glass filaments can be formed from any type of fiberizable glass composition known to those skilled in the art, and include those prepared from fiberizable glass compositions such as "E-glass", "A-glass", "C-glass", "D-glass", "R-glass", "S-glass", and E-glass derivatives that are fluorine-free and/or boron-free. As used herein, the term "fiberizable" means a material capable of being formed into a generally continuous filament, fiber, strand or yarn. As used herein, "E-glass derivatives" means glass compositions that include minor amounts of fluorine and/or boron or can be fluorine-free and/or boron-free. Furthermore, as used herein, "minor amounts of fluorine" means less than 0.5 weight percent fluorine, or less than 0.1 weight percent fluorine, and "minor amounts of boron" means less than 5 weight percent boron, or less than 2 weight percent boron. Basalt and mineral wool are examples of other fiberizable glass materials useful in the present invention. Non-limiting examples of suitable non-glass fiberizable inorganic materials include ceramic materials such as silicon carbide, carbon, quartz, graphite, mullite, aluminum oxide and piezoelectric ceramic materials. In some non-limiting embodiments, the glass filaments are formed from E-glass. Such compositions and methods of making glass filaments therefrom are well known to those skilled in the art, such glass compositions and fiberization methods are disclosed in K. Loewenstein, The Manufacturing Technology of Continuous Glass Fibres, (3d Ed. 1993) at pages 30-44, 47-60, 115-122 and 126-135.

The glass fibers can have a nominal filament diameter ranging from 5.0 to 30.0 micrometers (corresponding to a filament designation of D through Y). Typically, the glass fiber strands have a strand coating composition which is compatible with the composition applied to at least a portion of surfaces of the glass fiber strands, such as an essentially dried residue. The glass fiber strand reinforcements can be used in chopped form, generally continuous strands, mats, etc.

The particles also can be hollow particles formed from materials selected from polymeric and nonpolymeric inorganic materials, polymeric and nonpolymeric organic materials, composite materials, and mixtures of any of the foregoing. Non-limiting examples of suitable materials from which the hollow particles can be formed are described above. In some embodiments, the hollow particles are hollow glass spheres.

In some non-limiting embodiments, the reinforcing materials can be formed from nonpolymeric, organic materials. Nonlimiting examples of nonpolymeric, organic materials useful in the present invention include, but are not limited to, stearates (such as zinc stearate and aluminum stearate), diamond, carbon black, and stearamide.

In some non-limiting embodiments, the particles can be formed from inorganic polymeric materials. Nonlimiting examples of useful inorganic polymeric materials include polyphosphazenes, polysilanes, polysiloxane, polygeremanes, polymeric sulfur, polymeric selenium, silicones, and mixtures of any of the foregoing. A non-limiting example of a particle formed from an inorganic polymeric material suitable for use in the present invention is TOSPEARL¹, which is a particle formed from cross-linked siloxanes and is commercially available from Toshiba Silicones Company, Ltd. of Japan.

The particles can be formed from synthetic, organic polymeric materials that are chemically different from the polyurethane or poly(ureaurethane). Nonlimiting examples of suitable organic polymeric materials include, but are not limited to, thermoset materials and thermoplastic materials. Nonlimiting examples of suitable thermoplastic materials include thermoplastic polyesters such as polyethylene terephthalate, polybutylene terephthalate, and polyethylene naphthalate, polycarbonates, polyolefins such as polyethylene, polypropylene, and polyisobutene, acrylic polymers such as copolymers of styrene and an acrylic acid monomer, and polymers containing methacrylate, polyamides, thermoplastic polyurethanes, vinyl polymers, and mixtures of any of the foregoing. ¹ See R. J. Perry "Applications for Cross-Linked Siloxane Particles" Chemtech. February 1999 at pp. 39-44.

In some non-limiting embodiments, the polymeric organic material is a (meth)acrylic polymer or copolymer comprising at least one functional group selected from the group consisting of silane groups, carboxyl groups, hydroxyl groups and amide groups. In some non-limiting embodiments, these (meth)acrylic polymer or copolymers can be present as nanofibers having a diameter up to 5000 nm, such as 5 to 5000 nm, or less than the wavelength of visible light, for example 700 nanometers or less, such as 50 to 700 nanometers. The fibers may have a ribbon shape and, in this case, diameter is intended to mean the largest dimension of the fiber. Typically the width of the ribbon shaped fibers can be up to 5000 nanometers, such as 500 to 5000 nm and the thickness up to 200 nm, such as 5 to 200 nm. The fibers can be prepared by electrospinning a ceramic melt, a polymer melt or a polymer solution.

Suitable (meth)acrylic polymers can be made by addition polymerization of unsaturated polymerizable materials that contain silane groups, carboxyl groups, hydroxyl groups and amine or amide groups. Non-limiting examples of useful silane groups include groups that have the structure Si-Xₙ (wherein n is an integer having a value ranging from 1 to 3 and X is selected from chlorine, alkoxy esters, and/or acyloxy esters). Such groups hydrolyze in the presence of water including moisture in the air to form silanol groups that condense to form -Si-O-Si- groups. The (meth)acrylic polymer can contain hydroxyl functionality, for example by using a hydroxyl functional ethylenically unsaturated polymerizable monomer such as hydroxyalkyl esters of (meth)acrylic acids having from 2 to 4 carbon atoms in the hydroxyalkyl group. The (meth)acrylic polymer optionally contains nitrogen functionality introduced from nitrogen-containing ethylenically unsaturated monomers, such as amines, amides, ureas, imidazoles and pyrrolidones. Further discussion of such (meth)acrylic polymers and fiberizing methods are disclosed in U.S. Patent Application No. 11/610,755 entitled "Transparent Composite Articles" and U.S. Patent Application No. 11/610,651 entitled "Organic-Inorganic Polymer Composites and Their Preparation by Liquid Infusion", each filed on December 14, 2006.

Non-limiting examples of suitable fiberizable organic materials include cotton, cellulose, natural rubber, flax, ramie, hemp, sisal and wool. Non-limiting examples of suitable fiberizable organic polymeric materials include those formed from polyamides (such as nylon and aramids), (such as KEVLAR^{™} aramid fibers), thermoplastic polyesters (such as polyethylene terephthalate and polybutylene terephthalate), acrylics (such as polyacrylonitriles), polyolefins, polyurethanes and vinyl polymers (such as polyvinyl alcohol). Non-glass fiberizable materials useful in the present invention and methods for preparing and processing such fibers are discussed at length in the Encyclopedia of Polymer Science and Technology, Vol. 6 (1967) at pages 505-712.

It is understood that blends or copolymers of any of the above materials and combinations of fibers formed from any of the above materials can be used in the present invention, if desired. Moreover, the term "strand" can encompass at least two different fibers made from differing fiberizable materials. As used herein, the term "fiberizable" means a material capable of being formed into a generally continuous filament, fiber, strand or yarn.

Suitable thermoplastic fibers can be formed by a variety of polymer extrusion and fiber formation methods, such as for example drawing, melt spinning, dry spinning, wet spinning and gap spinning. Such methods are well known to those skilled in the art and further discussion thereof is not believed to be necessary in view of the present disclosure. If additional information is needed, such methods are disclosed in Encyclopedia of Polymer Science and Technology, Vol. 6 at 507-508.

Non-limiting examples of useful polyamide fibers include nylon fibers such as nylon 6 (a polymer of caprolactam), nylon 6,6 (a condensation product of adipic acid and hexamethylenediamine), nylon 12 (which can be made from butadiene) and nylon 10, polyhexamethylene adipamide, polyamideimides and aramids such as KEVLAR^{™}, which is commercially available from E. I. duPont de Nemours, Inc. of Wilmington, Del.

Non-limiting examples of useful thermoplastic polyester fibers include those composed of polyethylene terephthalate and polybutylene terephthalate.

Non-limiting examples of useful fibers formed from acrylic polymers include polyacrylonitriles having at least 35% by weight acrylonitrile units, or at least 85% by weight, which can be copolymerized with other vinyl monomers such as vinyl acetate, vinyl chloride, styrene, vinylpyridine, acrylic esters or acrylamide. See Encyclopedia of Polymer Science and Technology, Vol. 6 at 559-561.

Non-limiting examples of useful polyolefin fibers are generally composed of at least 85% by weight of ethylene, propylene, or other olefins. See Encyclopedia of Polymer Science and Technology, Vol. 6 at 561-564.

Non-limiting examples of useful fibers formed from vinyl polymers can be formed from polyvinyl chloride, polyvinylidene chloride, polytetrafluoroethylene, and polyvinyl alcohol.

Further non-limiting examples of thermoplastic fiberizable materials believed to be useful in the present invention include fiberizable polyimides, polyether sulfones, polyphenyl sulfones, polyetherketones, polyphenylene oxides, polyphenylene sulfides and polyacetals.

It is understood that blends or copolymers of any of the above materials and combinations of fibers formed from any of the above materials can be used in the present invention, if desired. Also, the thermoplastic fibers can have an antistatic agent coated thereon.

Suitable reinforcing materials can include mats or fabrics comprised of any of the fibers discussed above. An increasingly popular process for forming composites is by compression molding or stamping a moldable sheet of a thermoplastic resin reinforced with fibers such as a glass fiber mat, often referred to as glass mat thermoplastics or "GMT". These composite sheets can be used to form articles such as automobile components and housings for computers. An example of a commercially successful GMT sheet is the AZDEL^{®} moldable composite sheet which is formed by extruding layers of polypropylene resin sheet with needled mats of continuous glass fiber strand. The AZDEL^{®} composite sheet is commercially available from Azdel, Inc. of Shelby, N.C.

For reinforcing a resin matrix material, U.S. Pat. Nos. 3,664,909, 3,713,962 and 3,850,723 disclose fibrous mats of unstranded filaments which can be layered with reinforcing mats of fiber strands.

U.S. Pat. No. 4,847,140 discloses an insulation medium formed by needling a loose layer of inorganic fibers, such as glass, bonded together by a carrier web which is a blend of inorganic and organic fibers, with the carrier web comprising up to 10% by weight organic fibers.

U.S. Pat. Nos. 4,948,661, 5,011,737, 5,071,608 and 5,098,624 disclose fiber reinforced thermoplastic molded products produced by intimately blending reinforcing glass fibers and thermoplastic fibers into a web and heating the web to the melting point of the thermoplastic fibers while applying pressure to the web to press the web into a consolidated structure.

A non-limiting example of a useful polypropylene spun-bonded fiber mat is commercially available from Fiberweb N.A., Inc. of Simpsonville, S.C.

Nonlimiting examples of suitable thermoset reinforcement materials include thermoset polyesters, vinyl esters, epoxy materials, phenolics, aminoplasts, thermoset polyurethanes, and mixtures of any of the foregoing. A specific, nonlimiting example of a synthetic polymeric particle formed from an epoxy material is an epoxy microgel particle.

The concentration of reinforcement particles present in the cured article or coating can be determined, if desired, by a variety of analysis techniques well known in the art, such as Transmission Electron Microscopy ("TEM"), Surface Scanning Electron Microscopy ("X-SEM"), Atomic Force Microscopy ("AFM"), and X-ray Photoelectron Spectroscopy.

In some non-limiting embodiments, the present invention is directed to cured compositions as previously described wherein the reinforcement particles have an average particle size of less than 100 microns prior to incorporation into the composition, or less than 50 microns prior to incorporation into the composition. In other non-limiting embodiments, the present invention is directed to cured compositions as previously described wherein the reinforcement particles have an average particle size ranging from 1 to less than 1000 nanometers prior to incorporation into the composition, or 1 to 100 nanometers prior to incorporation into the composition.

In other non-limiting embodiments, the present invention is directed to cured compositions as previously described wherein the particles have an average particle size ranging from 5 to 50 nanometers prior to incorporation into the composition, or 5 to 25 nanometers prior to incorporation into the composition.

In an embodiment where the average particle size of the particles is at least one micron, the average particle size can be measured according to known laser scattering techniques. For example the average particle size of such particles is measured using a Horiba Model LA 900 laser diffraction particle size instrument, which uses a helium-neon laser with a wave length of 633 nm to measure the size of the particles and assumes the particle has a spherical shape, i.e., the "particle size" refers to the smallest sphere that will completely enclose the particle.

In an embodiment of the present invention wherein the size of the particles is less than or equal to one micron, the average particle size can be determined by visually examining an electron micrograph of a transmission electron microscopy ("TEM") image, measuring the diameter of the particles in the image, and calculating the average particle size based on the magnification of the TEM image. One of ordinary skill in the art will understand how to prepare such a TEM image, and a description of one such method is disclosed in the examples set forth below. In one nonlimiting embodiment of the present invention, a TEM image with 105,000X magnification is produced, and a conversion factor is obtained by dividing the magnification by 1000. Upon visual inspection, the diameter of the particles is measured in millimeters, and the measurement is converted to nanometers using the conversion factor. The diameter of the particle refers to the smallest diameter sphere that will completely enclose the particle.

The shape (or morphology) of the reinforcing material can vary depending upon the specific embodiment of the present invention and its intended application. For example generally spherical morphologies (such as solid beads, microbeads, or hollow spheres), can be used, as well as particles that are cubic, platy, or acicular (elongated or fibrous). Additionally, the particles can have an internal structure that is hollow, porous or void free, or a combination of any of the foregoing, e.g., a hollow center with porous or solid walls. For more information on suitable particle characteristics see H. Katz et al. (Ed.), Handbook of Fillers and Plastics (1987) at pages 9-10.

It will be recognized by one skilled in the art that mixtures of one or more particles having different average particle sizes can be incorporated into the compositions in accordance with the present invention to impart the desired properties and characteristics to the compositions. For example particles of varying particle sizes can be used in the compositions according to the present invention.

In some non-limiting embodiments, the reinforcing material(s) are present in the composition in an amount ranging from 0.01 to 75 weight percent, or 25 to 50 weight percent, based on total weight of the components which form the composition.

Reinforcement particles can be present in a dispersion, suspension or emulsion in a carrier. Nonlimiting examples of suitable carriers include, but are not limited to, water, solvents, surfactants, or a mixture of any of the foregoing. Nonlimiting examples of suitable solvents include, but are not limited to, mineral oil, alcohols such as methanol or butanol, ketones such as methyl amyl ketone, aromatic hydrocarbons such as xylene, glycol ethers such as ethylene glycol monobutyl ether, esters, aliphatics, and mixtures of any of the foregoing.

Dispersion techniques such as grinding, milling, microfluidizing, ultrasounding, or any other dispersing techniques well known in the art of coatings or molded article formulation can be used. Alternatively, the particles can be dispersed by any other dispersion techniques known in the art. If desired, the particles in other than colloidal form can be post-added to an admixture of other composition components and dispersed therein using any dispersing techniques known in the art.

A further embodiment of the present invention is directed to a coated automobile substrate comprising an automobile substrate and a cured composition coated over at least a portion of the automobile substrate, wherein the cured composition is selected from any of the foregoing compositions. In yet another embodiment, the present invention is directed to a method of making a coated automobile substrate comprising providing an automobile substrate and applying over at least a portion of the automotive substrate a coating composition selected from any of the foregoing compositions. Again, the components used to form the cured compositions in these embodiments can be selected from the components discussed above, and additional components also can be selected from those recited above.

Suitable flexible elastomeric substrates can include any of the thermoplastic or thermoset synthetic materials well known in the art. Nonlimiting examples of suitable flexible elastomeric substrate materials include polyethylene, polypropylene, thermoplastic polyolefin ("TPO"), reaction injected molded polyurethane ("RIM"), and thermoplastic polyurethane ("TPU").

Nonlimiting examples of thermoset materials useful as substrates for coating with compositions of the present invention include polyesters, epoxides, phenolics, polyurethanes such as "RIM" thermoset materials, and mixtures of any of the foregoing. Nonlimiting examples of suitable thermoplastic materials include thermoplastic polyolefins such as polyethylene, polypropylene, polyamides such as nylon, thermoplastic polyurethanes, thermoplastic polyesters, acrylic polymers, vinyl polymers, polycarbonates, acrylonitrile-butadiene-styrene ("ABS") copolymers, ethylene propylene diene terpolymer ("EPDM") rubber, copolymers, and mixtures of any of the foregoing.

Nonlimiting examples of suitable metal substrates useful as substrates for coatings with compositions of the present invention include ferrous metals (e.g., iron, steel, and alloys thereof), nonferrous metals (e.g., aluminum, zinc, magnesium, and alloys thereof), and mixtures of any of the foregoing. In the particular use of automobile components, the substrate can be formed from cold rolled steel, electrogalvanized steel such as hot dip electrogalvanized steel, electrogalvanized iron-zinc steel, aluminum, and magnesium.

When the substrates are used as components to fabricate automotive vehicles (including, but not limited to, automobiles, trucks and tractors) they can have any shape, and can be selected from the metallic and flexible substrates described above. Typical shapes of automotive body components can include bodies (frames), hoods, doors, fenders, mirror housings, bumpers, and trim for automotive vehicles.

In embodiments of the present invention directed to automotive applications, the cured compositions can be, for example, the electrodeposition coating, the primer coating, the basecoat and/or the topcoat. Suitable topcoats include monocoats and basecoat/clearcoat composites. Monocoats are formed from one or more layers of a colored coating composition.

In some non-limiting embodiments, the polyurethanes and poly(ureaurethane)s can be reinforced with fiberglass to form a composite article, such as for example a windmill blade, blast-resistant panels, bullet resistant panels and radomes.

In some non-limiting embodiments, the polyurethanes and poly(ureaurethane)s can be useful as one or more layers in a multilayered article or assembly. If desired, the layers within the multilayered article can be laminated by heat and/or pressure, bonded by one or more adhesive materials or one or more layers in between having adhering properties, have one or more interlayers in between layers, or merely placed adjacent to another layer, for example.

In some non-limiting embodiments, the polymer is cut while warm, granulated, extruded and/or milled and calendered to sheets and assembled into a multilayered article, assembly or laminate and aged for several days, a week, or longer at ambient temperature (25°C).

In some non-limiting embodiments, the present invention provides articles or assemblies having multiple layers of polyurethanes and/or poly(ureaurethanes) of the present invention. The thickness of each layer and overall thickness of the article or assembly can vary as desired. Non-limiting examples of suitable thicknesses of the layers and articles/assemblies are discussed below. The layers can be laminated and/or adhered together, if desired.

In some non-limiting embodiments, the present invention provides multilayered articles, assemblies or laminates comprising: (a) at least one layer of the polyurethane(s) or poly(ureaurethane)s of the present invention as discussed herein; and (b) at least one layer of a substrate selected from the group consisting of paper, glass, ceramic, wood, masonry, textile, metal or organic polymeric material and combinations thereof. In some non-limiting embodiments, the layer (a) of polyurethane(s) or poly(ureaurethane)s of the present invention is chemically or physically different from the organic polymeric material of layer (b), i.e., it has at least one different atom, arrangement of atoms or configuration. In other embodiments, two or more layers of the same or similar polyurethane(s) or poly(ureaurethane)s of the present invention can be used.

In some non-limiting embodiments, the substrate is an optically clear polymerized organic material prepared from a thermoplastic polycarbonate resin, such as the carbonate-linked resin derived from bisphenol A and phosgene, which is sold under the trademark LEXAN^{®} by GE Plastics of Pittsfield, Massachusetts; a polyester, such as the material sold under the trademark MYLAR by E.I. duPont de Nemours Co. of Wilmington, Delaware; a poly(methyl methacrylate), such as the material sold under the trademark PLEXIGLAS by Altuglas International of Philadelphia, Pennsylvania; polyhexylene-polycarbonate-based polyurethanes; polymerizates of a polyol(allyl carbonate) monomer, especially diethylene glycol bis(allyl carbonate), which monomer is sold under the trademark CR-39 by PPG Industries, Inc., and polymerizates of copolymers of a polyol (allyl carbonate), e.g., diethylene glycol bis(allyl carbonate), with other copolymerizable monomeric materials, such as copolymers with vinyl acetate, and copolymers with a polyurethane having terminal diacrylate functionality, as described in U.S. Pat. Nos. 4,360,653 and 4,994,208; and copolymers with aliphatic urethanes, the terminal portion of which contain allyl or acrylyl functional groups, as described in U.S. Pat. No. 5,200,483; poly(vinyl acetate), polyvinylbutyral, polyurethane, polymers of members of the group consisting of diethylene glycol dimethacrylate monomers, diisopropenyl benzene monomers, and ethoxylated trimethylol propane triacrylate monomers; cellulose acetate, cellulose propionate, cellulose butyrate, cellulose acetate butyrate, polystyrene and copolymers of styrene with methyl methacrylate, vinyl acetate and acrylonitrile. In some non-limiting embodiments, the article comprises at least one layer of polyurethane or polyureaurethane of the present invention and at least one layer of polycarbonate.

The number and thickness of the layers can vary as desired. For example, the thickness of a single layer can range from 0.1 mm to 60 cm, or 2 mm to 60 cm, or 0.3 cm to 2.5 cm. The number of layers can range from 2 to 10, or 2 to 4, as desired. The overall thickness of the multilayer article, assembly or laminate can range from 2 mm to 15 cm or more, or 2 mm to 5 cm. For ballistics applications, the overall thickness of the polyurethane or poly(ureaurethane) of the present invention can range from 2 mm to 15 cm or more, or 2 mm to 5 cm. Also, for ballistics applications suitable substrates for layering with the polyurethane(s) and/or poly(ureaurethane)s of the present invention include polyesters, polycarbonates, or polyether thermoplastic elastomers, for example. The layer(s) of polyurethane or poly(ureaurethane) of the present invention can be positioned on the outside of the laminate (facing the potential ballistic impact), on the inside of the laminate, or elsewhere in between.

The laminate can be prepared by any method known to those skilled in the art, for example by positioning each layer in facing engagement as desired to form an assembly. In some non-limiting embodiments, the assembly is subjected to heat and/or pressure to bond the layers together. In some non-limiting embodiments, the assembly can be placed into an autoclave and heated at a temperature of 80°C to 175°C, or 350°F (177°C), or 300°F (149°C), for 0.5 to 10 hours, or 2 hours, to bond the layers together. In some non-limiting embodiments, pressure of 0.1 MPa to 2 MPa can be applied in lieu of or in addition to the heat applied. The bonding of the layers can be a mechanical bond and/or a chemical bond. A mechanical bond can be formed by application of heat and/or pressure. A chemical bond can be formed, for example, by covalent bonding, or ionic bonding, or crosslinking of components of adjacent layers through heating or solvent.

For example, the laminate or assembly can be formed from components and in a manner as described in U.S. Patents Nos. 4,078,107, 4,081,581, 4,277,294, 4,367,107.

Alternatively or additionally, the layers can be adhered by using an adhesive. Suitable adhesives are well known to those skilled in the art, non-limiting examples of which include Norland Optical Adhesive 60 and CRL RTV408C. Alternatively or additionally, the layers can be adhered or secured adjacent to one another by using an interlayer. Suitable interlayers are well known to those skilled in the art, non-limiting examples of which include silicones, polyvinyl acetals such as polyvinyl butyral, vinyl materials, and polyurethanes (such as polyester polyurethanes), and can include plasticizers and other additives as desired. Non-limiting examples of interlayers include those disclosed in U.S. Patents Nos. 4,078,107, 4,081,581, 4,277,294, and 4,367,107.

In some non-limiting embodiments, polyurethanes and poly(ureaurethane)s of the present invention can have a hard segment content of 10 to 100 weight percent, or 20 to 80 weight percent, or 30 to 75 weight percent. Hard segment calculation is discussed in detail above.

In some non-limiting embodiments, the polyurethanes and poly(ureaurethane)s of the present invention generally have a urethane content (Wu) of 20 to 40 weight percent, or 21 to 36 weight percent, or 30 to 40 weight percent. The urethane content is the percentage by weight of the urethane linkages present in the polymer and can be calculated by determining the total number of equivalents, and from this the total weight of all reactants, and dividing the total weight of the urethane linkages obtainable from these reactants by the total weight of the reactants themselves. The following example will further explain the calculation. In Example I, Formulation 1 which follows, a polyurethane article according to the invention was prepared by reacting 0.7 equivalents of 1,4-butanediol, 0.3 equivalents of trimethylolpropane and one equivalent of 4,4'-methylene-bis-(cyclohexyl isocyanate) (DESMODUR W). The equivalent weight of the 1,4-butanediol is 45, the equivalent weight of the trimethylolpropane is 44.7 (corrected for impurities) and the equivalent weight of the DESMODUR W is 131.2. Therefore, the actual weight of ingredients used is 31.54 parts by weight of 1,4-butanediol, 13.2 parts by weight of trimethylolpropane and 131.2 parts by weight of DESMODUR W or a total reactant weight of 175.9 parts by weight. One equivalent of DESMODUR W will yield one equivalent of urethane linkage. The equivalent weight of a urethane linkage is 59 so that the total weight of the urethane linkages determined by multiplying the equivalent weight by the number of equivalents would also be 59. Thus, the total weight of the urethane linkage, 59, divided by the total weight of the reactants, 175.9, multiplied by 100 to convert to percentages would give a percentage by weight of urethane linkage of 33.49 percent by weight.

In an analogous manner, the percentage by weight of cyclic structures (W_{c}) (such as for example cyclohexyl) can be calculated. In Example I, Formulation 1, the only material contributing cyclohexyl moieties is the DESMODUR W. One equivalent of DESMODUR W would yield one equivalent of cyclohexyl moiety which has an equivalent weight of 81. Thus, the total weight of cyclohexyl moiety would be equal to 81 and this divided by the total weight of reactants or 175.9 would yield a W_{c} of 46 percent. In some non-limiting embodiments, the polyurethanes and poly(ureaurethane)s of the present invention can have a cyclic content of 10 to 80 weight percent, 20 to 70 weight percent, 30 to 70 weight percent, or 30 to 60 weight percent.

In some non-limiting embodiments, the resulting polyurethanes or poly(ureaurethane)s of the present invention when cured can be solid, and essentially transparent. In some non-limiting embodiments, the polyurethane can be partially cured or fully cured such that essentially no further reaction occurs.

In some non-limiting embodiments, the polyurethanes and poly(ureaurethane)s of the present invention generally have a number average molecular weight, as estimated from inherent viscosity measurements, of at least 20,000 grams/mole, or ranging from 20,000 to 1,000,000 grams/mole, or ranging from 20,000 to 800,000 grams/mole. The polyurethanes and poly(ureaurethane)s of the present invention generally have an average molecular weight per crosslink of at least 500 grams per mole, in some embodiments ranging from 500 and 15,000 grams/mole, or ranging from 1800 and 15,000 grams/mole. The polyurethanes and poly(ureaurethane)s of the present invention generally have a crosslink density of at least 11,000 grams per mole.

In some non-limiting embodiments, the polyurethane(s) and poly(ureaurethane)s of the present invention when cured can have low density. In some non-limiting embodiments, the density can be from at least 0.9 to less than 1.25 grams/cm³, or from at least 1.0 to less than 1.45 grams/cm³, or from 1.08 to 1.37 grams/cm³, or from 1.08 to 1.13. In some non-limiting embodiments, the density of polyurethanes and poly(ureaurethane)s of the present invention can be less than LEXAN (density 1.21 g/cm³) and conventional stretched acrylic (density 1.18 g/cm³). The density can be measured using a DensiTECH instrument manufactured by Tech Pro, Incorporated. In some non-limiting embodiments, the density is measured in accordance with ASTM D 792-00.

Also, some optically clear polyurethanes and poly(ureaurethane)s upon heating can exhibit a low temperature exotherm at -70°C (differential thermal analysis can be determined using a du Pont 900 thermal analyzer), and 11°C, indicating that the polymers are generally amorphous.

In some non-limiting embodiments, softening points of 65°C to 200°C, melting points of 80°C to 220°C, and decomposition temperatures of 280°C to 330°C under nitrogen atmosphere are typical.

The polyurethanes and poly(ureaurethane)s of the present invention can be useful in applications in which one or more of the following properties are desired: transparency, high optical quality, high Abbe number, low color, energy-absorption, stiffness, moisture stability, ultraviolet light stability, weathering resistance, low water absorption, hydrolytic stability and bullet or explosive resistance.

In some embodiments, cured articles prepared from the polyurethanes and poly(ureaurethane)s of the present invention are generally clear, can have a luminous transmittance of at least 80 percent, less than 2 percent haze and show no visual change after 1,000 hours of light and water exposure according to ASTM D-1499-64.

Polyurethanes and poly(ureaurethane)s of the present invention can be formed into articles having a variety of shapes and dimensions, such as cast shapes, flat sheets, curved shapes, laminates, or assemblies. Non-limiting examples of useful methods for forming articles include heat treatment, pressure casting, heat and pressure casting, or pouring liquid polyurethane or poly(ureaurethane) into a mold and curing the product to form a molded article.

The polyurethanes an exhibit good ballistics resistance, e.g., resistance to perforation, penetration or cracking due to impact from a projectile such as a bullet or shot which is shot from a handgun, shotgun, rifle, AK-47, or other shooting device or explosives. In some embodiments, the polyurethanes of 0.75" (1.9 cm) thickness or greater will stop or deflect: a 9 mm, 125 grain bullet shot at an initial velocity of 1350 ft/sec (411.5 m/sec) from 20 feet (6.1 m); a 0.40 caliber bullet shot at an initial velocity of 987ft/sec (300.8 m/sec) bullet from 20 feet (6.1 m); and/or a 12-gauge shotgun shot at an initial velocity of 1290 ft/sec (393.2 m/sec) from 20 feet (6.1 m).

The polyurethanes can be useful for any of the applications or uses described herein. In some non-limiting embodiments, the present invention provides polyurethanes suitable for use as transparencies or windows. Polyurethanes having good creep resistance (or low deflection) and high fracture toughness (K-factor) can be useful for airplane windows. Airplane windows typically deflect or deform over time due to extremes in temperature and pressure, which can increase interior cabin noise and decrease gas mileage due to increased drag. Therefore, resistance to creep or low deflection is a desirable characteristic. In some non-limiting embodiments, the maximum average deflection of the transparency or window is 0.5 inch (1.3 mm). A flexural test (discussed in the Examples below) was developed to simulate the creep phenomenon under 3,294 psig (22.711 MPa) (300 times the service pressure at 3,500 feet altitude) for 3 hrs. In some non-limiting embodiments for aircraft window applications, the values of Young's Modulus can be at least 350,000 (2413 MPa). Thus, in some non-limiting embodiments, the present invention provides polyurethanes suitable for use as transparencies, such as airplane windows, which can have one or more of the following desirable properties: good deflection resistance, high fracture toughness (K-factor), lower weight than conventional airplane transparencies, and good abrasion resistance.

In some non-limiting embodiments in which articles having good optical properties are desired, such as low striation or no visible striation, the equivalent ratio of the prepolymer components of isocyanate functional material(s) (such as 4,4'-methylene-bis-(cyclohexyl isocyanate) to the polyol(s) having 2 to 18 carbon atoms (such as 1,5-pentane diol) can range from 1.0:0.3 to 1.0:0.4, or 1.0:0.35. While not intending to be bound by any theory, it is believed that the formation of striations in a molded article may be related to the viscosity of the prepolymer. The higher viscosity prepolymer can wet the release-coated glass mold better so that flow into the casting cell is more uniform and smooth, and the urethane content is higher, making compatibility of the components occur faster. The striation of an article can be determined by forming a molded article, for example having a thickness of one inch (2.54 cm), and holding the molded article in front of a white-coated board or substrate, and visually observing for the presence of striations when a light source is shined upon the molded article.

The polyurethanes and poly(ureaurethane)s of the present invention can be used to form articles having good impact resistance or flexibility, high impact strength, high tensile strength, resistance to heat distortion, resistance to deflection under pressure, good hardness, high Young's Modulus, high K factor, good solvent resistance, good clarity or transparency, high light transmittance, low haze, good weatherability, good energy absorption, good moisture stability, good ultraviolet light stability, and/or good ballistics resistance.

In some non-limiting embodiments, the polyurethanes and poly(ureaurethane)s of the present invention can be used to form articles having a Gardner Impact strength of at least 100 in-lb (11.3 Joules), or at least 200 in-lb (22.6 Joules), or at least 400 in-lb (45 Joules), or at least 500 in-lb (56.5 Joules) or at least 600 in-lb (67.8 Joules), according to ASTM-D 5420-04. Non-limiting examples of suitable methods and equipment for measuring impact resistance and impact strength are discussed in detail above.

In some embodiments, the heat distortion temperature of cured articles of the invention can be at least 190°F (88°C) or above 200°F (93°C), as determined according to ASTM-D-648.

Hardness of the polyurethanes and poly(ureaurethanes) can be determined by the Shore hardness and, accordingly, in some embodiments articles of the invention have a Shore D hardness at room temperature (25°C) using a Shore D durometer of at least 75 or at least 80.

Tensile strength at yield or break can be measured according to ASTM-D 638-03. In some non-limiting embodiments, the tensile strength at yield is at least 6,800 lb/in² (47 MPa) according to ASTM-D 638-03, or 6,800 to 20,000 lb/in² (47 to 138 MPa), or 12,000 to 20,000 lb/in² (83 to 138 MPa).

Young's Modulus can be measured according to ASTM-D 638-03. In some non-limiting embodiments, the Young's Modulus is at least 215,000 lb/in² (1482 MPa), or 215,000 (1482 MPa) to 600,000 lb/in² (4137 MPa), or 350,000 (2413 MPa) to 600,000 lb/in² (4137 MPa). For commercial airplane cabin window applications, when the cabin pressure is 10 psi (0.07 MPa) or more greater than the external pressure, the cabin windows can deflect into the airstream, thereby increasing noise and decreasing fuel efficiency. Higher values of Young's Modulus indicate increased stiffness and less tendency for the window to deflect into the airstream. In some non-limiting embodiments for aircraft window applications, the values of Young's Modulus can be at least 350,000 (2413 MPa). In typical ballistics applications, the outer plies are glass, which is hard enough to deform a bullet by spreading the impact stress over a large area before it penetrates the underlying plies.

K factor is a measure of crack propagation. Crack propagation can be measured according to U.S. Dept. of Defense MIL-PRF-25690B (January 29, 1993). In some non-limiting embodiments, the polyurethanes and poly(ureaurethane)s of the present invention have a K-Factor crack propagation resistance of at least 1000 lb/in^{3/2} (1,098,800 N/m^{3/2}), or 1000 lb/in^{3/2} (1,098,800 N/m^{3/2}) to 4000 lb/in^{3/2} (4,395,200 N/m^{3/2}), or 2000 lb/in^{3/2} (2,197,600 N/m^{3/2}) to 4000 lb/in^{3/2} (4,395,200 N/m^{3/2}).

Compositions suitable for use in automobile windshields meet the standard requirement of minimum light transmission of 70 percent or 86.5 percent or above (Illuminant A. Tungsten lamp 2,840°K.) and less than 2 percent haze (ANSI CODE Z-26.1, 1966, Test No. 18). The percent light transmission and percent haze can be measured by a Hunter Pivotable Sphere Haze Meter according to ASTM E903-82.

The polyurethanes and poly(ureaurethane)s of the present invention can have outstanding weather characteristics as measured by UV light stability and hydrolytic stability. Fade-O-Meter^{®} exposure can be conducted according to ASTM G-25-70, Method A using a Fade-O-Meter, Type FDA-R, Serial No. F02951, manufactured by Atlas Electric Devices Co., Chicago, Illinois. The light source can be a carbon arc lamp enclosed in a fused silica globe. The operating temperature of the Fade-O-Meter (black panel) can be 140°F (60°C) and the instrument operated with no water in the atomizing unit. Sample sizes are 2 1/2 inches by 6 inches by 1/8 inch (6.35 cm by 15.24 cm by 0.32 cm). Weather-O-Meter^{®} exposure can be conducted according to ASTM D-1499-64 using a Weather-O-Meter, Type DMC, Serial No. WO-1305. The type of light source can be a twin carbon arc lamp enclosed in a fused silica globe. The operating black panel temperature can be 140°F (60°C). The spray of water is deionized water at a temperature of 70°F (21°C). The number and type of water spray nozzles which are used are four No. 50 nozzles. Alternatively, the UV resistance can be determined using QUV at 1000 hours according to ASTM G-53.

Abrasion resistance can be measured using a Taber Abrader having a CS-10F abrasion wheel with 500 grams of weight, for a sample size 3 inches by 3 inches by 1/8 inch (7.62 cm by 7.62 cm by 0.32 cm) according to ASTM D 1044-99. In some non-limiting embodiments, 100 cycles of Taber can result in 30% haze for stretched acrylic and from 5% to 40%, or from 10% to 15% or less than 5% for the polyurethanes and poly(ureaurethane)s of the present invention.

The polyurethanes and poly(ureaurethane)s of the present invention can have good craze resistance to solvents and acids. Craze resistance can be measured according to U.S. Dept. of Defense MIL-PRF-25690B (January 29, 1993). Non-limiting examples of solvents and acids for Stress Craze Testing include methanol, isopropanol, ethylene glycol, propylene glycol, ethyl acetate, acetone, toluene, isobutyl acetate, Skydrol (hydraulic fluid), jet fuel such as JP-4, and 75% aqueous solution of sulfuric acid. In some non-limiting embodiments, uncoated articles prepared from the polyurethanes and poly(ureaurethane)s of the present invention have a stress craze resistance in organic solvent and 75% by weight aqueous solution of sulfuric acid of at least 1000 psi (6.9 MPa) tensile stress, or 1000 psi (6.9 MPa) to 4000 psi (27.6 MPa), or 2000 psi (13.8 MPa) to 4000 psi (27.6 MPa). In some non-limiting embodiments, the polyurethanes and poly(ureaurethane)s of the present invention when uncoated can withstand 75% sulfuric acid for up to thirty days or any organic solvent at between 1000 psi (6.9 MPa) and 4000 psi (27.6 MPa) membrane stress.

In some non-limiting embodiments, the polyurethanes and poly(ureaurethane)s of the present invention when polymerized can produce a polymerizate having a refractive index of at least 1.55, or at least 1.56, or at least 1.57, or at least 1.58, or at least 1.59, or at least 1.60, or at least 1.62, or at least 1.65. In other non-limiting embodiments, the poly(ureaurethane)s of the present invention when polymerized can produce a polymerizate having an Abbe number of at least 32, or at least 35, or at least 38, or at least 39, or at least 40, or at least 44, or at least 59, or having an Abbe number of 59. The refractive index and Abbe number can be determined by methods known in the art such as American Standard Test Method (ASTM) Number D 542-00. Further, the refractive index and Abbe number can be determined using various known instruments. In a non-limiting embodiment of the present invention, the refractive index and Abbe number can be measured in accordance with ASTM D 542-00 with the following exceptions: (i) test one to two samples/specimens instead of the minimum of three specimens specified in Section 7.3; and (ii) test the samples unconditioned instead of conditioning the samples/specimens prior to testing as specified in Section 8.1. Further, in a non-limiting embodiment, an Atago, model DR-M2 Multi-Wavelength Digital Abbe Refractometer can be used to measure the refractive index and Abbe number of the samples/specimens.

Solid articles that can be prepared using the polyurethanes or poly(ureaurethanes) of the present invention include but are not limited to optical articles or lenses, photochromic articles or lenses, windows, transparencies, such as generally transparent windows, windshields, sidelights and backlights, aircraft or airplane transparencies, ballistic resistant articles, windmill components such as blades, and glazings.

In some non-limiting embodiments, the polymeric substrate material, including the coating composition applied thereto, may be in the form of optical elements such as windows, plano and vision correcting ophthalmic lenses, exterior viewing surfaces of liquid crystal displays, cathode ray tubes, e.g., video display tubes for televisions and computers, clear polymeric films, transparencies, e.g., windshields, aircraft transparencies, plastic sheeting, etc.

The polyurethanes and poly(ureaurethane)s of the present invention are desirable for a wide variety of uses. They are particularly useful as glazing materials for aircraft safety glass windows. Besides aircraft glazing, the polyurethanes and poly(ureaurethane)s of the invention in sheet form can be used in architectural applications and can be tinted or made opaque by pigmenting if desired. In such applications, the polyurethanes and poly(ureaurethane)s of the invention can be in sheet form and may be used alone or laminated to other materials as discussed above. The layers in the composite can have the same or different modulus values, as desired. Also, in some embodiments the polyurethanes and poly(ureaurethane)s of the invention can be used for optical lenses since they can be optically clear, unaffected by ultraviolet light and humidity exposure and abrasion resistant.

In other non-limiting embodiments, the polyurethanes and poly(ureaurethane)s of the present invention can be used as low thermal expansion substrates for deposition of conductive films for electrochromic applications, microwave absorbing films or low resistance films. In other non-limiting embodiments, a stretched acrylic substrate can be coated with a cyanoethyl acrylate/acrylic copolymer and further coated with the polyurethanes and poly(ureaurethane)s of the present invention.

The polyurethanes and poly(ureaurethane)s of the invention can be used in sheet form and can vary in thickness from 2 to 500 mils, although somewhat thinner and thicker sheets can be used, depending upon the application. For aircraft use, in some embodiments the thickness can vary between 1/16 inch and 1/2 inch (0.16 cm to 1.27 cm).

In some non-limiting embodiments, an automobile window can be prepared from a thermoplastic polycarbonate resin, such as that sold under the trademark LEXAN, with the coating composition of the present invention applied as a weather layer on the outboard side of the window to increase the weatherability of the window. Alternatively, an automobile window can be prepared as a glass/LEXAN laminate, with the glass as the outboard layer and the coating composition of the present invention applied as a layer on the inboard side of the laminate.

The coating composition of the present invention can be applied to the substrate surface using any known coating procedures. Desirably, the coating composition is flow coated over the substrate surface by an automated flow-coating system in which the surface tension of the liquid pulls a coherent sheet of liquid across the substrate surface as the mechanical flow-coating device traverses across the substrate sheet. An automatic flow-coating device typically consists of an articulating arm that holds a nozzle connected to a pressure pot where the resin solution is held. The arm runs on a track above the sheet to be coated. The rate of flow of the liquid is adjusted using the pressure pot. The rate of traverse of the articulating arm is set using a potentiometer. The nozzle distance from the sheet is optimized and kept constant, via the articulating arm. This is particularly important for curved sheets. The thickness of the coating is determined by the initial viscosity of the resin solution and the rate of solvent evaporation. The evaporation rate is mainly controlled by the solvent choice and the cubic feet/minute airflow in the ventilated coating booth. Alternatively, the coating compositions can be prepared and cast in an appropriate mold to form a desired structure, which can then be applied as a layer to a suitable substrate, such as through a lamination process, or may used as a monolithic structure.

The coating composition generally may be applied to a substrate by itself as a transparent or pigmented monocoat, or as the pigmented base coat and/or transparent topcoat in a color-plus-clear composite coating as known to those skilled in the art. In some embodiments, the coating can be applied before the isocyanate and hydroxyl groups are fully reacted, for example by spraying the isocyanate and hydroxyl components separately through a mixing nozzle to apply the coating to the substrate. Alternatively, the coating can be partially cured in an oven and then subjected to a high moisture environment, such as high humidity or water spray, to further react and cure the coating. If desired, the coating composition may contain additional materials well known in the art of formulated surface coatings, such as surfactants, flow control agents, thixotropic agents, fillers, antigassing agents, organic cosolvents, catalysts, and other customary auxiliaries. These materials can constitute up to 40 percent by weight of the total weight of the coating composition.

As aforementioned, although the cured compositions can be formed from liquid coating compositions, they also can be formed from coating compositions formulated as powder coating compositions.

In another non-limiting embodiment, the cured compositions of the present invention also can be useful as decorative or protective coatings for pigmented plastic (elastomeric) substrates or mold-in-color ("MIC") plastic substrates. In these applications, the compositions can be applied directly to the plastic substrate or included in the molding matrix. Optionally, an adhesion promoter can first be applied directly to the plastic or elastomeric substrate and the composition applied as a topcoat thereover.

In another non-limiting embodiment, the compositions of the present invention also can be useful as a spalling shield layer, an anti-lacerative coating layer or a break-in resistant coating layer for glass or other substrates.

In a non-limiting embodiment, the polyurethane polymerizate of the present invention can be used to prepare photochromic articles. In a further embodiment, the polymerizate can be transparent to that portion of the electromagnetic spectrum which activates the photochromic substance(s), i.e., that wavelength of ultraviolet (UV) light that produces the colored or open form of the photochromic substance and that portion of the visible spectrum that includes the absorption maximum wavelength of the photochromic substance in its UV activated form, i.e., the open form.

Photochromic compounds exhibit a reversible change in color when exposed to light radiation involving ultraviolet rays, such as the ultraviolet radiation in sunlight or the light of a mercury lamp. Various classes of photochromic compounds have been synthesized and suggested for use in applications in which a sunlight-induced reversible color change or darkening is desired. The most widely described classes of photochromic compounds are oxazines, pyrans and fulgides.

The general mechanism responsible for the reversible change in color, i.e., a change in the absorption spectrum in the visible range of light (400-700 nm), exhibited by different types of photochromic compounds has been described and categorized. See John C. Crano, "Chromogenic Materials (Photochromic)", Kirk-Othmer Encyclopedia of Chemical Technology, Fourth Edition, 1993, pp. 321-332. The general mechanism for the most common classes of photochromic compounds, e.g., indolino spiropyrans and indolino spirooxazines, involves an electrocyclic mechanism. When exposed to activating radiation, these compounds transform from a colorless closed ring compound into a colored open ring species. In contrast, the colored form of fulgide photochromic compounds is produced by an electrocyclic mechanism involving the transformation of a colorless open ring form into a colored closed ring form.

A wide variety of photochromic substances can be used in the present invention. In a non-limiting embodiment, organic photochromic compounds or substances can be used. In alternate non-limiting embodiments, the photochromic substance can be incorporated, e.g., dissolved, dispersed or diffused into the polymerizate, or applied as a coating thereto.

In a non-limiting embodiment, the organic photochromic substance can have an activated absorption maximum within the visible range of greater than 590 nanometers. In a further non-limiting embodiment, the activated absorption maximum within the visible range can be from at least 590 to 700 nanometers. These materials can exhibit a blue, bluish-green, or bluish-purple color when exposed to ultraviolet light in an appropriate solvent or matrix. Non-limiting examples of such substances that are useful in the present invention include but are not limited to spiro(indoline)naphthoxazines and spiro(indoline)benzoxazines. These and other suitable photochromic substances are described in U.S. Patent Nos.: 3,562,172; 3,578,602; 4,215,010; 4,342,668; 5,405,958; 4,637,698; 4,931,219; 4,816,584; 4,880,667; 4,818,096.

In another non-limiting embodiment, the organic photochromic substances can have at least one absorption maximum within the visible range ranging from 400 and less than 500 nanometers. In a further non-limiting embodiment, the substance can have two absorption maxima within this visible range. These materials can exhibit a yellow-orange color when exposed to ultraviolet light in an appropriate solvent or matrix. Non-limiting examples of such materials can include certain chromenes, such as but not limited to benzopyrans and naphthopyrans. Many of such chromenes are described in U.S. Patents 3,567,605; 4,826,977; 5,066,818; 4,826,977; 5,066,818; 5,466,398; 5,384,077; 5,238,931; and 5,274,132.

In another non-limiting embodiment, the photochromic substance can have an absorption maximum within the visible range ranging from 400 to 500 nanometers and an absorption maximum within the visible range ranging from 500 to 700 nanometers. These materials can exhibit color(s) ranging from yellow/brown to purple/gray when exposed to ultraviolet light in an appropriate solvent or matrix. Non-limiting examples of these substances can include certain benzopyran compounds having substituents at the 2-position of the pyran ring and a substituted or unsubstituted heterocyclic ring, such as a benzothieno or benzofurano ring fused to the benzene portion of the benzopyran. Further non-limiting examples of such materials are disclosed in U.S. Patent No. 5,429,774.

In some non-limiting embodiments, the photochromic substance for use in the present invention can include photochromic organo-metal dithizonates, such as, but not limited to (arylazo)-thioformic arylhydrazidates, such as, but not limited to mercury dithizonates which are described, for example, in U.S. Patent 3,361,706. Fulgides and fulgimides, such as, but not limited to 3-furyl and 3-thienyl fulgides and fulgimides which are described in U.S. Patent No. 4,931,220 at column 20, line 5 through column 21, line 38, can be used in the present invention.

In other non-limiting embodiments, the photochromic articles of the present invention can include one photochromic substance or a mixture of more than one photochromic substances. In other non-limiting embodiments, various mixtures of photochromic substances can be used to attain activated colors such as a near neutral gray or brown.

The amount of photochromic substance employed can vary. In some non-limiting embodiments, the amount of photochromic substance and the ratio of substances (for example, when mixtures are used) can be such that the polymerizate to which the substance is applied, or in which it is incorporated, exhibits a desired resultant color, e.g., a substantially neutral color such as shades of gray or brown when activated with unfiltered sunlight, i.e., as near a neutral color as possible given the colors of the activated photochromic substances. In some non-limiting embodiments, the amount of photochromic substance used can depend upon the intensity of the color of the activated species and the ultimate color desired.

In some non-limiting embodiments, the photochromic substance can be applied to or incorporated into the polymerizate by various methods known in the art. In a non-limiting embodiment, the photochromic substance can be dissolved or dispersed within the polymerizate. In other non-limiting embodiments, the photochromic substance can be imbibed into the polymerizate by methods known in the art. The term "imbibition" or "imbibe" includes permeation of the photochromic substance alone into the polymerizate, solvent assisted transfer absorption of the photochromic substance into a porous polymer, vapor phase transfer, and other such transfer mechanisms. In a non-limiting embodiment, the imbibing method can include coating the photochromic article with the photochromic substance; heating the surface of the photochromic article; and removing the residual coating from the surface of the photochromic article. In alternate non-limiting embodiments, the imbibition process can include immersing the polymerizate in a hot solution of the photochromic substance or by thermal transfer.

In some non-limiting embodiments, the photochromic substance can be a separate layer between adjacent layers of the polymerizate, e.g., as a part of a polymer film; or the photochromic substance can be applied as a coating or as part of a coating placed on the surface of the polymerizate.

The amount of photochromic substance or composition containing the same applied to or incorporated into the polymerizate can vary. In some non-limiting embodiments, the amount can be such that a photochromic effect discernible to the naked eye upon activation is produced. Such an amount can be described in general as a photochromic amount. In some non-limiting embodiments, the amount used can depend upon the intensity of color desired upon irradiation thereof and the method used to incorporate or apply the photochromic substance. In general, the more photochromic substance applied or incorporated, the greater the color intensity. In some non-limiting embodiments, the amount of photochromic substance incorporated into or applied onto a photochromic optical polymerizate can be from 0.15 to 0.35 milligrams per square centimeter of surface to which the photochromic substance is incorporated or applied.

In another embodiment, the photochromic substance can be added to the polyurethane prior to polymerizing and/or cast curing the material. In this embodiment, the photochromic substance used can be chosen such that it is resistant to potentially adverse interactions with, for example, the isocyanate present. Such adverse interactions can result in deactivation of the photochromic substance, for example, by trapping them in either an open or closed form.

Further non-limiting examples of suitable photochromic substances for use in the present invention can include photochromic pigments and organic photochromic substances encapsulated in metal oxides such as those disclosed in U.S. Patent Nos. 4,166,043 and 4,367,170; organic photochromic substances encapsulated in an organic polymerizate such as those disclosed in U.S. Patent No. 4,931,220.

The invention will be further described by reference to the following examples. Unless otherwise indicated, all parts and percentages are by weight.

### EXAMPLES

The physical properties set forth below were measured as follows:
Light Transmittance (%) was measured according to ASTM E903-82;
Yellowness Index was measured according to ASTM D 1925-70;
Refractive index was measured on a multiple wavelength Abbe Refractometer Model DR-M2 manufactured by ATAGO Co., Ltd.; the refractive index of liquids were measured in accordance with ASTM-D 1218; and the refractive index of solids were measured in accordance with ASTM-D 542-00 (2006);
Density (grams/cm³) and specific gravity of solids were measured in accordance with ASTM-D 792-00;
Taber Abrasion (% haze) was measured for up to 100 cycles using a Taber Abrader having a CS-10F abrasion wheel with 500 grams of weight, for a sample size 3 inches by 3 inches by 1/8 inch (7.62 cm by 7.62 cm by 0.32 cm) according to ASTM D 1044-99;
Bayer Abrasion (% haze) was measured for according to ASTM F 735-94 (Reapproved 2001);
K-Factor crack propagation resistance was measured according to U.S. Dept. of Defense MIL-PRF-25690B (January 29, 1993).
Tensile strength at yield, percent elongation at yield, tensile stress at break, elongation at break, Modulus of elasticity, Poisson's ratio and Young's Modulus were measured at about 25°C in accordance with ASTM-D 638-03;
Shear properties, such as Maximum shear force and Maximum shear strength were measured in accordance with ASTM D732-02;
Gardner Impact Strength was measured in accordance with ASTM-D 5420-04;
Dynatup Multiaxial Impact Strength was measured in accordance with ASTM-D 3763-02 or D3763-10e1;
Shore D Hardness was measured in accordance with a Shore D durometer;
Vickers hardness was measured in accordance with ASTM E384-06;
QUV-B testing was conducted for 333 hours or 1000 hours (as specified) according to ASTM G-53;
Glass transition temperature (Tg) was measured using Dynamic Mechanical Analysis; and
Linear Coefficient of Thermal Expansion was measured using a duPont Thermomechanical analyzer (TMA) according to ASTM E 228-95 or ASTM D696-03.

The following abbreviations were used herein:
CHDM: 1,4-cyclohexane dimethanol;
Des N 3400: 60% hexamethylene diisocyanate dimer and 40% hexamethylene diisocyanate trimer commercially available from Bayer;
Des W or DESMODUR W: 4,4'-methylene-bis-(cyclohexyl isocyanate) commercially available from Bayer;
PDO: 1,5-pentanediol;
Polycarbonate diol 1: KM-10-1733 polycarbonate diol prepared from hexanediol having a molecular weight of 1000 g/mol commercially available from Stahl (also known as PC-1733);
Polycarbonate diol 2: KM10-1667 polycarbonate diol prepared from hexanediol having a molecular weight of 1000 g/mol commercially available from Stahl(also known as PC-1667); and
TMP: trimethylolpropane.

### Example Z1

A polyurethane was prepared from the following components:

| **Component** | **Equivalent Weight** | **Equivalents** | **Weight (g)** | **Weight (%)** |
|---|---|---|---|---|
| Des W | 131.2 | 1.0 | 131.2 | 51.9 |
| PC-1733 | 414.3 | 0.2 | 82.9 | 32.8 |
| | | | | |
| TMP | 44.7 | 0.7 | 31.3 | 12.4 |
| CHDM | 72.1 | 0.1 | 7.2 | 2.9 |

The PC-1733 and DESMODUR W (each preheated to 80°C) were added to a glass reaction kettle preheated to a temperature of 80°C before the addition of the components. The kettle was placed into a preheated heating mantle and heated to a temperature of approximately 110°C for less than one hour while the formulation was stirred and outgassed under a vacuum pressure of 28 mmHg. The temperature of the mixture peaked near 140°C after ½ hour, and returned to a temperature of 110°C within an hour. The temperature of the reactants was maintained at 110°C for 1 hour. The reaction product (isocyanate functional prepolymer) was stored in a sealed glass jar for 24 hours in an oven at a temperature of 75°C to 80°C.

The prepolymer was placed in a glass reaction kettle preheated to a temperature of 80°C before the addition of the components. The CHDM and TMP were each individually preheated to a temperature of 80°C, and added to the prepolymer in the reaction kettle. The reaction kettle was placed in a heating mantle set at 50-60% power and stirred while heating under vacuum at a pressureof 20 mmHg until the mixture reached 120°C (30 minutes).

Next, the mixture was cast between release coated 15" x 15" x 0.125" (38.1 cm x 38.1 cm x 0.3 cm) casting cell glass molds with a resin capacity of 420 grams each which had been preheated to a temperature of 120°C. The mixture was cured for two hours at approximately 120°C, followed by 22 hours at 160°C. The molds were removed from the oven and the plastic sheets were released.

The plastic sheets were cut into 6" x 2" x 1/8" (15.2 cm x 5.1 cm x 0.3 cm) to provide samples for determination of crack propagation resistance (K-Factor), glass transition temperature, and coupons for tensile testing and determining stress craze resistance. The K-factor crack propagation resistance was 2,873 1b/in^{3/2}. The glass transition temperature was 94 °C. The modulus of elasticity was 283,000 psi (1951.22 MPa), the tensile strength at yield was 10,600 psi (73.084 MPa) and the elongation at break was 6.5%.

### Example Z2

A poly(ureaurethane) was prepared as follows:

### Prepolymer Components:

| **Component** | **Equivalent Weight** | **Equivalents** | **Weight (g)** | **Weight (%)** |
|---|---|---|---|---|
| DesW | 131.2 | 1 | 131.2 | 61.29 |
| PC-1733 | 414.33 | 0.20 | 82.87 | 38.71 |

A prepolymer was prepared by preheating DesW to 80°C and adding the preheated DesW to a glass reaction kettle (preheated to 80 C before the addition of the components). The 1^{st} aliquot of a polycarbonate diol PC-1733 (0.1 equivalents) which had also been preheated to 80°C was added directly into the same reaction kettle. The kettle was then placed into a preheated heating mantle with the controller set to 110°C and the mixture was stirred under a nitrogen blanket. The temperature of the mixture was ∼ 74°C when mixing was started. The mixture was heated and stirred 2 ½ hours reaching a maximum temperature of ∼ 115°C in ∼ 2 hours. The heating mantle controller was then reduced to a temperature of 90°C while stirring continued under the nitrogen blanket. In ∼ 85 minutes the mixture had cooled to ∼ 94°C and the 2^{nd} aliquot of PC-1733 was added while stirring. After 30 minutes the mantle controller was raised to 110°C and stirring continued for another 4 hours then stirring was stopped, the nitrogen turned off, and the kettle was removed from the mantle. The mixture was then poured into a glass jar and sealed loosely with a lid and placed into a 90°C oven for storage. The prepolymer was clear and slightly viscous when removed from stirring at ∼ 111°C.

| **Component** | **Equivalent Weight** | **Equivalents** | **Weight (g)** | **Weight (%)** |
|---|---|---|---|---|
| DesW | 131.2 | 1 | 131.2 | 52.69 |
| PC-1733 | 414.33 | 0.20 | 82.87 | 33.28 |
| DI H₂O | 9.0 | 0.10 | 0.90 | 0.36 |
| CHDM | 72.11 | 0.10 | 7.21 | 2.90 |
| TMP | 44.70 | 0.60 | 26.82 | 10.77 |

The 1 equivalent DesW / 0.2 equivalents PC-1733 prepolymer was preheated to 80°C and added to a glass reaction kettle (preheated to 80°C before the addition of the components). The 0.1 equivalent of deionized H₂O was added to the same kettle. The kettle was placed into a preheated heating mantle with the controller set to 80°C and the mixture was stirred under a nitrogen blanket. The temperature of the mixture was 76°C when mixing was started. The mixture was heated and stirred 1½ hours, then the CHDM and TMP (both preheated to 80°C) were combined and added to the mixture while stirring. The mantle temperature was then set to 50% of its maximum output. Ten minutes after the CHDM and TMP were added, the nitrogen blanket was turned off. The mixture was outgassed for 20 minutes at a vacuum pressure of 29 inHg, after which the mixture had reached a temperature of 122°C. The stirring was stopped at this point, the vacuum was released, and the kettle removed from the heating mantle. The mixture was then poured into a 15"x15"x1/8" (38.1 cm x 38.1 cm x 0.3 cm) release coated glass cell preheated to 121°C (250°F). The cell was cured 2 hours at 121°C (250°F) followed by 22 hours at 160°C (320°F). Samples were prepared from the cured polymer as described above. The test data is reported below:
Modulus of elasticity = 269,800 psi (1860.21 MPa)
Tensile strength at break = 9,311 psi (64.20 MPa)
Elongation at break = 7%
Tg = 82°C
Mean failure energy in Gardner impact test = 89 in-lb (10 Joules)
K-factor = 3,810 lb x inch^{-3/2}

### Example Z3

A polyurethane was prepared as follows:

### Prepolymer Components:

| **Component** | **Equivalent Weight** | **Equivalents** | **Weight (g)** | **Weight (%)** |
|---|---|---|---|---|
| DesW | 131.2 | 1 | 131.2 | 72.95 |
| PC-1733 | 414.33 | 0.1 | 41.43 | 23.04 |
| CHDM | 72.11 | 0.1 | 7.21 | 4.01 |

The weight amounts in the table were proportionately increased and a batch of the prepolymer was prepared as follows: DesW (preheated to 70°C) was added to an epoxy phenolic lined 5 gallon steel pail. The PC-1733 (polycarbonate diol from Stahl) was preheated to 80°C. The PC-1733 (0.1 equivalents) was added directly into the same pail as the DesW. The pail was placed in an exhaust hood and covered with a lid that had provisions for an overhead stirrer, nitrogen feed, and a thermocouple for monitoring temperatures. The mixture was stirred vigorously forming a vortex with the overhead stirrer under a nitrogen blanket (the starting temperature was approximately 64°C). The mixture was stirred with the heating controller set to 90°C for approximately 70 minutes. The controller setting was then increased to 110°C and the mixture was allowed to stir for 90 minutes. The controller setting was reduced to 90°C and the mixture stirred and allowed to cool to approximately 91°C in 30 minutes. The CHDM (1,4-cyclohexanedimethanol) was then added while stirring and stirred for ½ hour with the controller set at 90°C. The controller was then set to 110°C and the mixture was stirred under the nitrogen blanket for an additional 1 hour 40 minutes. The heat band was then removed the nitrogen blanket turned off and stirring was stopped. A normal lid was placed loosely over the mixture after capping with nitrogen and then was siphoned directly in the prepolymer tank of the Max machine and held at 70°C overnight awaiting casting use.

| **Component** | **Equivalent Weight** | **Equivalents** | **Weight (g)** | **Weight (%) Total Formula** | **Prepolymer Weight %** |
|---|---|---|---|---|---|
| DesW in prepolymer | 131.2 | 1 | 131.2 | | 7295 |
| PC-1733 in prepolymer | 414.33 | 0.1 | 41.43 | | 23.04 |
| CHDM in prepolymer | 72.11 | 0.1 | 7.21 | | 4.01 |
| prepolymer totals: | | | | 78.43 | 100 |
| TMP | 44.7 | 0.3 | 13.41 | 5.85 | |
| CHDM | 72.11 | 0.50 | 36.06 | 17.72 | |

A polymer was made (0.1 eq PC-1733, 0.6 eq CHDM /0.3 eq TMP/ 1.0 eq DesW) using a Max urethane processor as described above with the use of a prepolymer (1 eq DesW / 0.1 eq PC-1733 (a carbonate diol from Stahl) / 0.1 eq CHDM). The prepolymer was preheated to 120°C and loaded into the A1 tank. The remaining CHDM (1,4-cyclohexanedimethanol) and TMP (trimethylolpropane) were preheated to 80°C, then combined at the proper ratio and added to the B2 polyol tank. Both tanks were then heated to 120°C while stirring under vacuum for approximately 1 hour until the components had individually reached the set point temperature. Both materials were then recirculated through the Max machine lines for approximately 1 hour to make sure that they are uniformly heated throughout the system. The components were then calibrated individually to ensure the proper delivery rate (1176.43 g/min. for the prepolymer and 323.57 g/min. for the polyol mix). The mixture was passed through the 250 cc heated mixing head that was set to 120°C and the stir rate at approximately 3000 RPM. The mixture was cast into a glass jar from an elbow shaped tip directly attached to the mix head. The mixture cleared immediately out of the mix head. The material was then cast into two 15 x 15 x 1/8" (38.1 cm x 38.1 cm x 0.3 cm) release treated glass cells that had been preheated to 121°C. They were then cured 2 hours at 121°C followed by 22 hours at 160°C. The samples were allowed to cool and then released from the glass cells. The samples cured clearly and without any cracking.

### Example Z5

A polyurethane was prepared as follows:

### Components:

| **Component** | **Equivalent Weight** | **Equivalents** | **Weight (g)** | **Weight (%)** |
|---|---|---|---|---|
| Des W | 131.2 | 1.0 | 131.2 | 51.9 |
| PC-1733 | 414.3 | 0.1 | 41.4 | 16.6 |
| PC-1667 | 391.8 | 0.1 | 39.2 | 15.7 |
| | | | | |
| TMP | 44.7 | 0.7 | 31.3 | 12.5 |
| CHDM | 72.1 | 0.1 | 7.2 | 2.9 |

A prepolymer was prepared by adding PC-1733, PC-1667 and DESMODUR W (each preheated to 80°C) to a glass reaction kettle preheated to a temperature of 80°C before the addition of the components. The kettle was placed into a preheated heating mantle and heated to a temperature of approximately 110°C for less than one hour while the formulation was stirred and outgassed under a vacuum pressure of -28 mmHg. The temperature of the mixture peaked near 128°C after ½ hour, and returned to a temperature of 110°C within an hour. The temperature of the reactants was maintained at 110°C for 1 hour. The reaction product (isocyanate functional prepolymer) was stored in a sealed glass jar for 24 hours in an oven at a temperature of 75°C to 90°C.

The prepolymer was placed in a glass reaction kettle preheated to a temperature of 80°C before the addition of the components. To prepare the polymer, CHDM and TMP were each individually preheated to a temperature of 80°C, and added to the prepolymer in the reaction kettle. The reaction kettle was placed in a heating mantle set at 50-60% power and the mixture was stirred while heating under vacuum at a pressure of 29 mm Hg until the mixture reached 125°C (30 minutes).

Next, the mixture was cast between release coated 15" x 15" x 0.125" (38.1 cm x 38.1 cm x 0.3 cm) casting cell glass molds with a resin capacity of 420 grams each which had been preheated to a temperature of 120°C. The mixture was cured for two hours at approximately 120°C, followed by 22 hours at 160°C. The mold was removed from the oven and the plastic released.

The plastic sheet was cut into 6" x 2" x 0.125" (15.2 cm x 5.1 cm x 0.3 cm) samples for the determination of crack propagation resistance (K-Factor), and coupons for tensile tests. The K Factor crack propagation resistance was 1085 lb/in^{3/2}. The tensile strength at yield was 10,500 psi (72.395 MPa), the modulus of elasticity was 342,000 psi (2358.01 MPa), and the elongation at break was 4.6%.

### Hypothetical Example

The following Example is a hypothetical example.

### Example A

A polyurethane of the present invention can be prepared according to the following method. First, a prepolymer can be prepared from the following components:

### Prepolymer Components:

| **Component** | **Equivalent Weight** | **Equivalents** | **Weight (g)** | **Weight (%)** | **Weight to measure** |
|---|---|---|---|---|---|
| DesW | 131.2 | 1 | 131.2 | 75.68 | 13244 |
| UH-100W | 482.66 | 0.05 | 24.133 | 13.921 | 2436.175 |
| CHDM | 72.11 | 0.25 | 18.0275 | 10.431 | (1819.825-121.687) = 11698.138 |
| Totals | | | 172.3605 | 100 | 17378.313 |
| H3PO4 0.1% in CHDM | | | | | 121.809 (50ppm based on UH100W) |

The prepolymer can be prepared as follows: DesW (preheated to 70°C) can be added to an epoxy phenolic lined 5 gallon steel pail. The pail can be placed in an exhaust hood and covered with a lid that has provisions for an overhead stirrer, nitrogen feed, and a thermocouple for monitoring temperatures. The mixture can be stirred vigorously forming a vortex with the overhead stirrer under a nitrogen blanket. The mixture can be stirred with the heating controller set to 90°C until the DesW reaches 90°C. The UH-100W (polycarbonate diol from UBE) can be preheated to 80°C. The UH-100W (0.05 equivalents) can be added directly into the same pail as the DesW while stirring and stirred for ½ hour with the controller set at 90°C. The controller setting can be increased to 110°C and the mixture allowed to stir for 90 minutes. The controller setting can be reduced to 90°C and the mixture stirred and allowed to cool to approximately 90°C. The CHDM (1,4-cyclohexanedimethanol) and the H₃PO₄ 0.1% in CHDM can be combined and preheated to 80°C. They can be added to the mixture while stirring and stirred for ½ hour with the controller set at 90°C. The controller can be set to 110°C and the mixture stirred under the nitrogen blanket for an additional 2 hours. The heat band can be removed, the nitrogen blanket turned off and the stirring stopped. A normal lid can be placed loosely over the mixture after capping with nitrogen and then siphoned directly in the prepolymer tank of the Max machine and held at 70°C overnight awaiting casting use.

| **Component** | **Equivalent Weight** | **Equivalents** | **Weight (g)** | **Weight % in Prepolymer** | **Weight % Total Formula** | **Weight to measure** |
|---|---|---|---|---|---|---|
| DesW | 131.2 | 1 | 131.2 | 75.68 | 59.34 | |
| UH-100W | 482.66 | 0.05 | 24.133 | 13.921 | 10.92 | |
| CHDM in prepolymer | 72.11 | 0.25 | 18.0275 | 10.399 | 8.15 | |
| Prepolymer Totals | | | 173.3605 | 100 | 78.41 | 1176.15 |
| CHDM | 72.11 | 0.6 | 43.266 | | 19.57 | 293.55 |
| TMP | 44.7 | 0.1 | 4.47 | | 2.02 | 30.3 |
| Total | | 2 | 221.0965 | | 100 | 1500 |

| | | | | | | |
|---|---|---|---|---|---|---|
| *Note: The prepolymer contains 50 ppm H3PO4 based on the amount of UH-100W | | | | | | |

The prepolymer made from one equivalent DesW, 0.05 equivalents UH-100W (polycarbonate diol from UBE), and 0.25 equivalents 1,4 cyclohexanedimethanol (CHDM) can be preheated to 120°C and placed directly into the A1 tank of a Max Urethane Processor. The remaining CHDM and TMP needed to complete the formulation can be preheated to 80°C to melt and then combined in the proper ratio and placed in the B2 tank of the Max machine. Both tanks can be stirred and heated to 125°C under vacuum and circulated through the lines for a minimum of 2 hours. Each tank can be calibrated to insure the proper flow rates of 1175.25 g/min for A1 and 324.75 g/min for the B2 tank. The materials can be passed through a 250cc heated mix head stirring at approximately 3000 RPM. The material can be flowed through a heat traced line through an external filter then directly into an oven containing casting cells. The 15"×15"×1/8" release treated glass casting cells can be preheated to 121°C (250°F) for a minimum of 2 hours prior to casting. The cells can be cured for 2 hours at 121°C (250°F), then ramped to 160°C (320°F) in 20 minutes and held at 160°C (320°F) for 22 hours. The cells can be allowed to cool overnight and the cast parts released from the cells.

## Claims

1. A polyurethane comprising a reaction product of components comprising:
(a) an isocyanate functional prepolymer comprising a reaction product of components comprising:
(1) 1 equivalent of at least one polyisocyanate; and
(2) 0.1 to 0.4 equivalent of at least one polycarbonate polyol based upon the 1 equivalent of the at least one polyisocyanate; and
(b) 0.5 to 0.8 equivalent of trimethylolpropane based upon the 1 equivalent of the at least one polyisocyanate; and
(c) 0.1 to 0.5 equivalent of pentanediol or cyclohexane dimethanol based upon the 1 equivalent of the at least one polyisocyanate.

2. A polyurethane comprising a reaction product of components consisting of:
(a) an isocyanate functional prepolymer comprising a reaction product of:
(1) 1 equivalent of at least one polyisocyanate; and
(2) 0.1 to 0.4 equivalent of at least one polycarbonate polyol based upon the 1 equivalent of the at least one polyisocyanate; and
(b) 0.5 to 0.8 equivalent of trimethylolpropane based upon the 1 equivalent of the at least one polyisocyanate; and
(c) 0.1 to 0.5 equivalent of butanediol based upon the 1 equivalent of the at least one polyisocyanate.

3. The polyurethane according to claims 1 or 2, wherein the polyisocyanate is selected from the group consisting of diisocyanates, triisocyanates, dimers, trimers and mixtures thereof, preferably the polyisocyanate is selected from the group consisting of ethylene diisocyanate, trimethylene diisocyanate, 1,6-hexamethylene diisocyanate, tetramethylene diisocyanate, hexamethylene diisocyanate, octamethylene diisocyanate, nonamethylene diisocyanate, decamethylene diisocyanate, isophorone diisocyanate, 1,6,11-undecane-triisocyanate, 1,3,6-hexamethylene triisocyanate, bis(isocyanatoethyl)-carbonate, bis(isocyanatoethyl)ether, trimethylhexane diisocyanate, trimethylhexamethylene diisocyanate, 2,2'-dimethylpentane diisocyanate, 2,2,4-trimethylhexane diisocyanate, 2,4,4-trimethylhexamethylene diisocyanate, 1,8-diisocyanato-4-(isocyanatomethyl)octane, 2,5,7-trimethyl-1,8-diisocyanato-5-(isocyanatomethyl)octane, 2-isocyanatopropyl-2,6-diisocyanatohexanoate, lysinediisocyanate methyl ester, 4,4'-methylene-bis-(cyclohexyl isocyanate), 4,4'-isopropylidene-bis-(cyclohexyl isocyanate), 1,4-cyclohexyl diisocyanate, 4,4'-dicyclohexylmethane diisocyanate, 3-isocyanato methyl-3,5,5-trimethylcyclohexyl isocyanate, meta-tetramethylxylylene diisocyanate, diphenyl methane diisocyanates, diphenyl isopropylidene diisocyanate, diphenylene diisocyanate, butene diisocyanate, 1,3-butadiene-1,4-diisocyanate, cyclohexane diisocyanate, methylcyclohexane diisocyanate, bis(isocyanatomethyl) cyclohexane, bis(isocyanatocyclohexyl)methane, bis(isocyanatocyclohexyl)-2,2-propane, bis(isocyanatocyclohexyl)-1,2-ethane, 2-isocyanatomethyl-3-(3-isocyanatopropyl)-5-isocyanatomethyl-bicyclo[2.2.1]-heptane, 2-isocyanatomethyl-3-(3-isocyanatopropyl)-6-isocyanatomethyl-bicyclo[2.2.1]-heptane, 2-isocyanatomethyl-2-(3-isocyanatopropyl)-5-isocyanatomethyl-bicyclo[2.2.1]-heptane, 2-isocyanato-methyl-2-(3-isocyanatopropyl)-6-isocyanatomethyl-bicyclo[2.2.1]-heptane, 2-isocyanatomethyl-3-(3-isocyanatopropyl)-6-(2-isocyanatoethyl)-bicyclo[2.2.1]-heptane, 2-isocyanatomethyl-2-(3-isocyanatopropyl)-5-(2-isocyanatoethyl)-bicyclo-[2.2.1]-heptane, 2-isocyanatomethyl-2-(3-isocyanatopropyl)-6-(2-isocyanatoethyl)-bicyclo[2.2.1]-heptane, α,α'-xylene diisocyanate, bis(isocyanatoethyl)benzene, α,α,α',α'-tetramethylxylene diisocyanate, 1,3-bis(1-isocyanato-1-methylethyl) benzene, bis(isocyanatobutyl)benzene, bis(isocyanatomethyl)naphthalene, bis(isocyanatomethyl)diphenyl ether, bis(isocyanatoethyl) phthalate, mesitylene triisocyanate, 2,5-di(isocyanatomethyl)furan, α,α'-xylene diisocyanate, bis(isocyanatoethyl)benzene, α,α,α',α'-tetramethylxylene diisocyanate, 1,3-bis(1-isocyanato-1-methylethyl)benzene, bis(isocyanatobutyl) benzene, bis(isocyanatomethyl)naphthalene, bis(isocyanatomethyl)diphenyl ether, bis(isocyanatoethyl) phthalate, 2,5-di(isocyanatomethyl)furan, diphenylether diisocyanate, bis(isocyanatophenylether)ethyleneglycol, bis(isocyanatophenylether)-1,3-propyleneglycol, benzophenone diisocyanate, carbazole diisocyanate, ethylcarbazole diisocyanate, dichlorocarbazole diisocyanate, and dimers, trimers and mixtures thereof, or the polyisocyanate is a trimer of a diisocyanate selected from the group consisting of hexamethylene diisocyanate, isophorone diisocyanate, tetramethylxylylene diisocyanate, and mixtures thereof.

4. The polyurethane according to claims 1 or 2, wherein the polycarbonate polyol is prepared from hexanediol and dialkyl carbonate.

5. The polyurethane according to claim 1, wherein the components further comprise one or more polyurethane polyols, acrylamides, polyvinyl alcohols, hydroxy functional acrylates, hydroxy functional methacrylates, allyl alcohols, dihydroxy oxamides, dihydroxyamides, dihydroxy piperidines, dihydroxy phthalates, dihydroxyethyl hydroquinones and mixtures thereof.

6. The polyurethane according to claims 1 or 2, wherein the components further comprise 0.01 to 0.5 equivalent of water based upon the 1 equivalent of the at least one polyisocyanate, preferably the water is reacted with the polyisocyanate and polycarbonate polyol to form an isocyanate functional ureaurethane prepolymer.

7. The polyurethane according to claim 1, wherein the components are free of polyether polyol or comprise less than 10 weight percent of polyether polyol or wherein the components are free of polyester polyol other than the polycarbonate polyol or comprise less than 10 weight percent of polyester polyol other than the polycarbonate polyol.

8. The polyurethane according to claim 1, wherein the components are free of amine curing agent or comprise less than 10 weight percent of amine curing agent.

9. The polyurethane according to claims 1 or 2, wherein, upon mixing, the components are maintained at a temperature of at least 100°C for at least 10 minutes prior to degassing, and reacted at a temperature of at least 110°C for at least 6 hours, preferably the components are maintained at a temperature of at least 110°C for at least 10 minutes prior to degassing, and reacted at a temperature of at least 120°C for at least 6 hours.

10. The polyurethane according to claim 1, comprising a reaction product of components comprising:
(a) an isocyanate functional urethane prepolymer comprising a reaction product of components comprising:
(i) 1 equivalent of at least one polyisocyanate; and
(ii) 0.2 equivalent of polycarbonate diol based upon the 1 equivalent of the at least one polyisocyanate;
(b) 0.7 equivalent of trimethylolpropane based upon the 1 equivalent of the at least one polyisocyanate; and
(c) 0.1 equivalent of pentanediol or cyclohexane dimethanol based upon the 1 equivalent of the at least one polyisocyanate.

11. An article comprising the polyurethane of claims 1 or 2, wherein the article is preferably a molded article, more preferably the article is selected from the group consisting of optical articles, optical lenses, photochromic articles, photochromic lenses, windows, transparencies, windshields, sidelights, backlights, aircraft transparencies, ballistic resistant articles, windmill components, glazings, exterior viewing surfaces of liquid crystal displays, cathode ray tubes, films, sheeting, conductive films, microwave absorbing films, low resistance films, blast resistant panels, bullet resistant panels, and radomes, and most preferably the article is an aircraft transparency.

12. The article according to claim 11, wherein the article is a curved article or a flat article.

13. An article comprising at least one layer of the polyurethane of claims 1 or 2 and at least one layer of polycarbonate.

14. A laminate comprising:
(a) at least one layer of the polyurethane of claims 1 or 2; and
(b) at least one layer of a substrate selected from the group consisting of paper, glass, ceramic, wood, masonry, textile, metal or organic polymeric material and combinations thereof.

15. A coating composition comprising the polyurethane of claims 1 or 2.

16. A process for preparing a polyurethane article comprising:
(a) heating a mixture of 1 equivalent of at least one polyisocyanate and 0.1 to 0.4 equivalent of at least one polycarbonate polyol based upon the 1 equivalent of the at least one polyisocyanate, to a temperature of 110°C to 130°C for at least an hour to form a reaction product;
(b) mixing the reaction product (a) with 0.5 to 0.8 equivalent of trimethylolpropane, based upon the 1 equivalent of the at least one polyisocyanate, and 0.1 to 0.5 equivalent of butanediol, pentanediol or cyclohexane dimethanol, based upon the 1 equivalent of the at least one polyisocyanate, until the mixture reaches a temperature of at least 110°C to 130°C, optionally by heating if necessary;
(c) casting the reaction product into a mold preheated to a temperature of at least 100°C to 130°C; and
(d) curing the reaction product at a first predetermined temperature of 100°C to 120°C for at least 0.5 hours; and then at a second predetermined temperature of 140°C to 180°C for 15 to 30 hours.

## Patentansprüche

1. Polyurethan enthaltend ein Reaktionsprodukt von Komponenten, die enthalten:
(a) ein isocyanatfunktionelles Präpolymer enthaltend ein Reaktionsprodukt von Komponenten, die enthalten:
(1) 1 Äquivalent mindestens eines Polyisocyanats und
(2) 0,1 bis 0,4 Äquivalente mindestens eines Polycarbonatpolyols, bezogen auf das 1 Äquivalent des mindestens einen Polyisocyanats, und
(b) 0,5 bis 0,8 Äquivalente Trimethylolpropan, bezogen auf das 1 Äquivalent des mindestens einen Polyisocyanats, und
(c) 0,1 bis 0,5 Äquivalente Pentandiol oder Cyclohexandimethanol, bezogen auf das 1 Äquivalent des mindestens einen Polyisocyanats.

2. Polyurethan enthaltend ein Reaktionsprodukt von Komponenten, die bestehen aus:
(a) einem isocyanatfunktionellem Präpolymer enthaltend ein Reaktionsprodukt von:
(1) 1 Äquivalent mindestens eines Polyisocyanats und
(2) 0,1 bis 0,4 Äquivalente mindestens eines Polycarbonatpolyols, bezogen auf das 1 Äquivalent des mindestens einen Polyisocyanats, und
(b) 0,5 bis 0,8 Äquivalente Trimethylolpropan, bezogen auf das 1 Äquivalent des mindestens einen Polyisocyanats, und
(c) 0,1 bis 0,5 Äquivalente Butandiol, bezogen auf das 1 Äquivalent des mindestens einen Polyisocyanats

3. Polyurethan gemäß Anspruch 1 oder 2, wobei das Polyisocyanat ausgewählt ist aus der Gruppe bestehend aus Diisocyanaten, Triisocyanaten, Dimeren, Trimeren und Mischungen daraus, vorzugsweise das Polyisocyanat ausgewählt ist aus der Gruppe bestehend aus Ethylendiisocyanat, Trimethylendiisocyanat, 1,6-Hexamethylendiisocyanat, Tetramethylendiisocyanat, Hexamethylendiisocyanat, Octamethylendiisocyanat, Nonamethylendiisocyanat, Decamethylendiisocyanat, Isophorondiisocyanat, 1,6,11-Undecanetriisocyanat, 1,3,6-Hexamethylentriisocyanat, Bis(iso-cyanatoethyl)carbonat, Bis(isocyanatoethyl)ether, Trimethylhexandiisocyanat, Trimethylhexamethylendiisocyanat, 2,2'-Dimethylpentandiisocyanat, 2,2,4-Trimethylhexandiisocyanat, 2,4,4-Trimethylhexamethylendiisocyanat, 1,8-Diisocyanato-4-(isocyanatomethyl)octan, 2,5,7-Trimethyl-1,8-diisocyanato-5-(isocyanatomethyl)octan, 2-Isocyanatopropyl-2,6-diisocyanatohexanoat, Lysindiisocyanatmethyl ester, 4,4'-Methylen-bis(cyclohexylisocyanat), 4,4'-Isopropyliden-bis(cyclohexylisocyanat), 1,4-Cyclohexyldiisocyanat, 4,4'-Dicyclohexylmethandiisocyanat, 3-Isocyanatomethyl-3,5,5-trimethylcyclohexylisocyanat, meta-Tetramethylxylylendiisocyanat, Diphenylmethandiisocyanaten, Diphenylisopropylidendiisocyanat, Diphenylendiisocyanat, Butyldiisocyanat, 1,3-Butadiene-1,4-diisocyanat, Cyclohexandiisocyanat, Methylcyclohexandiisocyanat, Bis(isocyanatomethyl)cyclohexan, Bis(isocyanatocyclohexyl)methan, Bis(isocyanatocyclohexyl)-2,2-propan, Bis(isocyanatocyclohexyl)-1,2-ethan, 2-Isocyanatomethyl-3-(3-isocyanatopropyl)-5-isocyanatomethyl-bicyclo[2.2.1]-heptan, 2-Isocyanatomethyl-3-(3-isocyanatopropyl)-6-isocyanatomethyl-bicyclo[2.2.1]-heptan, 2-Isocyanatomethyl-2-(3-isocyanatopropyl)-5-isocyanatomethyl-bicyclo[2.2.1]-heptan, 2-Isocyanatomethyl-2-(3-isocyanato-propyl)-6-isocyanatomethyl-bicyclo[2.2.1]-heptan, 2-Isocyanatomethyl-3-(3-isocyanatopropyl)-6-(2-isocyanatoethyl)-bicyclo[2.2.1]-heptan, 2-Isocyanatomethyl-2-(3-isocyanatopropyl)-5-(2-isocyanatoethyl)-bicyclo-[2.2.1]-heptan, 2-Isocyanatomethyl-2-(3-isocyanatopropyl)-6-(2-isocyanatoethyl)-bicyclo[2.2.1]-heptan, α,α'-Xyloldiisocyanat, Bis(isocyanatoethyl)benzol, α,α,α',α'-Tetramethylxyloldiisocyanat, 1,3-Bis(1-isocyanato-1-methylethyl)-benzol, Bis(isocyanatobutyl)benzol, Bis(isocyanatomethyl)naphthalin, Bis(isocyanatomethyl)diphenylether, Bis(isocyanatoethyl)phthalat, Mesitylentriisocyanate, 2,5-Di(isocyanatomethyl)furan, α,α'-Xyloldiisocyanat, Bis(isocyanatoethyl)benzene, α,α,α',α'-Tetramethylxyloldiisocyanat, 1,3-Bis(1-isocyanato-1-methylethyl)benzol, Bis(isocyanatobutyl)-benzol, Bis(isocyanatomethyl)naphthalin, Bis(isocyanatomethyl)diphenylether, Bis(isocyanatoethyl)phthalat, 2,5-Di(isocyanatomethyl)furan, Diphenyletherdiisocyanat, Bis(isocyanatophenylether)ethylenglykol, Bis(isocyanatophenylether)-1,3-propylenglykol, Benzophenondiisocyanat, Carbazoldiisocyanat, Ethylcarbazoldiisocyanat, Dichlorcarbazoldiisocyanat und Dimeren, Trimeren und Mischungen daraus, oder das Polyisocyanat ein Trimer eines Diisocyanats ist, ausgewählt aus der Gruppe bestehend aus Hexamethylendiisocyanat, Isophorondiisocyanat, Tetramethylxylylendiisocyanat und Mischungen daraus.

4. Polyurethan gemäß Anspruch 1 oder 2, wobei das Polycarbonatpolyol aus Hexandiol und Dialkylcarbonat hergestellt ist.

5. Polyurethan gemäß Anspruch 1, wobei die Komponenten ferner ein oder mehrere Polyurethanpolyole, Acrylamide, Polyvinylalkohole, hydroxyfunktionelle Acrylate, hydroxyfunktionelle Methacrylate, Allylalkohole, Dihydroxyoxamide, Dihydroxyamide, Dihydroxypiperidine, Dihydroxyphthalate, Dihydroxyethylhydrochinone und Mischungen daraus enthalten.

6. Polyurethan gemäß Anspruch 1 oder 2, wobei die Komponenten ferner 0,01 bis 0,5 Äquivalente Wasser, bezogen auf das 1 Äquivalent des mindestens einen Polyisocyanats, enthalten, vorzugsweise das Wasser mit dem Polyisocyanat und Polycarbonatpolyol umgesetzt ist, um ein isocyanatfunktionelles Harnstoffurethanpräpolymer zu bilden.

7. Polyurethan gemäß Anspruch 1, wobei die Komponenten frei von Polyetherpolyol sind oder weniger als 10 Gew.-% Polyetherpolyol enthalten oder wobei die Komponenten frei von Polyesterpolyol, der nicht das Polycarbonatpolyol ist, sind oder weniger als 10 Gew.-% Polyesterpolyol, das nicht das Polycarbonatpolyol ist, enthalten.

8. Polyurethan gemäß Anspruch 1, wobei die Komponenten frei von Aminhärtungsmittel sind oder weniger als 10 Gew.-% Aminhärtungsmittel enthalten.

9. Polyurethan gemäß Anspruch 1 oder 2, wobei die Komponenten nach Mischen bei einer Temperatur von mindestens 100°C für mindestens 10 Minuten vor Entgasung gehalten werden und bei einer Temperatur von mindestens 110°C für mindestens 6 Stunden umgesetzt werden, vorzugsweise die Komponenten bei einer Temperatur von mindestens 110°C für mindestens 10 Minuten vor Entgasung gehalten werden und bei einer Temperatur von mindestens 120°C für mindestens 6 Stunden umgesetzt werden.

10. Polyurethan gemäß Anspruch 1 enthaltend ein Reaktionsprodukt von Komponenten, die enthalten:
(a) ein isocyanatfunktionelles Präpolymer enthaltend ein Reaktionsprodukt von Komponenten, die enthalten:
(i) 1 Äquivalent mindestens eines Polyisocyanats und
(ii) 0,2 Äquivalente Polycarbonatdiol, bezogen auf das 1 Äquivalent des mindestens einen Polyisocyanats,
(b) 0,7 Äquivalente Trimethylolpropan, bezogen auf das 1 Äquivalent des mindestens einen Polyisocyanats, und
(c) 0,1 Äquivalent Pentandiol oder Cyclohexandimethanol, bezogen auf das 1 Äquivalent des mindestens einen Polyisocyanats.

11. Gegenstand enthaltend das Polyurethan der Ansprüche 1 oder 2, wobei der Gegenstand vorzugsweise ein Formkörper ist, bevorzugter der Gegenstand ausgewählt ist aus der Gruppe bestehend aus optischen Gegenständen, optischen Linsen, photochromen Gegenständen, photochromen Linsen, Fenstern, transparenten Gegenständen, Windschutzscheiben, Seitenfenstern, Rückfenstern, Flugzeugfenstern, ballistischen Schutzgegenständen, Windradkomponenten, Verglasungen, äußeren Sichtflächen von Flüssigkristalldisplays, Kathodenstrahlröhren, Folien, Verkleidungen, leitfähigen Folien, mikrowellenabsorbierenden Folien, Folien mit geringem Widerstand, Explosionsschutzplatten, kugelsicheren Platten und Radarkuppeln und am meisten bevorzugt der Gegenstand ein Flugzeugfenster ist.

12. Gegenstand nach Anspruch 11, wobei der Gegenstand ein gebogener Gegenstand oder ein flacher Gegenstand ist.

13. Gegenstand enthaltend mindestens eine Schicht des Polyurethans aus Anspruch 1 oder 2 und mindestens eine Schicht Polycarbonat.

14. Laminat aufweisend:
(a) mindestens eine Schicht des Polyurethans aus Anspruch 1 oder 2 und
(b) mindestens eine Schicht aus einem Substrat, ausgewählt aus der Gruppe bestehend aus Papier, Glas, Keramik, Holz, Mauerwerk, Textilien, Metall oder organischem polymerem Material und Kombinationen davon.

15. Beschichtungszusammensetzung enthaltend das Polyurethan aus Anspruch 1 oder 2.

16. Verfahren zur Herstellung eines Polyurethangegenstands umfassend:
(a) Erwärmen einer Mischung aus 1 Äquivalent mindestens eines Polyisocyanats und 0,1 bis 0,4 Äquivalenten mindestens eines Polycarbonatpolyols, bezogen auf das 1 Äquivalent des mindestens einen Polyisocyanats, auf eine Temperatur von 110°C bis 130 °C für mindestens eine Stunde, um ein Reaktionsprodukt zu bilden;
(b) Mischen des Reaktionsprodukts (a) mit 0,5 bis 0,8 Äquivalenten Trimethylolpropan, bezogen auf das 1 Äquivalent des mindestens einen Polyisocyanats, und 0,1 bis 0,5 Äquivalenten Butandiol, Pentandiol oder Cyclohexandimethanol, bezogen auf das 1 Äquivalent des mindestens eine Polyisocyanats, bis die Mischung eine Temperatur von mindestens 110°C bis 130 °C erreicht, optional durch Erwärmen, falls nötig;
(c) Gießen des Reaktionsprodukts in eine Form, die auf eine Temperatur von mindestens 100 °C bis 130 °C vorgeheizt wurde, und
(d) Härten des Reaktionsprodukts bei einer ersten vorbestimmten Temperatur von 100 °C bis 120 °C für mindestens 0,5 Stunden und dann bei einer zweiten vorbestimmten Temperatur von 140 °C bis 180 °C für 15 bis 30 Stunden.

## Revendications

1. Polyuréthane comprenant un produit de réaction de composants comprenant :
a) un prépolymère à fonction isocyanate, comprenant un produit de réaction de composants comprenant :
1) 1 équivalent d'au moins un polyisocyanate,
2) et 0,1 à 0,4 équivalent d'au moins un polycarbonate-polyol, par rapport au 1 équivalent du polyisocyanate au nombre d'au moins un,
b) 0,5 à 0,8 équivalent de triméthylolpropane, par rapport au 1 équivalent du polyisocyanate au nombre d'au moins un,
c) et 0,1 à 0,5 équivalent de pentanediol ou de cyclohexanediméthanol, par rapport au 1 équivalent du polyisocyanate au nombre d'au moins un.

2. Polyuréthane comprenant un produit de réaction de composants comprenant :
a) un prépolymère à fonction isocyanate, comprenant un produit de réaction de composants comprenant :
1) 1 équivalent d'au moins un polyisocyanate,
2) et 0,1 à 0,4 équivalent d'au moins un polycarbonate-polyol, par rapport au 1 équivalent du polyisocyanate au nombre d'au moins un,
b) 0,5 à 0,8 équivalent de triméthylolpropane, par rapport au 1 équivalent du polyisocyanate au nombre d'au moins un,
c) et 0,1 à 0,5 équivalent de butanediol, par rapport au 1 équivalent du polyisocyanate au nombre d'au moins un.

3. Polyuréthane conforme à la revendication 1 ou 2, pour lequel le polyisocyanate est choisi dans l'ensemble formé par les diisocyanates, triisocyanates, leurs dimères et trimères et leurs mélanges, et de préférence, le polyisocyanate est choisi dans l'ensemble formé par les suivants : éthylène-diisocyanate, triméthylène-diisocyanate, hexaméthylène-1,6-diisocyanate, tétraméthylène-diisocyanate, hexaméthylène-diisocyanate, octaméthylène-diisocyanate, nonaméthylène-diisocyanate, décaméthylène-diisocyanate, isophorone-diisocyanate, undécane-1,6,11-triisocyanate, hexaméthylène-1,3,6-triisocyanate, carbonate de bis(isocyanato-éthyle), bis(isocyanato-éthyl)-éther, triméthyl-hexane-diisocyanate, triméthyl-hexaméthylène-diisocyanate, 2,2'-diméthyl-pentane-diisocyanate, 2,2,4-triméthyl-hexane-diisocyanate, 2,4,4-triméthyl-hexaméthylène-diisocyanate, 1,8-diisocyanato-4-(isocyanato-méthyl)-octane, 2,5,7-triméthyl-1,8-diisocyanato-5-(isocyanato-méthyl)-octane, 2,6-diisocyanato-hexanoate de 2-isocyanato-propyle, ester méthylique de lysine-diisocyanate, 4,4'-méthylène-bis(cyclohexane-isocyanate), 4,4'-isopropylidène-bis(cyclohexane-isocyanate), cyclohexane-1,4-diisocyanate, dicyclohexyl-méthane-4,4'-diisocyanate, 3-(isocyanato-méthyl)-3,5,5-triméthyl-cyclohexane-isocyanate, tétraméthyl-méta-xylylène-diisocyanate, diphényl-méthane-diisocyanates, diphényl-isopropylidène-diisocyanate, diphénylène-diisocyanate, butène-diisocyanate, buta-1,3-diène-1,4-diisocyanate, cyclohexane-diisocyanate, méthyl-cyclohexane-diisocyanate, bis(isocyanato-méthyl)-cyclohexane, bis(isocyanato-cyclohexyl)-méthane, bis(isocyanato-cyclohexyl)-2,2-propane, bis(isocyanato-cyclohexyl)-1,2-éthane, 2-(isocyanato-méthyl)-3-(3-isocyanato-propyl)-5-(isocyanato-méthyl)-bicyclo[2.2.1]heptane, 2-(isocyanato-méthyl)-3-(3-isocyanato-propyl)-6-(isocyanato-méthyl)-bicyclo[2.2.1]heptane, 2-(isocyanato-méthyl)-2-(3-isocyanato-propyl)-5-(isocyanato-méthyl)-bicyclo[2.2.1]heptane, 2-(isocyanato-méthyl)-2-(3-isocyanato-propyl)-6-(isocyanato-méthyl)-bicyclo[2.2.1]heptane, 2-(isocyanato-méthyl)-3-(3-isocyanato-propyl)-6-(2-isocyanato-éthyl)-bicyclo[2.2.1]heptane, 2-(isocyanato-méthyl)-2-(3-isocyanato-propyl)-5-(2-isocyanato-éthyl)-bicyclo[2.2.1]heptane, 2-(isocyanato-méthyl)-2-(3-isocyanato-propyl)-6-(2-isocyanato-éthyl)-bicyclo[2.2.1]heptane, α,α'-xylène-diisocyanate, bis(isocyanato-éthyl)-benzène, α,α,α',α'-tétraméthyl-xylène-diisocyanate, 1,3-bis(1-isocyanato-1-méthyl-éthyl)-benzène, bis(isocyanato-butyl)-benzène, bis(isocyanato-méthyl)-naphtalène, bis(isocyanato-méthyl)-diphényl-éther, phtalate de bis(isocyanato-éthyle), mésitylène-triisocyanate, 2,5-di-(isocyanato-méthyl)-furane, α,α'-xylène-diisocyanate, bis(isocyanato-éthyl)-benzène, α,α,α',α'-tétraméthyl-xylène-diisocyanate, 1,3-bis(1-isocyanato-1-méthyl-éthyl)-benzène, bis(isocyanato-butyl)-benzène, bis(isocyanato-méthyl)-naphtalène, bis(isocyanato-méthyl)-diphényl-éther, phtalate de bis(isocyanato-éthyle), 2,5-di(isocyanato-méthyl)-furane, diphényl-éther-diisocyanate, bis(isocyanato-phényl-éther)-éthylèneglycol, bis(isocyanato-phényl-éther)-1,3-propylèneglycol, benzophénone-diisocyanate, carbazole-diisocyanate, éthyl-carbazole-diisocyanate, dichloro-carbazole-diisocyanate, et leurs dimères et trimères, ainsi que leurs mélanges, ou le polyisocyanate est un trimère d'un diisocyanate choisi dans l'ensemble formé par les hexaméthylène-diisocyanate, isophorone-diisocyanate et tétraméthyl-xylylène-diisocyanate et leurs mélanges.

4. Polyuréthane conforme à la revendication 1 ou 2, pour lequel le polycarbonate-polyol est préparé à partir d'hexane-diol et de carbonate de dialkyle.

5. Polyuréthane conforme à la revendication 1, pour lequel les composants comprennent en outre un ou plusieurs polyuréthane-polyol(s), acrylamide(s), poly(alcool vinylique), acrylate(s) à groupe fonctionnel hydroxyle, méthacrylate(s) à groupe fonctionnel hydroxyle, alcool(s) allylique(s), dihydroxy-oxamide(s), dihydroxy-amide(s), dihydroxy-pipéridine(s), dihydroxy-phtalate(s) ou di(hydroxy-éthyl)-hydroquinone(s) ou des mélanges de tels composés.

6. Polyuréthane conforme à la revendication 1 ou 2, pour lequel les composants comprennent en outre 0,01 à 0,5 équivalent d'eau, par rapport au 1 équivalent dudit polyisocyanate au nombre d'au moins un, et de préférence, on laisse cette eau réagir avec le polyisocyanate et le polycarbonate-polyol pour former un prépolymère urée-uréthane à groupe fonctionnel isocyanate.

7. Polyuréthane conforme à la revendication 1, pour lequel les composants ne contiennent pas de polyéther-polyol ou comprennent moins de 10 % en poids de polyéther-polyol, ou pour lequel les composants ne contiennent pas de polyester-polyol autre que le polycarbonate-polyol ou comprennent moins de 10 % en poids de polyester-polyol autre que le polycarbonate-polyol.

8. Polyuréthane conforme à la revendication 1, pour lequel les composants ne contiennent pas d'agent durcisseur de type amine ou comprennent moins de 10 % en poids d'agent durcisseur de type amine.

9. Polyuréthane conforme à la revendication 1 ou 2, pour lequel, après les avoir mélangés, on maintient les composants à une température d'au moins 100 °C pendant au moins 10 minutes avant un dégazage, et on les laisse réagir à une température d'au moins 110 °C pendant au moins 6 heures, et de préférence, on maintient les composants à une température d'au moins 110 °C pendant au moins 10 minutes avant un dégazage, et on les laisse réagir à une température d'au moins 120 °C pendant au moins 6 heures.

10. Polyuréthane conforme à la revendication 1, comprenant un produit de réaction de composants comprenant :
a) un prépolymère uréthane à fonction isocyanate, comprenant un produit de réaction de composants comprenant :
i) 1 équivalent d'au moins un polyisocyanate,
ii) et 0,2 équivalent d'un polycarbonate-diol, par rapport au 1 équivalent du polyisocyanate au nombre d'au moins un,
b) 0,7 équivalent de triméthylolpropane, par rapport au 1 équivalent du polyisocyanate au nombre d'au moins un,
c) et 0,1 équivalent de pentanediol ou de cyclohexanediméthanol, par rapport au 1 équivalent du polyisocyanate au nombre d'au moins un.

11. Article comprenant un polyuréthane conforme à la revendication 1 ou 2, lequel article est de préférence un article moulé, lequel article, mieux encore, est choisi dans l'ensemble constitué par les suivants : articles optiques, lentilles optiques, articles photochromes, lentilles photochromes, fenêtres, vitrages, pare-brise, feux de côté, feux arrière, vitrages d'aéronef, articles résistants balistiques, composants pour éolienne, verrières, surfaces d'afficheurs à cristaux liquides pour vision de l'extérieur, tubes à rayons cathodiques, films, feuilles, films conducteurs, films absorbeurs de micro-ondes, films à basse résistance, panneaux à l'épreuve d'une explosion, panneaux à l'épreuve des balles et radômes, et lequel article, au mieux, est un vitrage d'aéronef.

12. Article conforme à la revendication 11, lequel article est un article incurvé ou un article plat.

13. Article comportant au moins une couche d'un polyuréthane conforme à la revendication 1 ou 2 et au moins une couche d'un polycarbonate.

14. Stratifié comportant :
a) au moins une couche d'un polyuréthane conforme à la revendication 1 ou 2,
b) et au moins une couche d'un substrat choisi dans l'ensemble constitué par les suivants : papier, verre, céramique, bois, maçonnerie, textile, métal, et matériau polymère organique, et les combinaisons de tels matériaux.

15. Composition de revêtement comprenant un polyuréthane conforme à la revendication 1 ou 2.

16. Procédé de fabrication d'un article en polyuréthane, comportant :
a) le fait de chauffer un mélange de 1 équivalent d'au moins un polyisocyanate et de 0,1 à 0,4 équivalent d'au moins un polycarbonate-polyol, par rapport au 1 équivalent du polyisocyanate au nombre d'au moins un, jusqu'à une température de 110 à 130 °C pendant au moins une heure, pour obtenir un produit de réaction,
b) le fait de mélanger ce produit de réaction de (a) avec 0,5 à 0,8 équivalent de triméthylolpropane, par rapport au 1 équivalent du polyisocyanate au nombre d'au moins un, et 0,1 à 0,5 équivalent de butanediol, de pentanediol ou de cyclohexanediméthanol, par rapport au 1 équivalent du polyisocyanate au nombre d'au moins un, jusqu'à ce que le mélange atteigne une température d'au moins 110 à 130 °C, grâce à un chauffage optionnel, si nécessaire,
c) le fait de couler le produit de réaction dans un moule préchauffé à une température d'au moins 110 à 130 °C,
d) et le fait de faire durcir le produit de réaction, à une première température prédéfinie, de 100 à 120 °C, durant au moins 0,5 heure, puis à une deuxième température prédéfinie, de 140 à 180 °C, durant 15 à 30 heures.
